# EUROPEAN PATENT APPLICATION

(11) **EP 4 301 045 A1**
(43) Date of publication of application: **03.01.2024**
(21) Application number: 22759562.6
(22) Date of filing: 21.02.2022
(51) Int. Cl.: H04W 36/08, H04W 76/14, H04W 48/08, H04W 88/04

(54) **COMMUNICATION SYSTEM AND BASE STATION**

(30) Priority: 25.02.2021 JP 2021028744
(71) Applicant: MITSUBISHI ELECTRIC CORPORATION, Chiyoda-ku Tokyo 100-8310 (JP)
(72) Inventor: MOCHIZUKI, Mitsuru, Tokyo 100-8310 (JP); SHIMODA, Tadahiro, Tokyo 100-8310 (JP)
(74) Representative: Meissner Bolte Partnerschaft mbB
(86) International application number: PCT/JP2022/006884
(87) International publication number: WO 2022/181526

(57) **Abstract**

In order to improve communication quality in a communication system using terminal-to-terminal communication, the communication system includes: a first base station (S-gNB) to which a first communication terminal (remote UE) is connected, the first communication terminal supporting terminal-to-terminal communication in which communication terminals directly communicate with each other; and a second base station (T-gNB) to which a second communication terminal (relay UE) is connected, the second communication terminal supporting the terminal-to-terminal communication, and in a case where the second base station receives a handover request for the first communication terminal to connect to the second base station via the second communication terminal, the second base station transmits, to the first communication terminal and the second communication terminal, communication configuration information indicating the content of a configuration for the first communication terminal and the second communication terminal to perform terminal-to-terminal communication therebetween.

## Description

### Field

The present disclosure relates to a radio communication technology.

### Background

The 3rd Generation Partnership Project (3GPP), which is a standard organization of mobile communication systems, has been studying a communication system called long term evolution (LTE) for radio sections and called system architecture evolution (SAE) for an entire system configuration including a core network and a radio access network (hereinafter, also collectively referred to as a network) (for example, Non Patent Literatures 1 to 5). The communication system is also referred to as a 3.9 generation (3.9 G) system.

As an access scheme of LTE, orthogonal frequency division multiplexing (OFDM) is used in a downlink direction, and single carrier frequency division multiple access (SC-FDMA) is used in an uplink direction. In addition, unlike wideband code division multiple access (W-CDMA), LTE does not provide circuit switching and provides only a packet communication system.

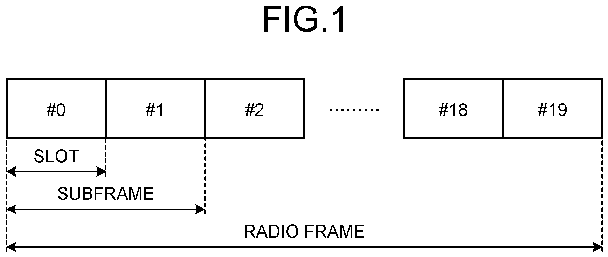

Decisions by 3GPP regarding a frame configuration in an LTE system described in Non Patent Literature 1 (Chapter 5) will be described with reference to FIG. 1. FIG. 1 is an explanatory diagram illustrating a configuration of a radio frame used in an LTE communication system. In FIG. 1, one radio frame is 10 ms. The radio frame is divided into 10 equally sized subframes. The subframe is divided into two equally sized slots. Downlink synchronization signals are included in first and sixth subframes in each radio frame. The synchronization signals are classified into a primary synchronization signal (P-SS) and a secondary synchronization signal (S-SS).

Decisions by 3GPP regarding a channel configuration in the LTE system are described in Non Patent Literature 1 (Chapter 5). It is assumed that also in a closed subscriber group (CSG) cell, the same channel configuration as that of a non-CSG cell is used.

A physical broadcast channel (PBCH) is a channel for downlink transmission from a base station device (hereinafter, sometimes simply referred to as a "base station") to a communication terminal device (hereinafter, sometimes simply referred to as a "communication terminal") such as a user equipment device (hereinafter, sometimes simply referred to as "user equipment"). A BCH transport block is mapped to four subframes in a 40-ms interval. There is no explicit signaling of 40-ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted on a per subframe basis.

A physical downlink control channel (PDCCH) is a channel for downlink transmission from a base station to a communication terminal. The PDCCH provides resource allocation information of a downlink shared channel (DL-SCH) which is one of transport channels to be described later, resource allocation information of a paging channel (PCH) which is one of the transport channels to be described later, and hybrid automatic repeat request (HARQ) information about the DL-SCH. The PDCCH carries an uplink scheduling grant. The PDCCH carries acknowledgement (Ack)/negative acknowledgement (Nack) which is a response signal to uplink transmission. The PDCCH is also referred to as an L1/L2 control signal.

A physical downlink shared channel (PDSCH) is a channel for downlink transmission from a base station to a communication terminal. The downlink shared channel (DL-SCH) which is a transport channel and the PCH which is a transport channel are mapped to the PDSCH.

A physical multicast channel (PMCH) is a channel for downlink transmission from a base station to a communication terminal. A multicast channel (MCH) which is a transport channel is mapped to the PMCH.

A physical uplink control channel (PUCCH) is a channel for uplink transmission from a communication terminal to a base station. The PUCCH carries Ack/Nack which is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in MIMO. The PMI is information on a precoding weight matrix used in MIMO. The CQI is quality information indicating quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) which is one of the transport channels is mapped to the PUSCH.

A physical hybrid ARQ (HARQ) indicator channel (PHICH) is a channel for downlink transmission from a base station to a communication terminal. The PHICH carries Ack/Nack which is a response signal to uplink transmission. A physical random access channel (PRACH) is a channel for uplink transmission from a communication terminal to a base station. The PRACH carries a random access preamble.

A downlink reference signal (RS) is a symbol known in the LTE communication system. The following five types of downlink reference signals are defined. The signals are cell-specific reference signal (CRS), an MBSFN reference signal, a data demodulation reference signal (DM-RS) which is a UE-specific reference signal, a positioning reference signal (PRS), and a channel state information reference signal (CSI-RS). As a measurement of a physical layer of a communication terminal, there is a measurement of reference signal received power (RSRP).

Similarly, an uplink reference signal is a symbol known in the LTE communication system. The following two types of uplink reference signals are defined. The signals are a data demodulation reference signal (DMRS) and a sounding reference signal (SRS).

Transport channels described in Non Patent Literature 1 (Chapter 5) will be described. Among downlink transport channels, a broadcast channel (BCH) is broadcast in the entire coverage area of the base station (cell). The BCH is mapped to the physical broadcast channel (PBCH).

Retransmission control by hybrid ARQ (HARQ) is applied to the downlink shared channel (DL-SCH). The DL-SCH can be broadcast in the entire coverage area of the base station (cell). The DL-SCH supports dynamic or semi-static resource allocation. The semi-static resource allocation is also referred to as persistent scheduling. The DL-SCH supports discontinuous reception (DRX) of a communication terminal in order to reduce power consumption of the communication terminal. The DL-SCH is mapped to the physical downlink shared channel (PDSCH).

The paging channel (PCH) supports DRX of a communication terminal in order to enable the communication terminal to reduce power consumption. The PCH is required to be broadcast in the entire coverage area of the base station (cell). The PCH is mapped to a physical resource such as the physical downlink shared channel (PDSCH) that can be dynamically used for traffic.

A multicast channel (MCH) is used for broadcast in the entire coverage area of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control by hybrid ARQ (HARQ) is applied to the uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH has a risk of collision. The RACH is mapped to the physical random access channel (PRACH).

The HARQ will be described. The HARQ is a technology for improving communication quality of a transmission path by a combination of automatic repeat request (ARQ) and error correction (forward error correction). The HARQ has an advantage that error correction effectively functions by retransmission even for a transmission path whose communication quality changes. In particular, it is also possible to further improve the quality in retransmission by combining a reception result of first transmission and a reception result of the retransmission.

An example of a retransmission method will be described. In a case where a receiver cannot correctly decode received data, in other words, in a case where a cyclic redundancy check (CRC) error occurs (CRC=NG), "Nack" is transmitted from the receiver to a transmitter. The transmitter that has received "Nack" retransmits the data. In a case where the receiver can correctly decode received data, in other words, in a case where a CRC error does not occur (CRC=OK), "Ack" is transmitted from the receiver to the transmitter. The transmitter that has received "Ack" transmits next data.

A logical channel described in Non Patent Literature 1 (Chapter 6) will be described. A broadcast control channel (BCCH) is a downlink channel for broadcast system control information. The BCCH which is a logical channel is mapped to the broadcast channel (BCH) or the downlink shared channel (DL-SCH) each of which is a transport channel.

A paging control channel (PCCH) is a downlink channel for transmitting changes in paging information and system information. The PCCH is used in a case when the network does not know the cell location of a communication terminal. The PCCH which is a logical channel is mapped to the paging channel (PCH) which is a transport channel.

A common control channel (CCCH) is a channel for transmission control information between a communication terminal and a base station. The CCCH is used in a case where the communication terminal has no RRC connection with the network. In the downlink direction, the CCCH is mapped to the downlink shared channel (DL-SCH) which is a transport channel. In the uplink direction, the CCCH is mapped to the uplink shared channel (UL-SCH) which is a transport channel.

A multicast control channel (MCCH) is a downlink channel for point-to-multipoint transmission. The MCCH is used for transmission of MBMS control information for one or several MTCHs from the network to a communication terminal. The MCCH is used only by a communication terminal that is receiving the MBMS. The MCCH is mapped to the multicast channel (MCH) which is a transport channel.

A dedicated control channel (DCCH) is a channel for transmitting dedicated control information between a communication terminal and the network on a point-to-point basis. The DCCH is used in a case where the communication terminal has an RRC connection. The DCCH is mapped to the uplink shared channel (UL-SCH) in uplink, and is mapped to the downlink shared channel (DL-SCH) in downlink.

A dedicated traffic channel (DTCH) is a point-to-point communication channel for transmitting user information to a dedicated communication terminal. The DTCH exists in both uplink and downlink. The DTCH is mapped to the uplink shared channel (UL-SCH) in uplink, and is mapped to the downlink shared channel (DL-SCH) in downlink.

A multicast traffic channel (MTCH) is a downlink channel for transmitting traffic data from the network to a communication terminal. The MTCH is a channel used only by a communication terminal that is receiving the MBMS. The MTCH is mapped to the multicast channel (MCH).

CGI represents a cell global identifier. ECGI represents an E-UTRAN cell global identifier. A closed subscriber group (CSG) cell is introduced into LTE, long term evolution advanced (LTE-A) described later, and universal mobile telecommunication system (UMTS).

Location tracking of communication terminals is performed in units of areas each including one or more cells. The location tracking is performed in order to track the location of a communication terminal to call the communication terminal, in other words, in order to enable the communication terminal to receive an incoming call, even in an idle state. An area for the location tracking of communication terminals is referred to as a tracking area.

Furthermore, in 3GPP, as Release 10, formulation of long term evolution advanced (LTE-A) standard is in progress (see Non Patent Literatures 3 and 4). LTE-A is based on an LTE radio section communication system, and is configured by adding some new technologies to the system.

Regarding the LTE-A system, in order to support wider transmission bandwidths up to 100 MHz, carrier aggregation (CA) for aggregating two or more component carriers (CCs) is under study. The CA is described in Non Patent Literature 1.

In a case where the CA is configured, a UE which is a communication terminal has only one RRC connection with a network (NW). In the RRC connection, one serving cell provides NAS mobility information and security input. This cell is referred to as a primary cell (PCell). In downlink, a carrier corresponding to the PCell is a downlink primary component carrier (DL PCC). In uplink, a carrier corresponding to the PCell is an uplink primary component carrier (UL PCC).

Depending on the capability of the UE, a secondary cell (SCell) is configured to form a set of serving cells with the PCell. In downlink, a carrier corresponding to the SCell is a downlink secondary component carrier (DL SCC). In uplink, a carrier corresponding to the SCell is an uplink secondary component carrier (UL SCC).

A set of serving cells including one PCell and one or more SCells is configured for one UE.

In addition, new technologies in LTE-A include a technology for supporting wider bands (wider bandwidth extension), a coordinated multiple point transmission and reception (CoMP) technology. The CoMP studied for LTE-A in 3GPP is described in Non Patent Literature 1.

In addition, use of a small eNB (hereinafter, sometimes referred to as a "small-scale base station device") configuring a small cell has been studied in 3GPP in order to cope with enormous traffic in the future. For example, a technology is under study with which a large number of small eNBs are installed to configure a large number of small cells, thereby improving spectral efficiency to increase communication capacity. Specifically, there is dual connectivity (abbreviated as DC) with which a UE is connected to two eNBs to perform communication. The DC is described in Non Patent Literature 1.

One of the eNBs that perform dual connectivity (DC) may be referred to as a "master eNB (abbreviated as MeNB)", and the other thereof may be referred to as a "secondary eNB (abbreviated as SeNB)".

The traffic volume of a mobile network is on the increase, and the communication speed is also increasing. When operations of LTE and LTE-A are fully started, the communication speed is expected to be further increased.

Furthermore, for increasingly advanced mobile communication, a fifth generation (hereinafter, sometimes referred to as "5G") radio access system has been studied whose service is aimed to be launched in or after 2020. For example, in Europe, 5G requirements are compiled by an organization called METIS (see Non Patent Literature 5).

For the 5G radio access system, the followings are exemplified as requirements: as compared with the LTE system, the system capacity is 1000 times, the data transmission speed is 100 times, the data processing latency is one-tenth (1/10), the number of simultaneously connected communication terminals is 100 times, and further reduction in power consumption and reduction in device cost are achieved.

In order to satisfy such requirements, 5G standards have been studied as Release 15 in 3GPP (see Non Patent Literatures 6 to 19). The technology of 5G radio sections is referred to as "new radio access technology" ("new radio" is abbreviated as "NR").

An NR system has been studied on the basis of the LTE system and the LTE-A system, but includes additions and changes from the LTE system and the LTE-A system in the following points.

As an access scheme of NR, OFDM is used in the downlink direction, and OFDM and DFT-spread-OFDM (DFT-s-OFDM) are used in the uplink direction.

In NR, frequencies higher than those in LTE can be used to improve the transmission speed and to reduce the processing latency.

In NR, cell coverage is ensured by forming a narrow beam-shaped transmission/reception range (beamforming) and changing a direction of the beam (beam sweeping).

In a frame configuration of NR, various subcarrier spacings, that is, various numerologies, are supported. Regardless of the numerologies, one subframe is 1 millisecond long, and one slot includes 14 symbols in NR. In addition, the number of slots included in one subframe is one in a numerology with a subcarrier spacing of 15 kHz, and increases in proportion to subcarrier spacings in other numerologies (see Non Patent Literature 13 (3GPP TS38.211)).

A downlink synchronization signal in NR is transmitted as a synchronization signal burst (hereinafter, sometimes referred to as an SS burst) from a base station at a predetermined period for a predetermined duration. The SS burst includes a synchronization signal block (hereinafter, sometimes referred to as an SS block) for each beam of the base station.

The base station transmits the SS blocks of respective beams within the duration of the SS burst while changing the beams. The SS block includes the P-SS, the S-SS, and the PBCH.

In NR, a phase tracking reference signal (PTRS) is added as a downlink reference signal of NR, and thereby an influence of phase noise is reduced. Regarding an uplink reference signal as well, the PTRS is added similarly to the downlink.

In NR, a slot format indication (SFI) has been added to information included in the PDCCH in order to perform flexible switching between the DL and the UL in a slot.

Furthermore, in NR, the base station sets a part of a carrier frequency band (hereinafter, sometimes referred to as bandwidth part (BWP)) in advance for a UE, and the UE performs transmission and reception with the base station in the BWP, thereby reducing power consumption in the UE.

In 3GPP, as a form of the DC, DC performed by an LTE base station and an NR base station connected to an EPC, DC performed by NR base stations connected to a 5G core system, and DC performed by an LTE base station and an NR base station connected to the 5G core system have been studied (see Non Patent Literatures 12, 16, and 19).

In addition, in 3GPP, support of a service (which may be an application) using sidelink (SL) communication (also referred to as PC5 communication) in both an evolved packet system (EPS) to be described later and a 5G core system has been studied (see Non Patent Literatures 1, 16, 20, 21, 22, and 23). Examples of the service using the SL communication include a vehicle-to-everything (V2X) service and a proximity service.

### Citation List

### Non Patent Literature

Non Patent Literature 1: 3GPP TS 36.300 V16.2.0
Non Patent Literature 2: 3GPP S1-083461
Non Patent Literature 3: 3GPP TR 36.814 V9.2.0
Non Patent Literature 4: 3GPP TR 36.912 V16.0.0
Non Patent Literature 5: "Scenarios, requirements and KPIs for 5G mobile and wireless system", ICT-317669-METIS/D1.1
Non Patent Literature 6: 3GPP TR 23.799 V14.0.0
Non Patent Literature 7: 3GPP TR 38.801 V14.0.0
Non Patent Literature 8: 3GPP TR 38.802 V14.2.0
Non Patent Literature 9: 3GPP TR 38.804 V14.0.0
Non Patent Literature 10: 3GPP TR 38.912 V16.0.0
Non Patent Literature 11: 3GPP RP-172115
Non Patent Literature 12: 3GPP TS 37.340 V16.4.0
Non Patent Literature 13: 3GPP TS 38.211 V16.4.0
Non Patent Literature 14: 3GPP TS 38.213 V16.4.0
Non Patent Literature 15: 3GPP TS 38.214 V16.4.0
Non Patent Literature 16: 3GPP TS 38.300 V16.4.0
Non Patent Literature 17: 3GPP TS 38.321 V16.3.0
Non Patent Literature 18: 3GPP TS 38.212 V16.4.0
Non Patent Literature 19: 3GPP TS 38.331 V16.3.1
Non Patent Literature 20: 3GPP TR 23.703 V12.0.0
Non Patent Literature 21: 3GPP TS 23.501 V16.7.0
Non Patent Literature 22: 3GPP T S23.287 V16.5.0
Non Patent Literature 23: 3GPP TS 23.303 V16.0.0
Non Patent Literature 24: 3GPP TS 38.305 V16.3.0
Non Patent Literature 25: 3GPP TS 23.273 V16.5.0
Non Patent Literature 26: 3GPP R2-2009145
Non Patent Literature 27: 3GPP TR 38.836 V1.0.1

### Summary of Invention

### Problem to be solved by the Invention

It has been studied to support various services using SL communication (also referred to as PC5 communication) in both an EPS and a 5G core system (See Non Patent Literatures 1, 16, 20, 21, 22, and 23). In the SL communication, communication is performed between terminals. In the SL communication, not only direct communication between terminals but also communication between a UE and an NW via a relay has been proposed (see Non Patent Literatures 20, 23, and 27). In a system that supports such communication via a relay, the question is how to improve quality of communication between the terminal and the NW. Examples of the question include, in HO of a remote UE via a relay UE, how to reduce data communication latency at the time of the HO, and how to improve robustness at the time of the HO.

In view of the above problem, one of objects of the present disclosure is to improve communication quality in a communication system using terminal-to-terminal communication.

### Means to Solve the Problem

A communication system according to the present disclosure includes: a first base station to which a first communication terminal is connected, the first communication terminal supporting terminal-to-terminal communication in which communication terminals directly communicate with each other; and a second base station to which a second communication terminal is connected, the second communication terminal supporting the terminal-to-terminal communication. In a case where the second base station receives a handover request for the first communication terminal to connect to the second base station via the second communication terminal, the second base station transmits, to the first communication terminal and the second communication terminal, communication configuration information indicating a content of a configuration for the first communication terminal and the second communication terminal to perform terminal-to-terminal communication therebetween.

### Effects of the Invention

According to the present disclosure, communication quality can be improved in a communication system using terminal-to-terminal communication.

Objects, features, aspects, and advantages of the present disclosure will become more apparent from the following detailed description and the accompanying drawings.

### Brief Description of Drawings

FIG. 1 is an explanatory diagram illustrating a configuration of a radio frame used in an LTE communication system.
FIG. 2 is a block diagram illustrating an overall configuration of an LTE communication system 200 that has been discussed in 3GPP.
FIG. 3 is a block diagram illustrating an overall configuration of an NR communication system 210 that has been discussed in 3GPP.
FIG. 4 is a configuration diagram of DC performed by an eNB and a gNB connected to an EPC.
FIG. 5 is a configuration diagram of DC performed by gNBs connected to an NG core.
FIG. 6 is a configuration diagram of DC performed by an eNB and the gNB connected to the NG core.
FIG. 7 is a configuration diagram of DC performed by an eNB and the gNB connected to the NG core.
FIG. 8 is a block diagram illustrating a configuration of user equipment 202 illustrated in FIG. 2.
FIG. 9 is a block diagram illustrating a configuration of a base station 203 illustrated in FIG. 2.
FIG. 10 is a block diagram illustrating a configuration of an MME.
FIG. 11 is a block diagram illustrating a configuration of a 5GC unit.
FIG. 12 is a flowchart schematically illustrating a cell search to an idle state operation performed by a communication terminal (UE) in the LTE communication system.
FIG. 13 is a diagram illustrating an example of a configuration of a cell in an NR system.
FIG. 14 is a sequence diagram illustrating an example of a method of HO of a remote UE via a relay UE in a first embodiment.
FIG. 15 is a sequence diagram illustrating another example of the method of the HO of the remote UE via the relay UE in the first embodiment.
FIG. 16 is a sequence diagram illustrating an example of a method of HO of the remote UE via the relay UE in a first modification of the first embodiment.
FIG. 17 is a sequence diagram illustrating an example of a method of I-DAPS HO in a second modification of the first embodiment.
FIG. 18 is a sequence diagram illustrating another example of the method of the I-DAPS HO in the second modification of the first embodiment.
FIG. 19 is a sequence diagram illustrating an example of a method of I-CHO in a second embodiment.
FIG. 20 is a sequence diagram illustrating an example of a method in which a remote UE performs HO to a gNB as an HO destination of a relay UE in a third embodiment.
FIG. 21 is a sequence diagram illustrating another example of the method in which the remote UE performs the HO to the gNB as the HO destination of the relay UE in the third embodiment.
FIG. 22 is a sequence diagram illustrating another example of the method in which the remote UE performs the HO to the gNB as the HO destination of the relay UE in the third embodiment.

### Description of Embodiments

Hereinafter, a communication system and a base station according to each embodiment of the present disclosure will be described in detail with reference to the drawings.

### First Embodiment.

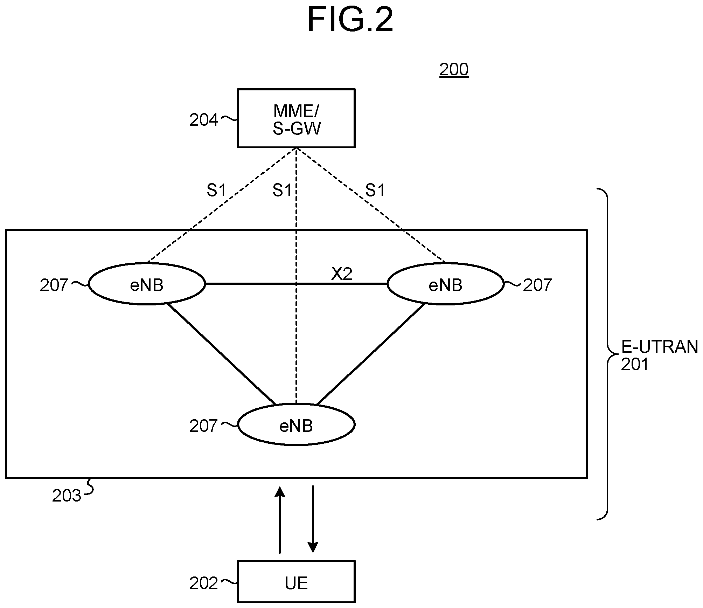

FIG. 2 is a block diagram illustrating an overall configuration of an LTE communication system 200 that has been discussed in 3GPP. FIG. 2 will be described. A radio access network is referred to as an evolved universal terrestrial radio access network (E-UTRAN) 201. A user equipment device (hereinafter referred to as "user equipment (UE)") 202 which is a communication terminal device can perform radio communication with a base station device (hereinafter referred to as "base station (E-UTRAN NodeB (eNB))") 203, and transmits and receives signals by radio communication.

Here, the "communication terminal device" includes not only a user equipment device such as a mobile phone terminal device that is movable, but also a non-moving device such as a sensor. In the following description, the "communication terminal device" may be simply referred to as a "communication terminal".

If a control protocol for the user equipment 202, for example, radio resource control (RRC), and a user plane (hereinafter, sometimes referred to as a U-plane), for example, a packet data convergence protocol (PDCP), radio link control (RLC), medium access control (MAC), or a physical layer (PHY), are terminated in the base station 203, the E-UTRAN includes one or a plurality of base stations 203.

Radio resource control (RRC) as a control protocol between the user equipment 202 and the base station 203 performs broadcast, paging, RRC connection management, and the like. As states of the base station 203 and the user equipment 202 in RRC, there are RRC_IDLE and RRC_CONNECTED.

In RRC_IDLE, public land mobile network (PLMN) selection, broadcast of system information (SI), paging, cell re-selection, mobility, and the like are performed. In RRC_CONNECTED, the user equipment has RRC connection and can transmit and receive data to and from a network. In addition, in RRC_CONNECTED, handover (HO), measurement of a neighbor cell, and the like are performed.

The base station 203 includes one or a plurality of eNBs 207. A system including an evolved packet core (EPC) which is a core network and the E-UTRAN 201 which is a radio access network is referred to as an evolved packet system (EPS). The EPC which is a core network and the E-UTR_AN 201 which is a radio access network may be collectively referred to as a "network".

Each eNB 207 is connected via an S1 interface to an MME/S-GW unit (hereinafter, sometimes referred to as an "MME unit") 204 including a mobility management entity (MME) or a serving gateway (S-GW), or the MME and the S-GW, and control information is communicated between the eNB 207 and the MME unit 204. A plurality of MME units 204 may be connected to one eNB 207. The eNBs 207 are connected to each other via an X2 interface, and the control information is communicated between the eNBs 207.

The MME unit 204 is a higher-level device, specifically, a higher-level node, and controls connection between the eNB 207 which is a base station and the user equipment (UE) 202. The MME unit 204 configures the EPC which is a core network. The base station 203 configures the E-UTRAN 201.

The base station 203 may configure one cell or a plurality of cells. Each cell has a predetermined range as a coverage which is a range in which communication with the user equipment 202 is possible, and performs radio communication with the user equipment 202 within the coverage. In a case where one base station 203 configures a plurality of cells, each cell is configured to be able to communicate with the user equipment 202.

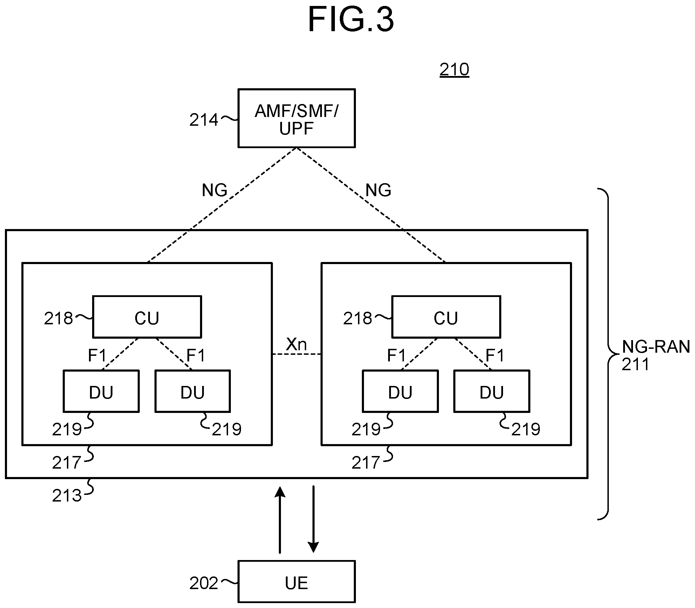

FIG. 3 is a block diagram illustrating an overall configuration of a 5G communication system 210 that has been discussed in 3GPP. FIG. 3 will be described. The radio access network is referred to as a next generation radio access network (NG-RAN) 211. The UE 202 can perform radio communication with an NR base station device (hereinafter referred to as an "NR base station (NG-RAN NodeB (gNB))") 213, and transmits and receives signals by radio communication. The core network is referred to as a 5G core (5GC).

If a control protocol for the UE 202, for example, radio resource control (RRC), and a user plane (hereinafter, sometimes referred to as a U-plane), for example, service data adaptation protocol (SDAP), packet data convergence protocol (PDCP), radio link control (RLC), medium access control (MAC), or physical layer (PHY), are terminated in the NR base station 213, the NG-RAN includes one or a plurality of NR base stations 213.

A function of radio resource control (RRC) as a control protocol between the UE 202 and the NR base station 213 is similar to that of LTE. As states of the NR base station 213 and the UE 202 in RRC, there are RRC_IDLE, RRC_CONNECTED, and RRC_INACTIVE.

RRC_IDLE and RRC_CONNECTED are similar to those in the LTE system. In RRC_INACTIVE, broadcast of system information (SI), paging, cell re-selection, mobility, and the like are performed while connection between the 5G core and the NR base station 213 is maintained.

Each gNB 217 is connected via an NG interface to an AMF/SMF/UPF unit (hereinafter, sometimes referred to as a "5GC unit") 214 including an access and mobility management function (AMF), a session management function (SMF), or a user plane function (UPF), or the AMF, the SMF, and the UPF. Control information and/or user data is communicated between each gNB 217 and the 5GC unit 214. The NG interface is a generic term for an N2 interface between each gNB 217 and the AMF, an N3 interface between each gNB 217 and the UPF, an N11 interface between the AMF and the SMF, and an N4 interface between the UPF and the SMF. A plurality of 5GC units 214 may be connected to one gNB 217. The gNBs 217 are connected to each other via an Xn interface, and control information and/or user data is communicated between the gNBs 217.

The 5GC unit 214 is a higher-level device, specifically, a higher-level node, and distributes paging signals to one or a plurality of base stations 203 and/or base stations 213. In addition, the 5GC unit 214 performs mobility control in an idle state. The 5GC unit 214 manages a tracking area list when the user equipment 202 is in the idle state, an inactive state, and an active state. The 5GC unit 214 starts a paging protocol by transmitting a paging message to a cell belonging to a tracking area in which the user equipment 202 is registered.

The NR base station 213 may also configure one or a plurality of cells similarly to the base station 203. In a case where one NR base station 213 configures a plurality of cells, each cell is configured to be able to communicate with the UE 202.

The gNB 217 may be divided into a central unit (hereinafter, sometimes referred to as a CU) 218 and a distributed unit (hereinafter, sometimes referred to as a DU) 219. One CU 218 is configured in the gNB 217. One or a plurality of DUs 219 are configured in the gNB 217. The CU 218 is connected to the DU 219 via the F1 interface, and control information and/or user data is communicated between the CU 218 and the DU 219.

A unified data management (UDM) function and a policy control function (PCF) described in Non Patent Literature 21 (3GPP TS23.501) may be included in the 5G communication system. The UDM and/or the PCF may be included in the 5GC unit 214 in FIG. 3.

A location management function (LMF) described in Non Patent Literature 24 (3GPP TS 38.305) may be provided in the 5G communication system. The LMF may be connected to a base station via the AMF as disclosed in Non Patent Literature 25 (3GPP TS 23.273).

A non-3GPP interworking function (N3IWF) described in Non Patent Literature 21 (3GPP TS23.501) may be included in the 5G communication system. The N3IWF may terminate an access network (AN) with the UE in non-3GPP access with the UE.

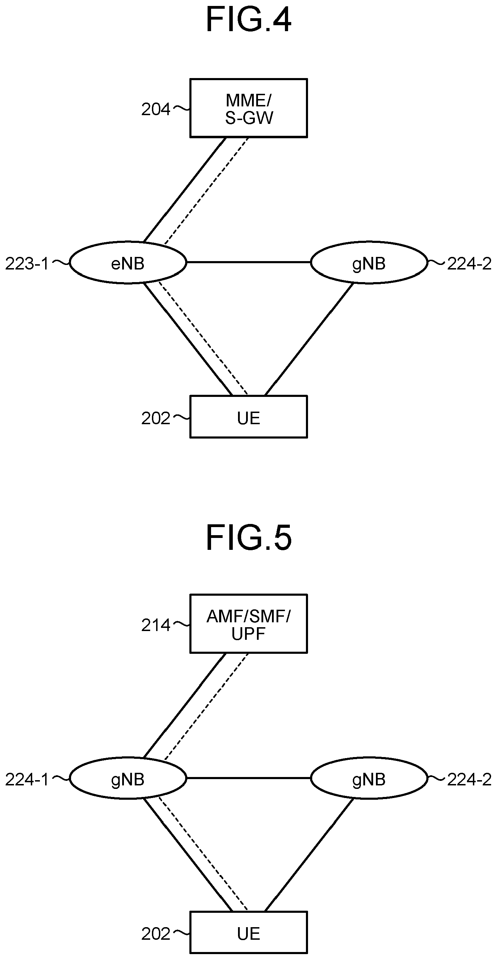

FIG. 4 is a diagram illustrating a configuration of DC performed by an eNB and a gNB connected to the EPC. In FIG. 4, solid lines each indicate U-plane connection, and broken lines each indicate C-plane connection. In FIG. 4, an eNB 223-1 serves as a master base station, and a gNB 224-2 serves as a secondary base station (this DC configuration is sometimes referred to as EN-DC). Although FIG. 4 illustrates an example in which the U-plane connection between the MME unit 204 and the gNB 224-2 is established via the eNB 223-1, the U-plane connection may be directly established between the MME unit 204 and the gNB 224-2.

FIG. 5 is a diagram illustrating a configuration of DC performed by gNBs connected to an NG core. In FIG. 5, solid lines each indicate U-plane connection, and broken lines each indicate C-plane connection. In FIG. 5, a gNB 224-1 serves as a master base station, and the gNB 224-2 serves as a secondary base station (this DC configuration is sometimes referred to as NR-DC). Although FIG. 5 illustrates an example in which the U-plane connection between the 5GC unit 214 and the gNB 224-2 is established via the gNB 224-1, the U-plane connection may be directly established between the 5GC unit 214 and the gNB 224-2.

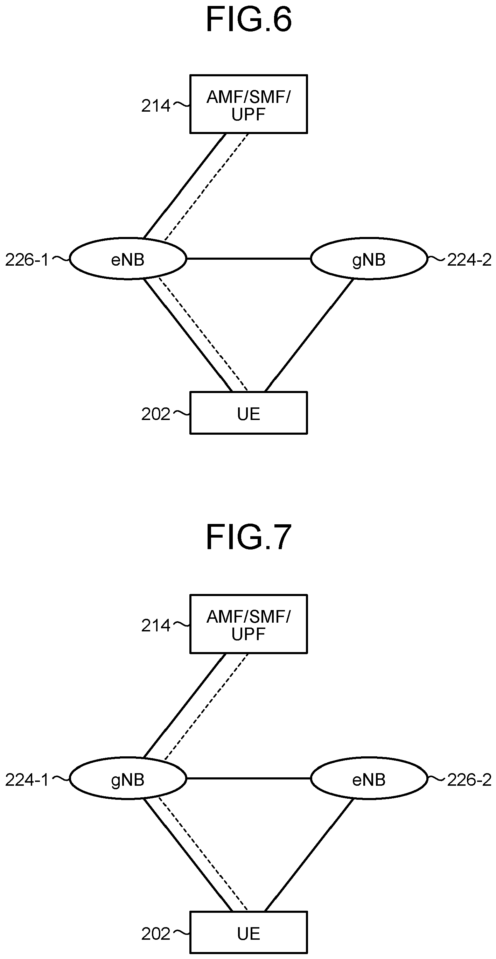

FIG. 6 is a diagram illustrating a configuration of DC performed by an eNB and the gNB connected to the NG core. In FIG. 6, solid lines each indicate U-plane connection, and broken lines each indicate C-plane connection. In FIG. 6, an eNB 226-1 serves as a master base station, and the gNB 224-2 serves as a secondary base station (this DC configuration is sometimes referred to as NG-EN-DC). Although FIG. 6 illustrates an example in which the U-plane connection between the 5GC unit 214 and the gNB 224-2 is established via the eNB 226-1, the U-plane connection may be directly established between the 5GC unit 214 and the gNB 224-2.

FIG. 7 is a diagram illustrating another configuration of DC performed by an eNB and the gNB connected to the NG core. In FIG. 7, solid lines each indicate U-plane connection, and broken lines each indicate C-plane connection. In FIG. 7, the gNB 224-1 serves as a master base station, and an eNB 226-2 serves as a secondary base station (this DC configuration is sometimes referred to as NE-DC). Although FIG. 7 illustrates an example in which the U-plane connection between the 5GC unit 214 and the eNB 226-2 is established via the gNB 224-1, the U-plane connection may be directly established between the 5GC unit 214 and the eNB 226-2.

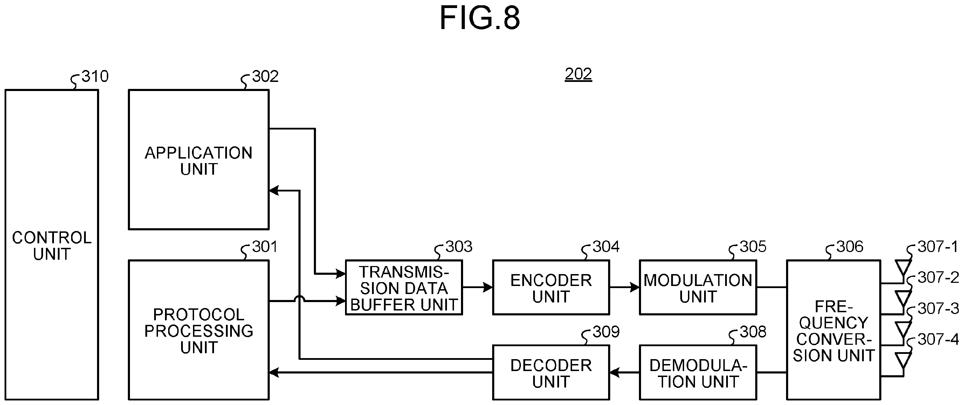

FIG. 8 is a block diagram illustrating a configuration of the user equipment 202 illustrated in FIG. 2. A transmission process performed by the user equipment 202 illustrated in FIG. 8 will be described. First, control data from a protocol processing unit 301 and user data from an application unit 302 are stored in a transmission data buffer unit 303. The data stored in the transmission data buffer unit 303 is passed to an encoder unit 304, and an encoding process such as error correction is performed thereon. There may be data output from the transmission data buffer unit 303 to a modulation unit 305 directly without being subjected to the encoding process. The data encoded by the encoder unit 304 is subjected to a modulation process by the modulation unit 305. The modulation unit 305 may perform precoding in MIMO. The modulated data is converted into a baseband signal, and then the baseband signal is output to a frequency conversion unit 306 to be converted into a radio transmission frequency. Thereafter, transmission signals are transmitted to the base station 203 from antennas 307-1 to 307-4. FIG. 8 exemplifies a case where the number of antennas is four, but the number of antennas is not limited to four.

The user equipment 202 executes a reception process as follows. A radio signal from the base station 203 is received by each of the antennas 307-1 to 307-4. The received signal is converted from a radio reception frequency into a baseband signal by the frequency conversion unit 306, and a demodulation process is performed thereon by a demodulation unit 308. The demodulation unit 308 may perform a weight calculation and a multiplication process. The demodulated data is passed to a decoder unit 309, and a decoding process such as error correction is performed thereon. Among pieces of the decoded data, the control data is passed to the protocol processing unit 301, and the user data is passed to the application unit 302. A series of processes of the user equipment 202 is controlled by a control unit 310. Therefore, although not illustrated in FIG. 8, the control unit 310 is connected to each of components 301 to 309. The control unit 310 is implemented by, for example, processing circuitry configured to include a processor and a memory. That is, the control unit 310 is implemented by the processor executing a program in which a series of processes of the user equipment 202 is described. The program in which a series of processes of the user equipment 202 is described is stored in the memory. Examples of the memory include a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used by the user equipment 202 for transmission and the number of antennas used thereby for reception may be the same as or different from each other.

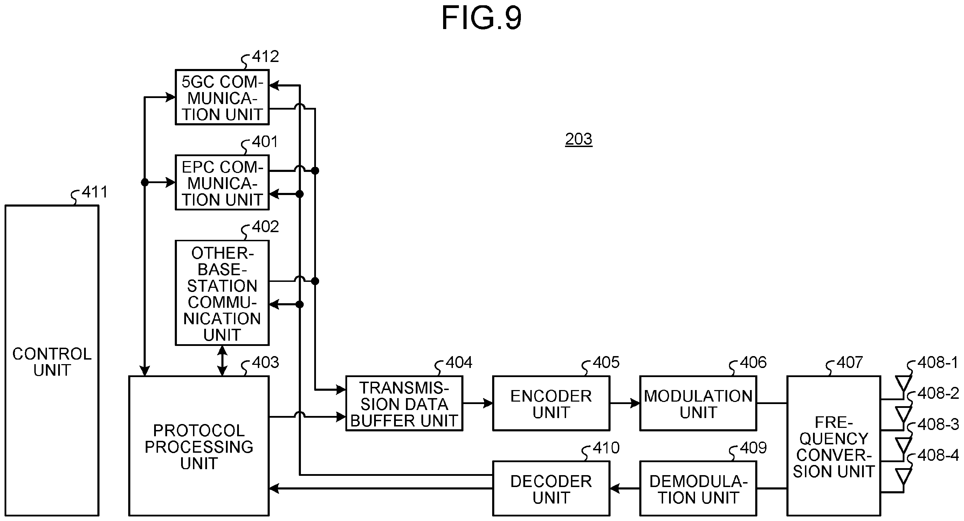

FIG. 9 is a block diagram illustrating a configuration of the base station 203 illustrated in FIG. 2. A transmission process performed by the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). An other-base-station communication unit 402 transmits and receives data to and from other base stations. The EPC communication unit 401, the 5GC communication unit 412, and the other-base-station communication unit 402 each exchange information with a protocol processing unit 403. Control data from the protocol processing unit 403 and user data and control data from the EPC communication unit 401, the 5GC communication unit 412, and the other-base-station communication unit 402 are stored in a transmission data buffer unit 404.

The data stored in the transmission data buffer unit 404 is passed to an encoder unit 405, and an encoding process such as error correction is performed thereon. There may be data output from the transmission data buffer unit 404 to a modulation unit 406 directly without being subjected to the encoding process. The encoded data is subjected to a modulation process by the modulation unit 406. The modulation unit 406 may perform precoding in MIMO. The modulated data is converted into a baseband signal, and then the baseband signal is output to a frequency conversion unit 407 to be converted into a radio transmission frequency. Thereafter, transmission signals are transmitted from antennas 408-1 to 408-4 to one or a plurality of UEs 202. FIG. 9 exemplifies a case where the number of antennas is four, but the number of antennas is not limited to four.

The base station 203 executes a reception process as follows. Radio signals from one or a plurality of UEs 202 are received by the antennas 408. The received signals are each converted from a radio reception frequency into a baseband signal by the frequency conversion unit 407, and a demodulation process is performed thereon by a demodulation unit 409. The demodulated data is passed to a decoder unit 410, and a decoding process such as error correction is performed thereon. Among pieces of the decoded data, the control data is passed to the protocol processing unit 403, the 5GC communication unit 412, the EPC communication unit 401, or the other-base-station communication unit 402, and the user data is passed to the 5GC communication unit 412, the EPC communication unit 401, or the other-base-station communication unit 402. A series of processes of the base station 203 is controlled by a control unit 411. Therefore, although not illustrated in FIG. 9, the control unit 411 is connected to each of components 401 to 410, and 412. Similarly to the control unit 310 of the user equipment 202 described above, the control unit 411 is implemented by processing circuitry configured to include a processor and a memory, or dedicated processing circuitry such as an FPGA, an ASIC, or a DSP. In FIG. 9, the number of antennas used by the base station 203 for transmission and the number of antennas used thereby for reception may be the same as or different from each other.

FIG. 9 is a block diagram illustrating the configuration of the base station 203, but the base station 213 may have a configuration similar thereto. In addition, in FIGS. 8 and 9, the number of antennas of the user equipment 202 and the number of antennas of the base station 203 may be the same as or different from each other.

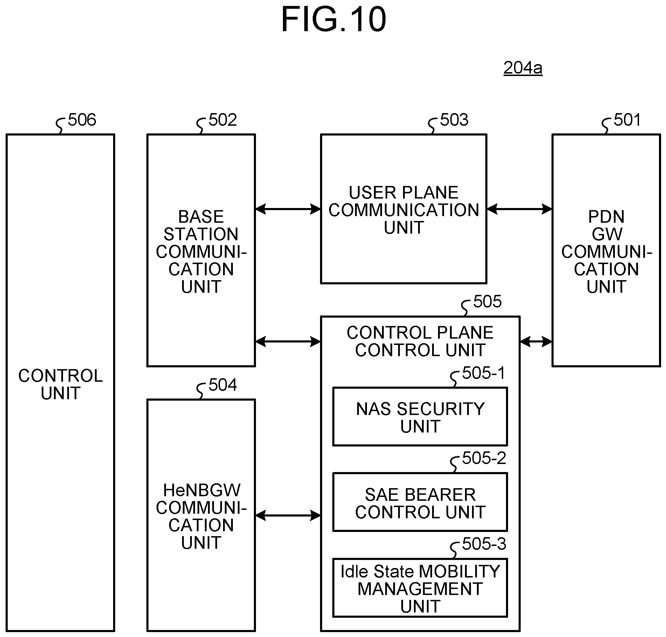

FIG. 10 is a block diagram illustrating a configuration of an MME. FIG. 10 illustrates a configuration of an MME 204a included in the MME unit 204 illustrated in FIG. 2 described above. A PDN GW communication unit 501 transmits and receives data between the MME 204a and a packet data network gate way (PDN GW). A base station communication unit 502 transmits and receives data between the MME 204a and the base station 203 via the S1 interface. In a case where data received from the PDN GW is user data, the user data is passed from the PDN GW communication unit 501 to the base station communication unit 502 via a user plane communication unit 503, and transmitted to one or a plurality of base stations 203. In a case where data received from the base station 203 is user data, the user data is passed from the base station communication unit 502 to the PDN GW communication unit 501 via the user plane communication unit 503, and transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

A HeNBGW communication unit 504 transmits and receives data between the MME 204a and a home-eNB gate way (HeNB GW). Control data received by the HeNBGW communication unit 504 from the HeNB GW is passed to the control plane control unit 505. The HeNBGW communication unit 504 transmits control data input from the control plane control unit 505 to the HeNB GW.

The control plane control unit 505 includes a NAS security unit 505-1, an SAE bearer control unit 505-2, an idle state mobility management unit 505-3, and the like, and performs overall processes on a control plane (hereinafter, sometimes referred to as a C-plane). The NAS security unit 505-1 provides security of a non-access stratum (NAS) message and the like. The SAE bearer control unit 505-2 performs management of system architecture evolution (SAE) bearers, and the like. The idle state mobility management unit 505-3 performs mobility management of an idle state (LTE-IDLE state or also simply referred to as idle), generation and control of a paging signal in the idle state, addition, deletion, update, and search of a tracking area of one or a plurality of UEs 202 under the management thereof, tracking area list management, and the like.

The MME 204a distributes paging signals to one or a plurality of base stations 203. In addition, the MME 204a performs mobility control in the idle state. The MME 204a manages a tracking area list when the user equipment 202 is in the idle state and an active state. The MME 204a starts a paging protocol by transmitting a paging message to a cell belonging to a tracking area in which the user equipment 202 is registered. The idle state mobility management unit 505-3 may manage CSG of the eNB 207 connected to the MME 204a, CSG IDs, and a whitelist.

A series of processes of the MME 204a is controlled by a control unit 506. Therefore, although not illustrated in FIG. 10, the control unit 506 is connected to each of components 501 to 505. Similarly to the control unit 310 of the user equipment 202 described above, the control unit 506 is implemented by processing circuitry configured to include a processor and a memory, or dedicated processing circuitry such as an FPGA, an ASIC, or a DSP.

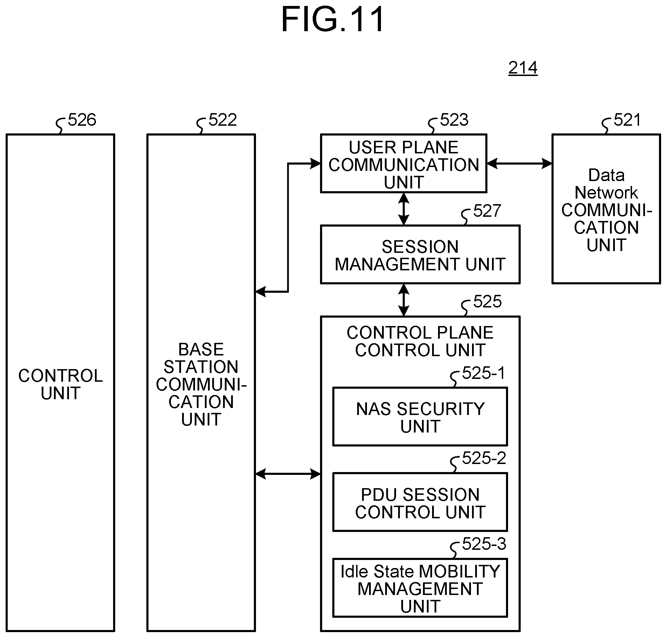

FIG. 11 is a block diagram illustrating a configuration of the 5GC unit. FIG. 11 illustrates a configuration of the 5GC unit 214 illustrated in FIG. 3 described above. FIG. 11 illustrates a case where a configuration of the AMF, a configuration of the SMF, and a configuration of the UPF are included in the 5GC unit 214 illustrated in FIG. 5. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. In a case where data received from the data network is user data, the user data is passed from the data network communication unit 521 to the base station communication unit 522 via a user plane communication unit 523, and transmitted to one or a plurality of base stations 203 and/or base stations 213. In a case where data received from the base station 203 and/or the base station 213 is user data, the user data is passed from the base station communication unit 522 to the data network communication unit 521 via the user plane communication unit 523, and transmitted to the data network.

In a case where data received from the data network is control data, the control data is passed from the data network communication unit 521 to a session management unit 527 via the user plane communication unit 523. The session management unit 527 passes the control data to a control plane control unit 525. In a case where data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an idle state mobility management unit 525-3, and the like, and performs overall processes on a control plane (hereinafter, sometimes referred to as a C-plane). The NAS security unit 525-1 provides security of a non-access stratum (NAS) message, and the like. The PDU session control unit 525-2 performs management of a PDU session between the user equipment 202 and the 5GC unit 214, and the like. The idle state mobility management unit 525-3 performs mobility management of an idle state (RRC-IDLE state or also simply referred to as idle), generation and control of a paging signal in the idle state, addition, deletion, update, and search of a tracking area of one or a plurality of UEs 202 under the management thereof, tracking area list management, and the like.

A series of processes of the 5GC unit 214 is controlled by a control unit 526. Therefore, although not illustrated in FIG. 11, the control unit 526 is connected to each of components 521 to 523, 525, and 527. Similarly to the control unit 310 of the user equipment 202 described above, the control unit 526 is implemented by processing circuitry configured to include a processor and a memory, or dedicated processing circuitry such as an FPGA, an ASIC, or a DSP.

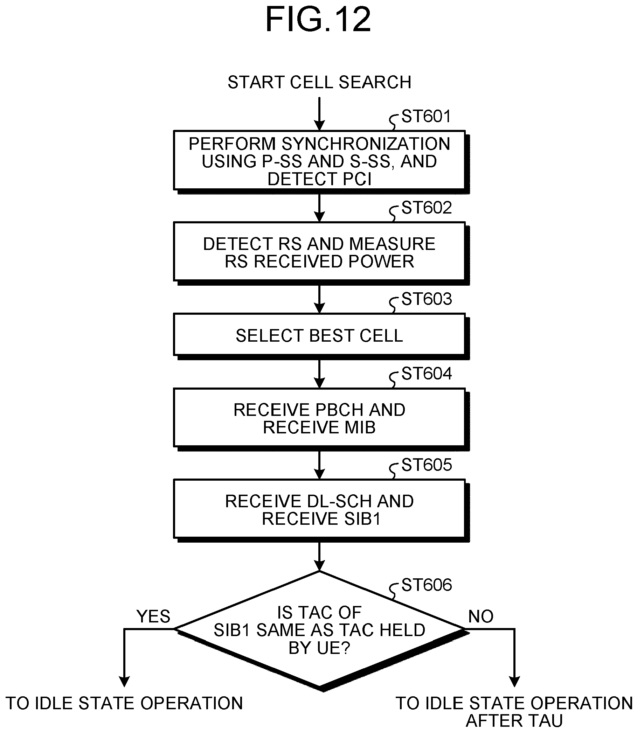

Next, an example of a cell search method in a communication system will be described. FIG. 12 is a flowchart schematically illustrating a cell search to an idle state operation performed by a communication terminal (UE) in the LTE communication system. When starting the cell search, in step ST601, the communication terminal synchronizes a slot timing and a frame timing using a primary synchronization signal (P-SS) and a secondary synchronization signal (S-SS) transmitted from a neighbor base station.

The P-SS and the S-SS are collectively referred to as a synchronization signal (SS). Synchronization codes that correspond one-to-one to PCIs are allocated to the synchronization signals (SSs), the PCIs being allocated on a per cell basis. As the number of PCIs, 504 different numbers are studied. The communication terminal performs synchronization using the 504 different numbers of PCIs and detects (specifies) a PCI of a synchronized cell.

Next, in step ST602, the communication terminal detects, for the synchronized cell, a cell-specific reference signal (CRS) which is a reference signal (RS) transmitted from the base station for each cell, and measures reference signal received power (RSRP). Codes that correspond one-to-one to the PCIs are used for reference signals (RSs). Separation from other cells can be performed by obtaining correlation using the codes. By deriving the code for the RS of the cell from the PCI specified in step ST601, it is possible to detect the RS and to measure the RS received power.

Next, in step ST603, the communication terminal selects a cell having the best RS reception quality, for example, a cell having the highest RS received power, that is, the best cell, from among the one or more cells detected up to step ST602.

Next, in step ST604, the communication terminal receives the PBCH of the best cell and obtains the BCCH which is broadcast information. A master information block (MIB) including cell configuration information is mapped to the BCCH on the PBCH. Accordingly, the MIB is obtained by receiving the PBCH to obtain the BCCH. Examples of the information of the MIB include a downlink (DL) system bandwidth (also referred to as transmission bandwidth configuration (dl-bandwidth)), the number of transmission antennas, and a system frame number (SFN).

Next, in step ST605, the communication terminal receives the DL-SCH of the cell on the basis of the cell configuration information of the MIB to obtain a system information block (SIB) 1 in the broadcast information BCCH. The SIB 1 includes information about access to the cell, information about cell selection, and scheduling information of other SIBs (SIB k; k is an integer equal to or greater than 2). The SIB 1 further includes a tracking area code (TAC).

Next, in step ST606, the communication terminal compares the TAC of the SIB 1 received in step ST605 with a TAC portion of a tracking area identity (TAI) in the tracking area list already held by the communication terminal. The tracking area list is also referred to as a TAI list. The TAI is identification information for identifying a tracking area, and includes a mobile country code (MCC), a mobile network code (MNC), and a tracking area code (TAC). The MCC is a country code. The MNC is a network code. The TAC is a code number of the tracking area.

If the TAC received in step ST605 is the same as the TAC included in the tracking area list as a result of the comparison in step ST606, the communication terminal enters an idle state operation in the cell. If the TAC received in step ST605 is not included in the tracking area list as a result of the comparison, the communication terminal requests, through the cell, a core network (EPC) including the MME or the like to change the tracking area in order to perform a tracking area update (TAU).

In the example illustrated in FIG. 12, from the cell search to the idle state operation in the LTE system are exemplified, but in the NR system, the best beam may be selected in addition to the best cell in step ST603. In addition, in the NR system, information on a beam, for example, a beam identifier may be acquired in step ST604. Furthermore, in the NR system, scheduling information of remaining minimum SI (RMSI) may be acquired in step ST604. In the NR system, the RMSI may be received in step ST605.

A device configuring a core network (hereinafter, sometimes referred to as a "core-network-side device") updates the tracking area list on the basis of an identification number (such as a UE-ID) of a communication terminal transmitted from the communication terminal together with a TAU request signal. The core-network-side device transmits the updated tracking area list to the communication terminal. The communication terminal rewrites (updates) the TAC list held by the communication terminal on the basis of the received tracking area list. Thereafter, the communication terminal enters an idle state operation in the cell.

The spread of smartphones and tablet terminal devices results in explosively increasing traffic in cellular radio communication, and there is a worldwide concern about a shortage of radio resources. In order to deal with the above to improve the spectral efficiency, downsizing of cells to advance spatial separation is under study.

In a conventional cell configuration, a cell configured by an eNB has a relatively wide range of coverage. A cell is conventionally configured to cover a certain area by such a relatively wide range of coverage of a plurality of cells configured by a plurality of eNBs.

In a case where cells are downsized, a cell configured by the eNB has a range of coverage narrower than the coverage of a cell configured by a conventional eNB. Accordingly, in order to cover a certain area similarly to conventional cases, a large number of eNBs configuring downsized cells as compared with the conventional eNBs are required.

In the following description, a cell having relatively large coverage such as the cell configured by a conventional eNB is referred to as a "macro cell", and an eNB configuring the macro cell is referred to as a "macro eNB". In addition, a cell having a relatively small coverage such as a downsized cell is referred to as a "small cell", and an eNB configuring the small cell is referred to as a "small eNB".

The macro eNB may be, for example, a "wide area base station" described in Non Patent Literature 7.

The small eNB may be, for example, a low power node, a local area node, a hotspot, or the like. In addition, the small eNB may be a pico eNB configuring a picocell, a femto eNB configuring a femtocell, a HeNB, a remote radio head (RRH), a remote radio unit (RRU), remote radio equipment (RRE), or a relay node (RN). Furthermore, the small eNB may be a "local area base station" or a "home base station" described in Non Patent Literature 7.

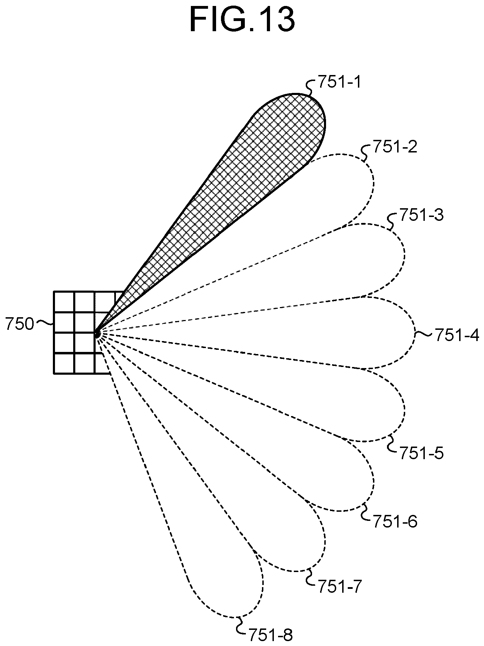

FIG. 13 illustrates an example of a configuration of a cell in NR. In the cell in NR, narrow beams are formed and transmitted in different directions. In the example illustrated in FIG. 13, a base station 750 performs transmission and reception to and from user equipment using a beam 751-1 at a certain time. The base station 750 performs transmission and reception to and from the user equipment using a beam 751-2 at another time. Thereafter, the base station 750 similarly performs transmission and reception to and from the user equipment using one or more of the beams 751-3 to 751-8. Thus, the base station 750 configures a cell with a wide range.

Although FIG. 13 illustrates an example in which the number of beams used by the base station 750 is eight, the number of beams may be different from eight. In addition, although the number of beams simultaneously used by the base station 750 is one in the example illustrated in FIG. 13, the number of beams may be two or more.

In 3GPP, sidelink (SL) is supported for device to device (D2D) communication and vehicle to vehicle (V2V) communication (see Non Patent Literatures 1 and 16). The SL is defined by a PC5 interface.

A physical channel (see Non Patent Literature 1) used for the SL will be described. A physical sidelink broadcast channel (PSBCH) carries information related to a system and synchronization, and is transmitted from a UE.

A physical sidelink discovery channel (PSDCH) carries a sidelink discovery message from a UE.

A physical sidelink control channel (PSCCH) carries control information from a UE for sidelink communication and V2X sidelink communication.

A physical sidelink shared channel (PSSCH) carries data from a UE for sidelink communication and V2X sidelink communication.

A physical sidelink feedback channel (PSFCH) carries HARQ feedback on the sidelink from a UE that has received PSSCH transmission to a UE that has transmitted the PSSCH.

A transport channel (see Non Patent Literature 1) used for the SL will be described. A sidelink broadcast channel (SL-BCH) has a predetermined transport format and is mapped to the PSBCH which is a physical channel.

A sidelink discovery channel (SL-DCH) has periodic broadcast transmission of a predetermined format having a fixed size. In addition, the SL-DCH supports both UE autonomous resource selection and resource allocation scheduled by eNB. In the UE autonomous resource selection, there is a collision risk, and when dedicated resources are allocated to a UE by an eNB, there is no collision. In addition, the SL-DCH supports HARQ combining but does not support HARQ feedback. The SL-DCH is mapped to the PSDCH which is a physical channel.

A sidelink shared channel (SL-SCH) supports broadcast transmission. The SL-SCH supports both UE autonomous resource selection and resource allocation scheduled by eNB. In the UE autonomous resource selection, there is a collision risk, and when dedicated resources are allocated to a UE by an eNB, there is no collision. In addition, the SL-SCH supports HARQ combining but does not support HARQ feedback. Furthermore, the SL-SCH supports dynamic link adaptation by changing transmission power, modulation, and coding. The SL-SCH is mapped to the PSSCH which is a physical channel.

A logical channel (see Non Patent Literature 1) used for the SL will be described. A sidelink broadcast control channel (SBCCH) is a sidelink channel for broadcasting sidelink system information from one UE to another UE. The SBCCH is mapped to the SL-BCH which is a transport channel.

A sidelink traffic channel (STCH) is a point-to-multipoint sidelink traffic channel for transmitting user information from one UE to another UE. The STCH is used only by a UE having a sidelink communication capability and a UE having a V2X sidelink communication capability. Point-to-point communication between two UEs having the sidelink communication capabilities is also realized by using the STCH. The STCH is mapped to the SL-SCH which is a transport channel.

A sidelink control channel (SCCH) is a sidelink control channel for transmitting control information from one UE to another UE. The SCCH is mapped to the SL-SCH which is a transport channel.

In 3GPP, support of V2X communication also in NR has been studied. The study of the V2X communication in NR has been progressed on the basis of the LTE system and the LTE-A system, but there are additions and changes to and from the LTE system and the LTE-A system in the following points.

In LTE, the SL communication uses broadcast only. In NR, as the SL communication, support of unicast and groupcast in addition to broadcast has been studied (see Non Patent Literature 22 (3GPP TS 23.287)).

Support of HARQ feedback (Ack/Nack), a CSI reporting, and the like in unicast communication and groupcast communication has been studied.

In order to support unicast and groupcast in addition to broadcast in the SL communication, support of PC5-S signaling has been studied (see Non Patent Literature 22 (3GPP TS 23.287)). For example, PC5-S signaling is implemented to establish a link for implementing SL, i.e., PC5 communication. The link is implemented in a V2X layer and is also referred to as a layer 2 link.

In addition, support of RRC signaling in the SL communication has been studied (see Non Patent Literature 22 (3GPP TS 23.287)). The RRC signaling in the SL communication is also referred to as PC5 RRC signaling. For example, it has been proposed to perform notifications, between UEs that perform PC5 communication, of capability of each UE, and of an AS layer configuration for performing the V2X communication using the PC5 communication.

In the SL communication, communication between a UE and an NW via a relay has been proposed (see Non Patent Literatures 20 (3GPP TR 23.703), 23 (3GPP TS 23.303), and 27 (3GPP TR 38.836)). The relay between the UE and the NW is sometimes referred to as a UE-to-NW relay or a UE-NW relay. In the present disclosure, a UE that performs relay between the UE and the NW is sometimes referred to as a relay UE.

For example, there may be a case where communication needs to be performed not only between a UE within the coverage of a RAN node (for example, a gNB) and the RAN node, but also between a more distant UE and the RAN node. In such a case, a method using the UE-NW relay is possibly employed. For example, communication between the gNB and the UE (sometimes referred to as a remote UE) is performed via the relay UE. Communication between the gNB and the relay UE is performed by Uu, and communication between the relay UE and the remote UE is performed by the PC5.

For example, both the relay UE and the remote UE may be present within the coverage of a gNB. The gNB having the relay UE present within the coverage thereof (hereinafter, sometimes referred to as gNB #1) and the gNB having the remote UE present within the coverage thereof (hereinafter, sometimes referred to as gNB #2) may be the same or different. In such a situation, it is also possible that the remote UE communicates via the relay UE with the gNB having the relay UE present within the coverage thereof.

For example, in a case where the remote UE connected to gNB #2 is present at a coverage edge of gNB #2, good communication quality may not be obtained. In such a case, the remote UE can obtain better communication quality by connecting to gNB #1 via the relay UE. For example, in a case where radio wave propagation loss between the remote UE and the relay UE is smaller than radio wave propagation loss between the remote UE and gNB #2, the remote UE requires less transmission power when the remote UE communicates with gNB #1 via the relay UE, and thus, it is possible to achieve low power consumption.

In 3GPP, a method of handover (HO) of a remote UE from a gNB to which the remote UE is directly connected to a gNB to which the remote UE is indirectly connected via a relay UE has been discussed (see Non Patent Literature 26 (3GPP R2-2009145)). However, in the HO to the gNB to which the remote UE is indirectly connected via the relay UE, unlike the conventional HO between the gNBs to which the remote UE is directly connected, it is necessary to perform SL communication (hereinafter, sometimes referred to as PC5 communication) between the remote UE and the relay UE.

In the PC5 communication, a transmission-side UE (hereinafter, sometimes referred to as a UE-TX) performs, for a reception-side UE (hereinafter, sometimes referred to as a UE-RX), a configuration for communication in a direction from the UE-TX to the UE-RX. As the configuration for communication in the direction from the UE-TX to the UE-RX, for example, there is an RRC configuration (see Non Patent Literature 19 (3GPP TS 38.331)). However, Non Patent Literature 19 and other documents do not disclose any detailed configuration method for the PC5 communication in HO from/to a gNB to which a remote UE is indirectly connected via a relay UE, in other words, in HO of a remote UE via a relay UE. Therefore, it is not possible to perform HO of a remote UE via a relay UE by simply applying the conventional method, which is a problem.

The first embodiment discloses a method for solving such a problem. In the following description, the configuration for the PC5 communication is sometimes referred to as a configuration necessary for the PC5 communication, a PC5 communication configuration, or the like.

In order to solve the above problem, in a communication system according to the present embodiment, a gNB as an HO destination (hereinafter, sometimes referred to as a T-gNB) notifies a remote UE of a configuration necessary for the PC5 communication between the remote UE and a relay UE. In addition, the T-gNB notifies the relay UE of the configuration necessary for the PC5 communication between the remote UE and the relay UE. The relay UE is a relay UE connected or connectable to the T-gNB, and the remote UE is connected to the T-gNB via the relay UE. The relay UE, in other words, a relay UE as a connection destination is herein sometimes referred to as relay UE #2. In addition, a gNB to which the remote UE that performs HO is connected before the start of the HO is sometimes referred to as a gNB as an HO source or an S-gNB.

The T-gNB notifies the remote UE and relay UE #2 of a configuration used for PC5 communication from the remote UE to relay UE #2. A method for performing a notification of a configuration used for PC5 communication from the remote UE to the relay UE will be disclosed.

The T-gNB notifies the remote UE of the configuration used for the PC5 communication from the remote UE to relay UE #2. The T-gNB may notify the remote UE of the configuration via the S-gNB. In a case where the S-gNB is connected to the remote UE via the relay UE, the T-gNB may notify the remote UE of the configuration via the S-gNB and the relay UE. In a case where the remote UE is connected to the S-gNB via a relay UE, the relay UE, in other words, the relay UE as a connection source which is a relay UE to which the remote UE is connected before the start of HO, is herein sometimes referred to as relay UE #1. The T-gNB and the S-gNB may be the same gNB. The HO may be HO between different cells of the same gNB.

A configuration only for transmission (TX) in the PC5 communication from the remote UE to relay UE #2 may be notifed to remote UE as the configuration which the remote UE is to be notified of. A configuration for both transmission (TX) and reception (RX) in the PC5 communication from the remote UE to relay UE #2 may be notifed to remote UE as the configuration which the remote UE is to be notified of. These configurations may be combined to perform a notification thereof.

The remote UE notifies relay UE #2 of the configuration used for the PC5 communication from the remote UE to relay UE #2. That is, the remote UE performs a notification of the configuration received from the T-gNB. The remote UE may perform a notification of the configuration received via the S-gNB. The remote UE may perform a notification of some or all of parameters configured for the remote UE. The configuration for both TX and RX in the PC5 communication from the remote UE to relay UE #2 may be notifed to relay UE #2 as the configuration which the remote UE notifies relay UE #2 of. The configuration only for TX in the PC5 communication from the remote UE to relay UE #2 need not be notifed to relay UE #2 as the configuration which the remote UE notifies relay UE #2 of.

An interface between base stations may be used for a notification from the T-gNB to the S-gNB. The notification may be performed by using Xn signaling. The notification may be performed, for example, by including the configuration in a response message to an HO request. This eliminates the necessity of performing a notification of Xn signaling separately, and thus, the amount of signaling can be reduced. RRC signaling may be used for a notification from the S-gNB to the remote UE. The notification may be performed, for example, by including the configuration in an RRCreconfiguration message. This eliminates the necessity of performing a notification of RRC signaling separately, and thus, the amount of signaling can be reduced. In a case where the S-gNB is connected to the remote UE via relay UE #1, the notification from the S-gNB to the remote UE may be performed via relay UE #1.

PC5-S signaling may be used for the notification from the remote UE to relay UE #2. The notification may be performed by including the configuration in a Direct Communication Request message. The notification may be performed by including the configuration in a security-protected PC5-S message. As another method, RRC signaling in SL may be used for the notification from the remote UE to relay UE #2. The notification may be performed by including the configuration in a PC5-RRC message. The notification may be performed by including the configuration in an RRCreconfigurationSidelink message. As another method, the notification may be performed by including the configuration in an RRC message which the remote UE notifies the T-gNB of. The notification may be performed by including the configuration in an RRCreconfigurationcomplete message. Preferably, relay UE #2 receives the message which the remote UE notifies the T-gNB of to acquire the configuration.

Eight examples of a configuration used for the PC5 communication will be disclosed below.
(1) Configuration used for PC5-S link establishment.
(2) Configuration used for PC5-RRC signaling.
(3) Configuration used for PC5-S signaling.
(4) Configuration for sidelink radio bearer (SLRB).
(5) Configuration for mapping of SLRB and Uu RB.
(6) Configuration for CH in SL.
(7) Information about a UE to be a target of the PC5 communication.
(8) A combination of (1) to (7).

Three examples will be disclosed below as (4) configuration for SLRB.
(4-1) Configuration for SL signaling radio bearer (SRB) .
(4-2) Configuration for SL data radio bearer (DRB).
(4-3) A combination of (4-1) and (4-2).

Five examples will be disclosed below as (4-1) configuration for SL SRB.
(4-1-1) Configuration for SL SRB0.
(4-1-2) Configuration for SL SRB1.
(4-1-3) Configuration for SL SRB2.
(4-1-4) Configuration for SL SRB3.
(4-1-5) A combination of (4-1-1) to (4-1-4).

A DC using the relay UE may be configured. For example, in a case where the DC using the relay UE is configured, (4-1-4) configuration for SL SRB3 may be performed.

As the SL DRB, a default DRB configured in advance may be provided. (4-2) Configuration for SL DRB may be a configuration for the default DRB. The configuration for SL DRB may be a configuration as to whether to use the default DRB. Consequently, the SL DRB suitable for services can be configured later. In addition, the default DRB can be used before the SL DRB suitable for services is configured. The SL DRB can be flexibly configured.

(5) Configuration for mapping of SLRB and Uu RB may be a configuration for mapping of the SLRB used between the remote UE and the relay UE and the Uu RB used between the relay UE and the gNB in communication between the remote UE and the gNB.

Three examples will be disclosed below as (6) configuration for CH in SL.
(6-1) Configuration for SCCH.
(6-2) Configuration for STCH.
(6-3) A combination of (6-1) and (6-2).

(7) Information about a UE to be a target of the PC5 communication may be, for example, information about a UE to be a transmission destination of the PC5 communication. The information may be information about a UE as a transmission source of the PC5 communication. The information about a UE may be, for example, a UE identifier. The UE identifier may be, for example, an L2 ID. The information about a UE as a transmission destination of the PC5 communication may be, for example, a destination L2 ID. The information about a UE as a transmission source of the PC5 communication may be, for example, a source L2 ID.

Thus, the remote UE can acquire, from the T-gNB, the configuration used for the PC5 communication from the remote UE to relay UE #2. Relay UE #2 can acquire, from the T-gNB, the configuration used for the PC5 communication from the remote UE to relay UE #2.

Another method for performing a notification of the configuration used for the PC5 communication from the remote UE to the relay UE will be disclosed. The T-gNB notifies the remote UE of the configuration used for the PC5 communication from the remote UE to relay UE #2. As this method, it is preferable to appropriately apply the method disclosed above. The remote UE can acquire, from the T-gNB, the configuration used for the PC5 communication between the remote UE and relay UE #2.

The T-gNB may notify relay UE #2 of the configuration used for the PC5 communication from the remote UE to relay UE #2. The T-gNB may perform a notification of some or all of parameters configured for the remote UE. The configuration for both TX and RX in the PC5 communication from the remote UE to relay UE #2 may be notifed to relay UE #2 as the configuration which the T-gNB notifies relay UE #2 of. The configuration only for TX in the PC5 communication from the remote UE to relay UE #2 need not be notifed to relay UE #2 as the configuration which the T-gNB notifies relay UE #2 of. The notification from the T-gNB to relay UE #2 may be performed by using a Uu interface between the T-gNB and relay UE #2. The notification may be performed by using RRC signaling. The notification may be performed, for example, by including the configuration in an RRCreconfiguration message. The notification may be performed, for example, by including the configuration in a message for requesting relay between the remote UE and the gNB. Alternatively, an RRC message may be newly provided for the notification of the configuration.

Thus, relay UE #2 can acquire, from the T-gNB, the configuration used for the PC5 communication from the remote UE to relay UE #2. In addition, since the notification from the remote UE to relay UE #2 is unnecessary, it is possible to perform the configuration at an early stage. Furthermore, since the necessity of performing communication between the remote UE and relay UE #2 for the configuration is eliminated, SL SRB0 between the remote UE and relay UE #2 can be configured.

The T-gNB notifies the remote UE and relay UE #2 of a configuration used for PC5 communication from relay UE #2 to the remote UE. A method for performing a notification of the configuration used for the PC5 communication from relay UE #2 to the remote UE will be disclosed.

The T-gNB notifies the remote UE of the configuration used for the PC5 communication from relay UE #2 to the remote UE. As a notification method, it is preferable to appropriately apply the method for performing a notification of the configuration used for the PC5 communication from the remote UE to relay UE #2 disclosed above. A configuration for both TX and RX in the PC5 communication from relay UE #2 to the remote UE may be notifed to remote UE as the configuration which the remote UE is to be notified of. A configuration only for TX in the PC5 communication from relay UE #2 to the remote UE may be notifed to remote UE as the configuration which the remote UE is to be notified of. These configurations may be combined to perform a notification thereof.

The remote UE may notify relay UE #2 of the configuration used for the PC5 communication from relay UE #2 to the remote UE. In that case, the remote UE performs a notification of the configuration received from the T-gNB. The remote UE may perform a notification of the configuration received via the S-gNB. The configuration for both TX and RX in the PC5 communication from relay UE #2 to the remote UE may be notifed to relay UE #2 as the configuration which the remote UE notifies relay UE #2 of. The configuration only for TX in the PC5 communication from relay UE #2 to the remote UE may be notifed to relay UE #2 as the configuration which the remote UE notifies relay UE #2 of. These configurations may be combined to perform a notification thereof. As a notification method, it is preferable to appropriately apply the method for performing a notification of the configuration used for the PC5 communication from the remote UE to relay UE #2 disclosed above.

Thus, the remote UE can acquire, from the T-gNB, the configuration used for the PC5 communication from relay UE #2 to the remote UE. Relay UE #2 can acquire, from the T-gNB, the configuration used for the PC5 communication from relay UE #2 to the remote UE.

Another method for performing a notification of the configuration used for the PC5 communication from relay UE #2 to the remote UE will be disclosed. As a method for performing a notification from the T-gNB to the remote UE, it is preferable to appropriately apply the method for performing a notification of the configuration used for the PC5 communication from the remote UE to relay UE #2 disclosed above. Some or all of parameters to be configured for relay UE #2 from the T-gNB to be described later may be notifed to remote UE as the configuration which the remote UE is to be notified of. The configuration for both TX and RX in the PC5 communication from relay UE #2 to the remote UE may be notifed to remote UE as the configuration which the remote UE is to be notified of. The configuration only for transmission TX in the PC5 communication from relay UE #2 to the remote UE need not be notifed to remote UE as the configuration which the remote UE is to be notified of. Thus, the remote UE can acquire, from the T-gNB, the configuration used for the PC5 communication from relay UE #2 to the remote UE.

The T-gNB notifies relay UE #2 of the configuration used for the PC5 communication from relay UE #2 to the remote UE. The configuration for both TX and RX in the PC5 communication from relay UE #2 to the remote UE may be notifed to relay UE #2 as the configuration which the T-gNB notifies relay UE #2 of. The configuration only for TX in the PC5 communication from relay UE #2 to the remote UE may be notifed to relay UE #2 as the configuration which the T-gNB notifies relay UE #2 of. These configurations may be combined to perform a notification thereof. As a method for performing a notification from the T-gNB to relay UE #2, it is preferable to appropriately apply the method for performing a notification of a configuration necessary for the PC5 communication from the remote UE to relay UE #2 disclosed above.

Thus, relay UE #2 can acquire, from the T-gNB, the configuration used for the PC5 communication from relay UE #2 to the remote UE. In addition, since the notification from relay UE #2 to the remote UE is unnecessary, it is possible to perform the configuration at an early stage. Furthermore, since the necessity of performing communication between relay UE #2 and the remote UE for the configuration is eliminated, SL SRB0 between relay UE #2 and the remote UE can be configured.

Another method for performing a notification from the T-gNB to the remote UE of the configuration used for the PC5 communication from relay UE #2 to the remote UE will be disclosed. The T-gNB notifies relay UE #2 of the configuration used for the PC5 communication from relay UE #2 to the remote UE. As the notification method, it is preferable to appropriately apply the notification method disclosed above. Relay UE #2 notifies the remote UE of the configuration used for the PC5 communication from relay UE #2 to the remote UE. Relay UE #2 performs a notification of the configuration received from the T-gNB. The configuration for both TX and RX in the PC5 communication from relay UE #2 to the remote UE may be notifed to remote UE as the configuration which relay UE #2 notifies the remote UE of. The configuration only for TX in the PC5 communication from relay UE #2 to the remote UE need not be notifed to relay UE #2 as the configuration which the remote UE notifies relay UE #2 of.

PC5-S signaling may be used for the notification from relay UE #2 to the remote UE. The notification may be performed by including the configuration in a Direct Communication Request message. The notification may be performed by including the configuration in a security-protected PC5-S message. As another method, RRC signaling in SL may be used for the notification from relay UE #2 to the remote UE. The notification may be performed by including the configuration in a PC5-RRC message. The notification may be performed by including the configuration in an RRCreconfigurationSidelink message. As another method, the notification may be performed by including the configuration in an RRC message which the T-gNB notifies the remote UE, via relay UE #2, of. The notification may be performed by including the configuration in an RRCreconfiguration message.

Thus, the remote UE can acquire, from the T-gNB, the configuration used for the PC5 communication from relay UE #2 to the remote UE.

The method for performing a notification of the configuration used for the PC5 communication from the remote UE to relay UE #2 and the method for performing a notification of the configuration used for the PC5 communication from relay UE #2 to the remote UE may be appropriately combined and used. Thus, a notification of the configuration used for bilateral PC5 communication between the remote UE and relay UE #2 can be performed. Each of the remote UE and relay UE #2 can acquire the configuration used for the bilateral PC5 communication between the remote UE and relay UE #2.

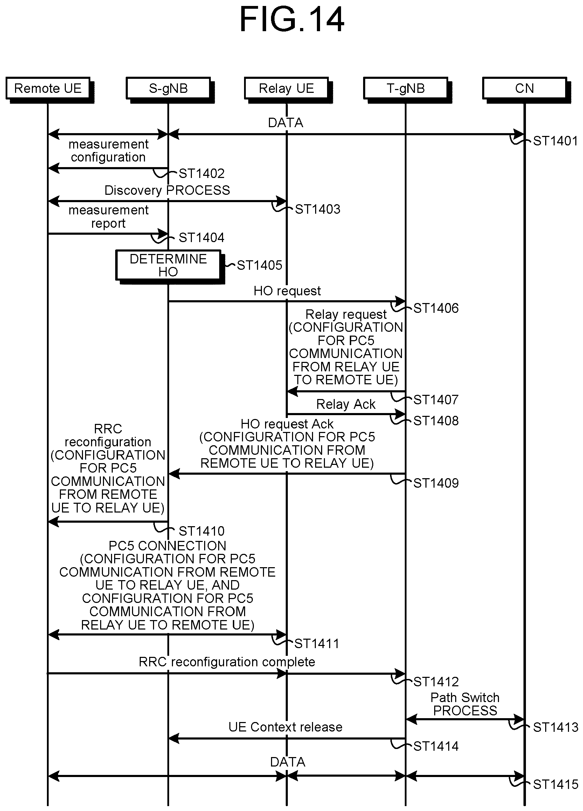

FIG. 14 is a sequence diagram illustrating an example of a method of HO of a remote UE via a relay UE in the first embodiment. In step ST1401, the remote UE performs data communication with an S-gNB and a CN. An example of the CN is a UPF. In step ST1402, the S-gNB notifies the remote UE of a measurement configuration. As the measurement configuration, a DL measurement configuration and an SL measurement configuration may be combined. A gNB and a UE may be combined and employed as a measurement target. The DL measurement configuration is employed for the gNB, and the SL measurement configuration is employed for the UE. For the DL measurement configuration and the SL measurement configuration, different frequencies may be configured, or the same frequency may be configured. DL measurement and SL measurement may be each performed at the configured frequency. The remote UE performs measurement in accordance with the measurement configuration received from the S-gNB.

In step ST1403, the remote UE performs a discovery process in order to detect the relay UE. Through the discovery process, the remote UE detects the relay UE connectable to the gNB. The discovery process may be performed on a UE regarded as a subject of a report in the measurement configuration. The discovery process may be performed before the SL measurement, and the SL measurement may be performed on the relay UE detected in the discovery process.

The relay UE may notify the remote UE of information about the relay UE, information on the gNB as a connection destination of the relay UE, state information of the relay UE, information indicating whether the relay UE is capable of relaying, and the like. An identifier of the relay UE may be used as the information about the relay UE. An identifier of the gNB may be used as the information on the gNB as the connection destination of the relay UE. The state information of the relay UE may be an RRC-connected state to the gNB or a connection management (CM) connected state to the CN. Information about services may be included as the information indicating whether the relay UE is capable of relaying. The information about services may be, for example, information indicating services that can be relayed.

The relay UE may notify the remote UE of the information in the discovery process. The relay UE may notify the remote UE of the information by PC5-S signaling. Alternatively, the relay UE may notify the remote UE of the information by PC5-RRC signaling. This is effective in a case where PC5 connection is established between the remote UE and the relay UE, for example, in a case where a PC5 connection establishment process is performed subsequent to the discovery process. As another method, the relay UE may broadcast the information. The remote UE preferably receives the information broadcast from the relay UE.
Thus, the remote UE can acquire the information.

In step ST1404, the remote UE reports a measurement result to the S-gNB. A DL measurement result and an SL measurement result may be combined and reported. The report of the SL measurement result may be performed to the relay UE detected in the discovery process. The DL measurement result and the SL measurement result are included in a measurement report message. As the SL measurement result, information about the relay UE as a target, information on the gNB to which the relay UE is connected, state information of the relay UE, information indicating whether the relay UE is capable of relaying, and the like may be included. Thus, the S-gNB can acquire the measurement result of the relay UE performed by the remote UE.

In step ST1405, the S-gNB determines HO of the remote UE. The S-gNB preferably determines the HO of the remote UE by using the measurement result, the information about the relay UE, the information on the gNB to which the relay UE is connected, the state information of the relay UE, the information indicating whether the relay UE is capable of relaying, and the like. Here, it is determined to change a connection destination of the remote UE from the S-gNB to the relay UE. The S-gNB determines to set, as the HO destination, the T-gNB connected to the relay UE.

In step ST1406, the S-gNB notifies the T-gNB of an HO request of the remote UE. An HO request message may include information about the remote UE, for example, an identifier of the remote UE and a context of the remote UE. The HO request message may include information about the relay UE to be a connection destination, for example, an identifier of the relay UE and information indicating whether the relay UE is capable of relaying. Thus, the T-gNB can acquire information about the remote UE to be an HO target and the relay UE to be the connection destination.

The T-gNB that has received, from the S-gNB, the information about the remote UE to be the HO target and the relay UE to be the connection destination performs HO acceptance control on the remote UE. In the HO acceptance control, the T-gNB determines whether HO can be accepted via a relay connected to the remote UE, and performs an RRC configuration of the remote UE in the T-gNB. The T-gNB may perform a configuration for the PC5 communication between the remote UE and the relay UE. The RRC configuration may be performed as the PC5 communication configuration. Thus, the T-gNB can notify the remote UE and the relay UE of the PC5 communication configuration.

The configuration for the PC5 communication between the remote UE and the relay UE may be performed after a relay response from the relay UE described later is received. In a case of notifying the relay UE of the configuration, it is preferable to use a method such as a method in which the T-gNB performs the notification via the S-gNB and the remote UE, or a method in which the T-gNB directly notifies the relay UE of the configuration separately from the HO request message. Thus, the T-gNB can perform the PC5 communication configuration by using the relay response from the relay UE.

In step ST1407, the T-gNB notifies the relay UE to be the connection destination of the remote UE as the HO target of a relay request message. The relay request message may include information about the remote UE. The relay request message may include information about the relay UE. Information indicating whether the relay UE is capable of relaying may be included. Information about services may be included. In addition, the relay request message may include information indicating the content of the PC5 communication configuration configured by the T-gNB (hereinafter, described as the PC5 communication configuration information). The PC5 communication configuration information is an example of communication configuration information indicating the content of the configuration for the remote UE and the relay UE to perform terminal-to-terminal communication, that is, PC5 communication. In the example in FIG. 14, the T-gNB includes the PC5 communication configuration information for communication from the relay UE to the remote UE in the relay request message and notifies the relay UE of the relay request message. The relay UE that has received the notification performs connection-acceptance control of the remote UE to be the HO target. In the connection-acceptance control of the remote UE, the relay UE determines whether it is possible to connect to the remote UE. That is, the relay UE determines whether it is possible to connect to the remote UE, i.e., whether it is possible to perform relay thereto. In step ST1408, the relay UE notifies the T-gNB of a relay response message. The relay response message may include information about the remote UE, information about the relay UE, information indicating whether the relay UE is capable of relaying to the remote UE to be the HO target. The relay response message may include information indicating that the PC5 communication configuration has been completed. In the example in FIG. 14, an acknowledgment is provided as the relay response message.

In step ST1407, the T-gNB may notify the relay UE to be the connection destination of the remote UE as the HO target of information about a configuration of adaptation layers. The T-gNB may include the information in the relay request message to perform a notification of the relay request message. It is preferable to appropriately apply the method for performing a notification of the PC5 communication configuration information from the T-gNB to the relay UE to be the connection destination of the remote UE as the HO target disclosed above. The information about the configuration of adaptation layers may be information about a configuration of adaptation layers between the remote UE and the relay UE and/or information about a configuration of adaptation layers between the relay UE and the T-gNB, which are used for communication between the remote UE and the T-gNB. The relay UE that has received the information about the configuration of adaptation layers can perform the configuration of adaptation layers. The relay UE may include information indicating that the configuration of adaptation layers has been completed in the relay response message to be transmitted in step 1408. Thus, the T-gNB can recognize that the configuration of adaptation layers has been completed for the relay UE.

In step ST1409, the T-gNB notifies the S-gNB of an HO request response message. In the example in FIG. 14, an acknowledgment is provided as the HO request response message. The HO request response message may include information about the remote UE. The HO request response message may include information about the relay UE. Information indicating whether the relay UE is capable of relaying may be included. The HO request response message may include the RRC configuration for communication with the T-gNB configured by the T-gNB for the remote UE. The HO request response message may include the PC5 communication configuration information configured by the T-gNB. In the example in FIG. 14, the T-gNB includes the PC5 communication configuration information for communication from the remote UE to the relay UE in the HO request response message and notifies the S-gNB of the HO request response message.

In step ST1409, the T-gNB may notify the S-gNB of information about the configuration of adaptation layers used for the communication between the remote UE and the T-gNB. The notification may be performed by including the information in the HO request response message. It is preferable to appropriately apply, to the notification, the method for performing a notification of the PC5 communication configuration information from the T-gNB to the S-gNB disclosed above. The information about the configuration of adaptation layers between the remote UE and the relay UE and/or the information about the configuration of adaptation layers between the relay UE and the T-gNB, which are used for the communication between the remote UE and the T-gNB, may be provided as the information about the configuration of adaptation layers.

In step ST1410, the S-gNB notifies the remote UE as the HO target of an RRC message for changing the RRC configuration (which may be an HO instruction) to the T-gNB. The S-gNB performs the notification of the message via the relay UE. An RRCReconfiguration message may be used as the RRC message. The RRC message may include information about the remote UE. The RRC message may include information about the relay UE to be the connection destination. The RRC message may include information about the T-gNB to be an HO destination. The RRC message may include an RRC configuration of the remote UE for communication with the T-gNB configured by the T-gNB. Thus, the remote UE can receive the RRC configuration configured by the T-gNB. The RRC message may include the PC5 communication configuration information. Thus, the remote UE can receive the PC5 communication configuration information for communication with the relay UE. In the example in FIG. 14, a notification of the PC5 communication configuration information for communication from the remote UE to the relay UE is performed.

In step ST1410, the S-gNB may notify the remote UE of the information about the configuration of adaptation layers used for the communication between the remote UE and the T-gNB. The notification may be performed by including the information in an RRC configuration change message. It is preferable to appropriately apply, to the notification, the method for performing a notification of the PC5 communication configuration information from the S-gNB to the remote UE disclosed above. The information about the configuration of adaptation layers between the remote UE and the relay UE and/or the information about the configuration of adaptation layers between the relay UE and the T-gNB, which are used for the communication between the remote UE and the T-gNB, may be provided as the information about the configuration of adaptation layers.

In a case where the remote UE is connected to the S-gNB via the relay UE (relay UE #1), the S-gNB may notify the remote UE, via the relay UE, of the information about the configuration of adaptation layers used for the communication between the remote UE and the T-gNB.

Thus, the remote UE can receive the information about the configuration of adaptation layers used for the communication between the remote UE and the T-gNB, and can perform the configuration of adaptation layers.

In step ST1411, the remote UE establishes the PC5 connection to the relay UE as a connection destination. The remote UE notifies the relay UE of the PC5 communication configuration information for communication from the remote UE to the relay UE in a PC5 connection establishment process. The relay UE notifies the remote UE of the PC5 communication configuration information for communication from the relay UE to the remote UE in the PC5 connection establishment process. Thus, the PC5 communication can be performed between the remote UE and the relay UE. In addition, data communication over PC5 can be performed between the remote UE and the relay UE.

In step ST1410, the S-gNB may notify the remote UE of the information about the configuration of adaptation layers used for the communication between the remote UE and the T-gNB. The notification may be performed by including the information in an RRC configuration change message. It is preferable to appropriately apply, to the notification, the method for performing a notification of the PC5 communication configuration information from the S-gNB to the remote UE disclosed above. The information about the configuration of adaptation layers between the remote UE and the relay UE and/or the information about the configuration of adaptation layers between the relay UE and the T-gNB, which are used for the communication between the remote UE and the T-gNB, may be provided as the information about the configuration of adaptation layers.

In a case of receiving, from the S-gNB, the RRC message for changing the RRC configuration to the T-gNB in step ST1410, the remote UE stops the communication with the S-gNB. The configuration for communication with the S-gNB may be released. Although not illustrated in the example in FIG. 14, in a case where the remote UE is connected to the S-gNB via the relay UE, communication with the relay UE is stopped. The configuration for the PC5 communication with the relay UE may be released. Thus, the remote UE can perform a PC5 connection process to the relay UE as the connection destination and an RRC connection process to the T-gNB via the relay UE at an early stage.

In a case of establishing the PC5 connection to the relay UE as the connection destination in step ST1411, the remote UE may stop the communication with the S-gNB. The configuration for communication with the S-gNB may be released. In the case where the remote UE is connected to the S-gNB via the relay UE, communication with the relay UE may be stopped. The configuration for the PC5 communication with the relay UE may be released. Thus, the remote UE can perform the RRC connection process with the T-gNB via the relay UE after securely establishing the PC5 connection to the relay UE as the connection destination.

In step ST1411, the remote UE may notify the relay UE of the information about the configuration of adaptation layers used for the communication between the remote UE and the T-gNB. It is preferable to appropriately apply, to the notification, the method for performing a notification of the PC5 communication configuration information from the remote UE to the relay UE disclosed above. The information about the configuration of adaptation layers between the remote UE and the relay UE and/or the information about the configuration of adaptation layers between the relay UE and the T-gNB, which are used for the communication between the remote UE and the T-gNB, may be provided as the information about the configuration of adaptation layers. The relay UE that has received the information about the configuration of adaptation layers used for the communication between the remote UE and the T-gNB can perform the configuration of adaptation layers.

In a case where the remote UE has established the PC5 connection to the relay UE as the connection destination in step ST1411, direct connection of the remote UE to the S-gNB may be used as a condition for stopping the communication with the S-gNB. Thus, the remote UE does not need to perform a connection process to both the relay UE as a connection source and the relay UE as the connection destination. In addition, the configuration of the remote UE can be simplified. Furthermore, it is possible to avoid complication of an HO process of the remote UE.

In step ST1412, the remote UE notifies the T-gNB of RRC configuration complete via the relay UE as the connection destination. The notification may be performed by using RRC signaling between the remote UE and the T-gNB. An RRCReconfigurationcomplete message may be used. Thus, the T-gNB can recognize that the remote UE has performed the RRC configuration and the RRC connection has been made via the relay UE. Consequently, communication between the remote UE and the T-gNB can be performed via the relay UE.

The T-gNB that has received the RRC configuration complete message from the remote UE performs a path switch process on the remote UE between the CN and the T-gNB in step ST1413. Thus, the path switch process from the S-gNB to the T-gNB can be performed on the remote UE. In addition, a UPF of the CN can transmit, to the T-gNB, DL data directed to the remote UE. Furthermore, data communication between the remote UE and the UPF can be performed via the T-gNB and the relay UE.

The T-gNB may include information about the remote UE in a path switch request message to an AMF of the CN. It is preferable to include information about communication of the remote UE in the path switch request message. Information indicating whether the communication is performed via the relay UE may be included as the information about the communication of the remote UE. Information about the relay UE may be included. The information may be included in a switch request message which the AMF notifies the UPF of in the CN. In addition, the information may be included in a path switch request response message from the UPF to the AMF. Furthermore, the information may be included in a path switch request response message from the AMF to the T-gNB. A notification of the path switch request message and the path switch request response message between the AMF and the UPF may be performed via an SMF.

In step ST1414, the T-gNB notifies the S-gNB of release of the context of the remote UE. Thus, the S-gNB can release the context of the remote UE.

In a case where the S-gNB receives the release of the UE context from the T-gNB when the remote UE is connected to the S-gNB via the relay UE, the S-gNB may notify the relay UE as the connection source of the release of the context of the remote UE. The relay UE as the connection source that has received the notification can release the context of the remote UE. In a case of receiving the release of the UE context from the T-gNB, the S-gNB may notify the relay UE as the connection source of the stop of communication with the remote UE. The notification of the stop of communication may be performed by RRC signaling. The communication stop message may include information about the remote UE. The communication stop message may include cause information of the stop of communication. For example, information indicating that communication is stopped by HO may be included as the cause information. The relay UE that has received the communication stop message regarding the remote UE from the S-gNB stops relay communication between the remote UE and the S-gNB. A configuration for the relay communication between the remote UE and the S-gNB may be released. For example, the PC5 communication configuration may be released. Thus, in a case where the relay UE as the connection destination of the remote UE is changed, it is possible to avoid unnecessary continuation of a relay process performed by the relay UE. In addition, the power consumption of the relay UE can be reduced.

After the path switch process is completed, in step ST1415, data communication can be performed among the remote UE, the relay UE as the connection destination, the T-gNB, and the CN.

Thus, HO of the remote UE via the relay UE can be performed. In addition, the remote UE can change a connection destination of the gNB while maintaining the RRC connection. Furthermore, a communication service can be continued even when the connection destination of the gNB is changed by the remote UE.

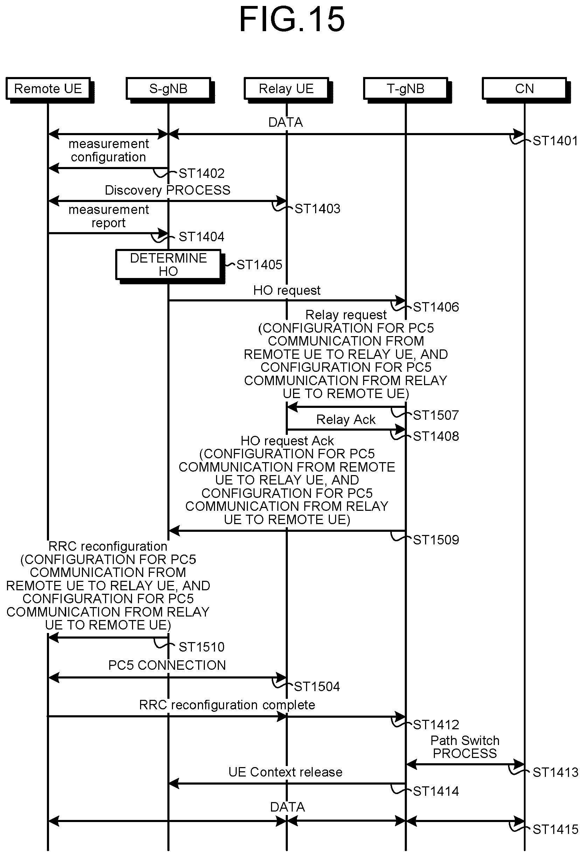

FIG. 15 is a sequence diagram illustrating another example of the method of the HO of the remote UE via the relay UE in the first embodiment. In FIG. 15, steps common to those in FIG. 14 are denoted by the same step numbers as those therein, and a common description will be omitted. In the example in FIG. 15, a method for performing the configuration for the PC5 communication between the remote UE and the relay UE is different from that in the example in FIG. 14. In the example in FIG. 15, regarding the PC5 communication configuration information for communication between the remote UE and the relay UE, a notification of the configuration for the relay UE is directly performed from the T-gNB to the relay UE, and a notification of the configuration for the remote UE is performed from the T-gNB via the S-gNB. In step ST1507, the T-gNB notifies the relay UE of the PC5 communication configuration information for communication from the remote UE to the relay UE and the PC5 communication configuration information for communication from the relay UE to the remote UE. Thus, the relay UE can receive the PC5 communication configuration information for communication from the remote UE to the relay UE and the PC5 communication configuration information for communication from the relay UE to the remote UE. In step ST1509, the T-gNB notifies the S-gNB of the PC5 communication configuration information for communication from the remote UE to the relay UE and the PC5 communication configuration information for communication from the relay UE to the remote UE. In step ST1510, the S-gNB notifies the remote UE of the PC5 communication configuration information for communication from the remote UE to the relay UE and the PC5 communication configuration information for communication from the relay UE to the remote UE. Thus, the remote UE can receive the PC5 communication configuration information for communication from the remote UE to the relay UE and the PC5 communication configuration information for communication from the relay UE to the remote UE.

Such a method as in the example in FIG. 15 eliminates the necessity of a notification of the PC5 communication configuration information from the relay UE as the connection destination to the remote UE or a notification of the PC5 communication configuration information from the remote UE to the relay UE as the connection destination, and thus it is possible to perform the configuration at an early stage. In addition, since the necessity of performing communication between the relay UE as the connection destination and the remote UE for the configuration is eliminated, SL SRB between the relay UE and the remote UE can be configured. For example, the configuration can be performed from SL SRBO.

Thus, the remote UE and relay UE #2 can acquire the configuration used for the PC5 communication between the remote UE and relay UE #2, so that it is possible to perform the PC5 communication between the remote UE and relay UE #2. Therefore, the remote UE can be connected to the T-gNB via relay UE #2, and the remote UE can communicate with the T-gNB via relay UE #2. Therefore, HO of the remote UE from the S-gNB to the T-gNB can be performed. HO to the gNB to which the remote UE is indirectly connected via the relay UE, in other words, HO of the remote UE via the relay UE can be performed, and thus the continuity of services is obtained.

### First Modification of First Embodiment.

A configuration of a DRB in communication between the remote UE and the gNB via the relay UE is a configuration via the relay UE. However, Non Patent Literatures 1 to 27 and other documents do not disclose any configuration of the DRB via the relay UE. Therefore, there arises a problem that communication cannot be performed between the remote UE and the gNB via the relay UE. In addition, there is no disclosure about the handling of the configuration of the DRB in communication between the remote UE and the S-gNB in HO of the remote UE via the relay UE.

A first modification of the first embodiment discloses a method for solving such a problem.

In order to solve the above problem, in the communication system according to the present embodiment, the S-gNB notifies the T-gNB of information about a configuration of the DRB between the remote UE and relay UE #1 used for communication between the remote UE and the S-gNB via relay UE #1. The S-gNB may notify the T-gNB of information about, out of the configuration of the DRB used for the communication between the remote UE and the S-gNB via relay UE #1, a configuration of the DRB between the remote UE and relay UE #1. The S-gNB may notify the T-gNB of QoS flow to DRB mapping information between the remote UE and relay UE #1 used for the communication between the remote UE and the S-gNB via relay UE #1. The S-gNB may notify the T-gNB of QoS flow to DRB mapping information used for the communication between the remote UE and the S-gNB via relay UE #1.

The S-gNB may notify the T-gNB of information about a configuration of the DRB between relay UE #1 and the S-gNB used for the communication between the remote UE and the S-gNB via relay UE #1. The S-gNB may notify the T-gNB of information about, out of the configuration of the DRB used for the communication between the remote UE and the S-gNB via relay UE #1, a configuration of the DRB between relay UE #1 and the S-gNB. The S-gNB may notify the T-gNB of QoS flow to DRB mapping information between relay UE #1 and the S-gNB used for the communication between the remote UE and the S-gNB via relay UE #1.

Thus, the T-gNB can acquire information about the configuration of the DRB used for the communication between the remote UE and the S-gNB via relay UE #1.

A method for configuring the DRB between the remote UE and the gNB via the relay UE will be disclosed. The S-gNB may perform a configuration of the DRB between the remote UE and the S-gNB via relay UE #1. The S-gNB may perform the configuration of the DRB between the remote UE and relay UE #1 and the configuration of the DRB between relay UE #1 and the S-gNB. The S-gNB may perform the configuration between the remote UE and relay UE #1, and the configuration between relay UE #1 and the S-gNB of the DRB between the remote UE and the S-gNB via relay UE #1. As the configuration of the DRB between the remote UE and the gNB via the relay UE, the configuration for communication from the remote UE to the S-gNB and the configuration for communication from the S-gNB to the remote UE may be separated. The S-gNB may perform the configuration of communication in each direction. Although described as S-gNB above, the gNB is not particularly limited to the S-gNB which is a gNB as an HO source. The above may be applied to a case where communication is performed between the remote UE and the gNB via the relay UE.

Thus, the S-gNB can perform both the configuration between the remote UE and relay UE #1, and the configuration between relay UE #1 and the S-gNB in the configuration between the remote UE and the S-gNB via relay UE #1. It is possible to make the configuration suitable for the communication between the remote UE and the S-gNB by using both the configurations. In addition, the S-gNB can recognize both the configurations.

Another method will be disclosed. Relay UE #1 may perform a configuration of a DRB for communication from relay UE #1 to the remote UE in the communication between the remote UE and the S-gNB via relay UE #1. Relay UE #1 may perform a configuration of a DRB for communication from the remote UE to relay UE #1 in the communication between the remote UE and the S-gNB via relay UE #1. The S-gNB performs a configuration of a DRB for communication between relay UE #1 and the S-gNB in the communication between the remote UE and the S-gNB via relay UE #1. Although described as S-gNB above, the gNB is not particularly limited to the S-gNB which is a gNB as an HO source. The above may be applied to a case where communication is performed between the remote UE and the gNB via the relay UE.

Thus, relay UE #1 and the remote UE can perform the configuration between the remote UE and relay UE #1 in the communication between the remote UE and the S-gNB via relay UE #1. Relay UE #1 and the remote UE can make the configuration suitable for communication between the remote UE and relay UE #1 in consideration of a radio wave propagation state between the remote UE and relay UE #1, a radio resource usage in each UE, and the like.

Relay UE #1 may notify the S-gNB of the configuration of the DRB for the communication from relay UE #1 to the remote UE. The remote UE may notify relay UE #1 of the configuration of the DRB for the communication from the remote UE to relay UE #1. Relay UE #1 may notify the S-gNB of the configuration. Thus, the S-gNB can recognize the configuration between the remote UE and relay UE #1 in the communication between the remote UE and the S-gNB via relay UE #1.

Thus, the S-gNB can notify the T-gNB of the information about the configuration of the DRB used for the communication between the remote UE and the S-gNB via relay UE #1.

Examples of the information about the configuration of the DRB include information for identifying the DRB, configuration information of each protocol stack, information on a logical channel, information on an RLC channel, and information about an RLC bearer. Information about a QoS flow and/or the QoS flow to DRB mapping information may be included in the information about the configuration of the DRB.

The communication between the remote UE and the gNB via the relay UE requires, at the relay UE, mapping of the DRB between the remote UE and the relay UE and the DRB between the relay UE and the remote UE. In the HO of the remote UE via the relay UE, the S-gNB notifies the T-gNB of information about the configuration of the DRB between the remote UE and relay UE #1 and information about a mapping configuration of the DRB between relay UE #1 and the S-gNB, which are used for the communication between the remote UE and the S-gNB. A DRB mapping method may be a method in which mapping is performed by using an identifier of the DRB. The information about the mapping configuration of the DRB may be information on mapping by the DRB identifier. The S-gNB may notify the T-gNB of the information about the configuration of the DRB disclosed above and the information on mapping by the DRB identifier in association with each other.

A mapping method may be a method in which mapping is performed by using an identifier of the RLC channel. The information about the mapping configuration may be information on mapping by the RLC channel identifier. The S-gNB may notify the T-gNB of the information about the configuration of the DRB disclosed above and the information on mapping by the RLC channel identifier in association with each other. The mapping method may be a method in which mapping is performed by using an identifier of the logical channel. The information about the mapping configuration may be information on mapping by the logical channel identifier. The S-gNB may notify the T-gNB of the information about the configuration of the DRB disclosed above and the information on mapping by the logical channel identifier in association with each other.

The S-gNB may notify the T-gNB of the QoS flow to DRB mapping information between the remote UE and the S-gNB and DRB mapping information in the relay UE in association with each other. The S-gNB may notify the T-gNB of the QoS flow to DRB mapping information in the communication from the remote UE to the S-gNB and/or the communication from the S-gNB to the remote UE, and the DRB mapping information in the relay UE in association with each other.

A mapping method of the DRB between the remote UE and the relay UE and the DRB between the relay UE and the remote UE in the communication between the remote UE and the gNB via the relay UE will be disclosed. The S-gNB performs mapping configuration of the configuration of the DRB between the remote UE and relay UE #1 and the configuration of the DRB between relay UE #1 and the S-gNB. The S-gNB may separate mapping of the DRB for communication from the remote UE to the S-gNB and mapping of the DRB for communication from the S-gNB to the remote UE. The S-gNB may perform the mapping configuration in each direction. Although described as S-gNB above, the gNB is not particularly limited to the S-gNB which is a gNB as an HO source. The above may be applied to a case where communication is performed between the remote UE and the gNB via the relay UE.

Thus, the S-gNB can perform mapping configuration suitable for the communication between the remote UE and the S-gNB. In addition, the S-gNB can recognize the mapping information.

Another method will be disclosed. Relay UE #1 may perform mapping configuration of the configuration of the DRB between relay UE #1 and the remote UE and the configuration of the DRB between relay UE #1 and the S-gNB in the communication between the remote UE and the S-gNB via relay UE #1. Relay UE #1 may separate mapping of the DRB for communication from the remote UE to the S-gNB and mapping of the DRB for communication from the S-gNB to the remote UE. Relay UE #1 may perform the mapping in each direction. Although described as S-gNB above, the gNB is not particularly limited to the S-gNB which is a gNB as an HO source. The above may be applied to a case where communication is performed between the remote UE and the gNB via the relay UE.

Thus, relay UE #1 can perform mapping configuration of mapping performed by relay UE #1. Therefore, it is possible to make a mapping configuration suitable for the communication between the remote UE and the S-gNB via relay UE #1 in consideration of the radio resource usage of relay UE #1, and the like.

Relay UE #1 notifies the S-gNB of information about the mapping configuration of the configuration of the DRB between relay UE #1 and the remote UE and the configuration of the DRB between relay UE #1 and the S-gNB in the communication between the remote UE and the S-gNB via relay UE #1. Thus, the S-gNB can recognize the mapping configuration.

Thus, the S-gNB can notify the T-gNB of information about the mapping configuration of the DRB between the remote UE and relay UE #1 and the DRB between relay UE #1 and the S-gNB used for the communication between the remote UE and the S-gNB.

It has been studied to provide, in communication between a remote UE and a gNB via a relay UE, an adaptation layer as a protocol between the relay UE and the gNB and/or between the remote UE and the relay UE (see Non Patent Literature 27 (3GPP TR 38.836)). In HO in communication between the remote UE and the gNB via the relay UE, the S-gNB may notify the T-gNB of information about a configuration of adaptation layers between the remote UE and relay UE #1 and/or information about a configuration of adaptation layers between relay UE #1 and the S-gNB, which are used for the communication between the remote UE and the S-gNB.

The T-gNB can perform the configuration of adaptation layers in the communication between the remote UE and the T-gNB via relay UE #2 by using the information about the configuration of adaptation layers configured in the communication between the remote UE and the S-gNB. With the use of the information, the T-gNB can perform the configuration of adaptation layers at an early stage.

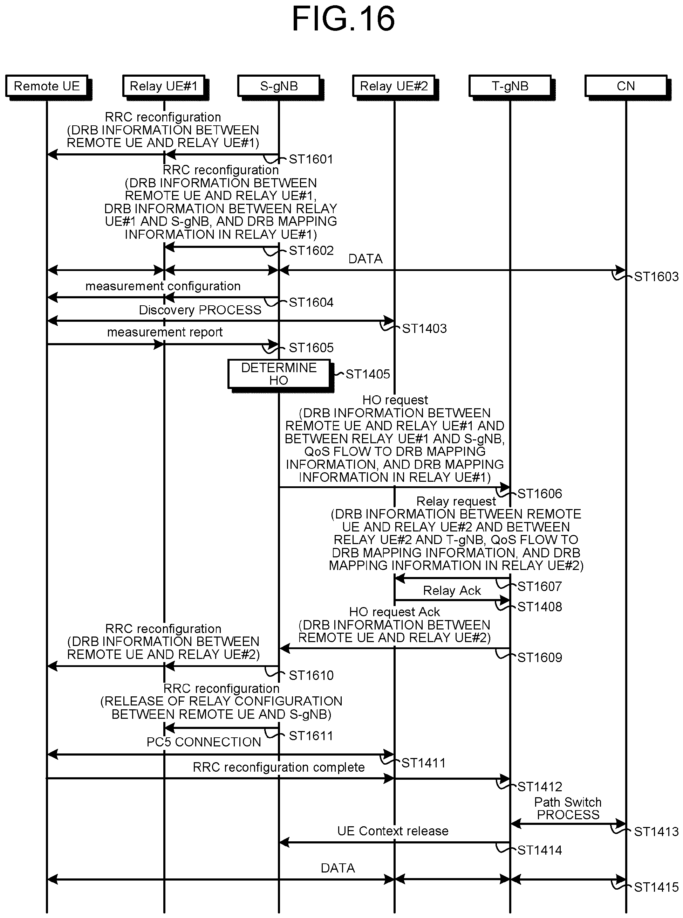

FIG. 16 is a sequence diagram illustrating an example of a method of HO of the remote UE via the relay UE in the first modification of the first embodiment. In FIG. 16, steps common to those in FIGS. 14 and 15 are denoted by the same step numbers as those therein, and a common description will be omitted. The example in FIG. 16 discloses a method for notifying the T-gNB of information about the configuration of the DRB in the communication between the remote UE and the S-gNB.

The S-gNB performs a DRB configuration for the communication between the remote UE and relay UE #1 in the communication between the remote UE and the S-gNB. In step ST1601, the S-gNB notifies the remote UE, via relay UE #1, of the information about the DRB configuration for the communication between the remote UE and relay UE #1. In the example in FIG. 16, the notification is performed by including the information in an RRCReconfiguration message between the S-gNB and the remote UE. The S-gNB performs a DRB configuration for communication between relay UE #1 and the S-gNB in the communication between the remote UE and the S-gNB. In step ST1602, the S-gNB notifies relay UE #1 of the information about the DRB configuration for the communication between the remote UE and relay UE #1. In the example in FIG. 16, the notification is performed by including the information in an RRCReconfiguration message between the S-gNB and relay UE #1. DRB information between the remote UE and relay UE #1, DRB information between relay UE #1 and the S-gNB, and DRB mapping information in relay UE #1 are provided as the information. In step ST1603, data communication is performed among the remote UE, relay UE #1, the S-gNB, and the UPF of the CN.

In step ST1604, the S-gNB notifies the remote UE, via relay UE #1, of a measurement configuration. In step ST1605, the remote UE notifies the S-gNB, via relay UE #1, of a measurement report. The S-gNB that has determined the HO of the remote UE in step ST1405 notifies the T-gNB of an HO request message in step ST1606. The HO request message preferably includes information about a DRB configuration for the communication between the remote UE and the S-gNB. It is preferable to include, as the information about the DRB configuration for the communication between the remote UE and the S-gNB, information about the DRB configuration between the remote UE and relay UE #1 in the communication between the remote UE and the S-gNB, and information about the DRB configuration between relay UE #1 and the S-gNB in the communication between the remote UE and the S-gNB. The HO request message may include mapping information for QoS flow to the DRB for the communication between the remote UE and the S-gNB. The HO request message may include DRB mapping information in relay UE #1. Thus, the T-gNB can recognize the DRB configuration used for the communication between the remote UE and the S-gNB via relay UE #1. Each piece of information described above to be included in the HO request message is an example of data communication configuration information indicating the content of a configuration for data communication between the S-gNB and the remote UE.

The T-gNB performs a DRB configuration used for the communication between the remote UE and the T-gNB via relay UE #2 by using the DRB configuration used for the communication between the remote UE and the S-gNB via relay UE #1 which the T-gNB has been notified of from the S-gNB.

In step ST1607, the T-gNB notifies relay UE #2 of information about the DRB configuration used for the communication between the remote UE and the T-gNB via relay UE #2. The notification is preferably performed by including the information in a relay request message. It is preferable to include, as the information about the DRB configuration used for the communication between the remote UE and the T-gNB, information about a DRB configuration between the remote UE and relay UE #2 in the communication between the remote UE and the T-gNB, and information about a DRB configuration between relay UE #2 and the T-gNB in the communication between the remote UE and the T-gNB, in the relay request message. The relay request message may include mapping information for QoS flow to a DRB for the communication between the remote UE and the T-gNB. The relay request message may include DRB mapping information in relay UE #2. Thus, the T-gNB can notify relay UE #2 of the DRB configuration for the communication between the remote UE and the T-gNB via relay UE #2.

In step ST1609, the T-gNB notifies the S-gNB of information about the DRB configuration used for the communication between the remote UE and the T-gNB via relay UE #2. The notification is preferably performed by including the information in an HO request response message. It is preferable to include, as information about the DRB configuration for the communication between the remote UE and the T-gNB, information about the DRB configuration between the remote UE and relay UE #2 in the communication between the remote UE and the T-gNB. Thus, the S-gNB can receive the DRB configuration for the communication between the remote UE and the T-gNB.

In step ST1610, the S-gNB notifies the remote UE of information about the DRB configuration used for the communication between the remote UE and the T-gNB via relay UE #2. The notification is preferably performed by including the information in an RRC configuration change message. Here, an RRCReconfiguration message is used as the RRC configuration change message. The S-gNB performs a notification of the message via relay UE #1. It is preferable to employ, as the information about the DRB configuration for the communication between the remote UE and the T-gNB, information about the DRB configuration between the remote UE and relay UE #2 in the communication between the remote UE and the T-gNB. Thus, the remote UE can receive the DRB configuration for the communication between the remote UE and the T-gNB. The remote UE can perform data communication with the T-gNB by using the configuration.

The method for stopping communication between the remote UE and the S-gNB has been disclosed in the first embodiment. Here, another method will be disclosed. In the first embodiment, the communication is stopped as triggered by step ST1410 described above, but here, the S-gNB notifies the remote UE of the RRC configuration change message in step ST1610, and then notifies relay UE #1 of the stop of communication with the remote UE in step ST1611. The notification may be performed by RRC signaling. The communication stop message may include information about the remote UE. The communication stop message may include cause information of the stop of communication. For example, information indicating that communication is stopped by HO may be included. Relay UE #1 that has received the communication stop message regarding the remote UE from the S-gNB stops relay communication between the remote UE and the S-gNB. A configuration for the relay communication between the remote UE and the S-gNB may be released. A buffer for the relay communication between the remote UE and the S-gNB may be reset. In addition, relay UE #1 may release the configuration for the PC5 communication with the remote UE, for example. Thus, it is possible to avoid unnecessary continuation of a relay process performed by relay UE #1. In addition, the power consumption of relay UE #1 can be reduced.

With such a method, the S-gNB can notify the T-gNB of the information about the configuration of the DRB used for the communication between the remote UE and the S-gNB via relay UE #1. With the use of the information, the T-gNB can perform the DRB configuration for the communication between the remote UE and the T-gNB via relay UE #2. In addition, it is possible to notify the remote UE and relay UE #2 of the configuration.

In HO in a case where the remote UE and the gNB are directly connected, the remote UE starts transmitting UL data to the T-gNB after successfully performing an RA process on the T-gNB. However, in a case of HO of the remote UE via the relay UE, the remote UE is not directly connected to the T-gNB, so that there is no RA process performed on the T-gNB. In such a case, a timing at which the remote UE starts transmitting the UL data to the T-gNB via the relay UE is unknown. Here, a method for solving such a problem will be disclosed.

In order to solve the above problem, the remote UE transmits an RRC configuration complete message to the T-gNB, and then starts transmitting the UL data to the T-gNB via relay UE #2. The T-gNB can recognize that the RRC connection has been made to the remote UE by receiving the RRC configuration complete message from the remote UE. The T-gNB can recognize that the remote UE has configured the RRC configuration which the T-gNB notified the remote UE, via the S-gNB, of. The T-gNB preferably receives the UL data from the remote UE via relay UE #2. The UL data can be transmitted and received between the remote UE and the T-gNB via relay UE #2.

Another method will be disclosed. The remote UE may start transmitting the UL data after PC5-RRC connection to relay UE #2 is completed. Relay UE #2 may transmit the UL data received from the remote UE to the T-gNB. Thus, the remote UE can transmit the UL data to the T-gNB via relay UE #2 at an early stage.

Thus, the DRB can be configured in the communication between the remote UE and the gNB via the relay UE. In addition, communication between the remote UE and the gNB via the relay UE can be performed. Furthermore, the T-gNB can acquire the configuration of the DRB in the communication between the remote UE and the S-gNB in the HO of the remote UE via the relay UE. Therefore, in the T-gNB, the DRB between the remote UE and the T-gNB can be configured using the configuration of the DRB between the remote UE and the S-gNB. Moreover, it is possible to obtain some effects in the HO of the remote UE via the relay UE. For example, the continuity of services can be maintained, communication optimal for QoS required for services can be performed, the DRB can be configured by the T-gNB at an early stage, processes related to the HO can be performed with low latency, and the robustness of the HO can be improved.

### Second Modification of First Embodiment.

In the HO of the remote UE via the relay UE, data communication latency is required to be reduced. However, Non Patent Literatures 1 to 27 and other documents do not disclose any method for reducing the data communication latency in the HO.

A second modification of the first embodiment discloses a method for solving such a problem.

In order to solve the above problem, dual active protocol stack (DAPS) HO is provided in the HO of the remote UE via the relay UE. Hereinafter, the DAPS HO in the HO of the remote UE via the relay UE is sometimes referred to as I-DAPS HO. A detailed method will be disclosed. In the HO of the remote UE via the relay UE, the remote UE activates protocol stacks used for both communications, i.e., communication with the S-gNB and communication with the T-gNB. As the protocol stack for communication with the S-gNB, a protocol stack for the communication between the remote UE and the S-gNB via relay UE #1 may be used. As the protocol stack for communication with the T-gNB, a protocol stack for communication between the remote UE and the T-gNB via relay UE #2 may be used.

The I-DAPS HO may be HO from a gNB directly connected to the remote UE to a gNB connected thereto via the relay UE, and/or HO from a gNB connected to the remote UE via the relay UE to a gNB directly connected thereto, and/or HO from a gNB connected to the remote UE via the relay UE to a gNB connected thereto via the relay UE. Hereinafter, these are sometimes referred to as types of I-DAPS HO.

A method for configuring the I-DAPS HO of the remote UE via the relay UE will be disclosed. The NW enables the remote UE to configure the I-DAPS HO. The NW enables the relay UE to configure the I-DAPS HO. The NW may be, for example, an AMF or an SMF. The NW may be, for example, a RAN. The RAN may be, for example, a gNB. The gNB may be an S-gNB or a T-gNB. In a case where the S-gNB performs the configuration, the I-DAPS HO can be configured depending on the communication service or the communication status of the remote UE caused to perform the HO and the communication status of relay UE #1. In a case where the T-gNB performs the configuration, the I-DAPS HO can be configured depending on the communication service or the communication status of the remote UE caused to perform the HO and the communication status of relay UE #2.

The NW notifies the remote UE of the configuration of the I-DAPS HO. Information indicating whether to configure the I-DAPS HO may be included as configuration information of the I-DAPS HO. Information indicating the types of the I-DAPS HO may be included as the configuration information of the I-DAPS HO. The types of the I-DAPS HO may be associated with information indicating whether to perform the configuration. Thus, the NW can select which type of I-DAPS HO to be configured for the remote UE and/or the relay UE. In addition, the NW can notify the remote UE and/or the relay UE of which type of I-DAPS HO to be executed. The remote UE and/or the relay UE can determine which type of I-DAPS HO should be performed at a time of the HO of the remote UE via the relay UE.

A method for performing a notification of the configuration of the I-DAPS HO will be disclosed. The NW notifies the remote UE of the configuration of the I-DAPS HO by RRC signaling. In addition, the NW notifies the relay UE of the configuration of the I-DAPS HO by RRC signaling. As RRC signaling, for example, an RRCReconfiguration message may be used for the notification. The notification method is effective when the remote UE or the relay UE is RRC-connected to the gNB. For example, the notification may be performed by an RRCSetup message. In that case, since the configuration can be performed when the remote UE or the relay UE establishes the RRC connection to the gNB, the configuration can be performed at an early stage. For example, the notification may be performed by an RRCResume message. In that case, since the configuration can be performed when the remote UE or the relay UE is in an inactive state with the gNB and is in transition to the RRC-connected state, the configuration can be performed at an early stage. For example, the notification may be performed by an RRCReestablichment message. In that case, since the configuration can be performed when the remote UE or the relay UE is in a state of radio link failure (RLF) or the like and is in transition to the RRC-connected state, the configuration can be performed at an early stage.

The T-gNB may notify relay #2 of the configuration of the I-DAPS HO by a relay request message.

The remote UE may notify the NW of whether the I-DAPS HO can be performed. The relay UE may notify the NW of whether the I-DAPS HO can be performed. The types of the I-DAPS HO and information indicating whether the I-DAPS HO can be performed may be associated with each other to perform a notification thereof. Information as to whether the I-DAPS HO can be performed or information in which the types of the I-DAPS HO are associated with information indicating whether I-DAPS HO can be performed may be used as capability information.

A method for stopping DL transmission from relay UE #1 to the remote UE in the I-DAPS HO of the remote UE from the gNB connected via the relay UE will be disclosed. The S-gNB notifies relay UE #1 of information indicating that transmission and reception between the remote UE and the S-gNB are stopped. A notification of information indicating that a relay configuration between the remote UE and the S-gNB is released may be performed. Hereinafter, the information indicating that transmission and reception between the remote UE and the S-gNB are stopped and/or the information indicating that the relay configuration between the remote UE and the S-gNB is released is herein sometimes referred to as HO source relay configuration release information. The S-gNB may notify relay UE #1 that the HO has succeeded. The notification of the information is preferably performed as triggered by the S-gNB having received an HO success message from the T-gNB.

Relay UE #1 that has received the information stops DL transmission to the remote UE. Relay UE #1 that has received the information may release the configuration for DL transmission to the remote UE, or may release the relay configuration between the remote UE and the S-gNB.

RRC signaling may be used for performing the notification of the information from the S-gNB to relay UE #1. The notification may be performed by including the information in an RRC message. The notification may be performed, for example, by including the information in an RRCReconfiguration message. The notification may be performed by including the information in an RRC message for relay. A message with which the S-gNB notifies relay UE #1 of whether the HO has succeeded may be provided, the information may be included in the message, and the S-gNB may notify relay UE #1 of the message. Thus, relay UE #1 can recognize HO success of the remote UE.

MAC signaling may be used for performing the notification of the information from the S-gNB to relay UE #1. The notification may be performed by including the information in a MAC control element (CE). L1/L2 signaling may be used for the notification of the information from the S-gNB to relay UE #1. The notification may be performed by including the information in a PDCCH. Thus, the S-gNB can notify relay UE #1 of the information at an earlier stage. In addition, it is possible to reduce latency until stop of DL transmission from relay UE #1 to the remote UE. Furthermore, since unnecessary transmission/reception processing time is reduced in relay UE #1 and the remote UE, power consumption can be reduced.

Thus, in the I-DAPS HO of the remote UE via the relay UE, relay UE #1 can recognize the HO success of the remote UE. Relay UE #1 can stop DL transmission from relay UE #1 to the remote UE in response to the HO success of the remote UE. In addition, relay UE #1 can release the configuration used for the DL transmission of relay UE #1 and the remote UE in response to the HO success of the remote UE. Therefore, it is possible to reduce unnecessary processes such as a DL transmission process to the remote UE performed by relay UE #1 even though the HO of the remote UE has succeeded. In addition, radio resources used by relay UE #1 for the process can be released.

It has been disclosed in the above that relay UE #1 that has received the HO source relay configuration release information stops the DL transmission to the remote UE. There is no limitation thereto, and relay UE #1 that has received the information may stop DL reception from the S-gNB. Relay UE #1 that has received the information may release a configuration for the DL reception from the S-gNB. Relay UE #1 that has received the information may stop UL reception from the remote UE. Relay UE #1 that has received the information may release a configuration for the UL reception from the remote UE. Relay UE #1 that has received the information may stop UL transmission to the S-gNB. Relay UE #1 that has received the information may release a configuration for the UL transmission to the S-gNB. Thus, it is possible to obtain an effect similar to that in the above case in each transmission and reception performed by relay UE #1.

A method for stopping DL/UL transmission and reception performed by the remote UE in the I-DAPS HO of the remote UE to the gNB connected via the relay UE will be disclosed. The T-gNB notifies the remote UE of information indicating that transmission and reception between the remote UE and the S-gNB are stopped. A notification of information indicating that the configuration of the communication between the remote UE and the S-gNB is released may be performed. Hereinafter, the information indicating that transmission and reception between the remote UE and the S-gNB are stopped and/or the information indicating that the configuration of the communication between the remote UE and the S-gNB is released is sometimes referred to as HO source communication configuration release information. The T-gNB preferably notifies the remote UE, via relay UE #2, of the information. The notification of the information is preferably performed as triggered by the T-gNB having received RRCReconfiguration from the remote UE.

The remote UE transmits and receives data between the remote UE and the S-gNB until receiving the information. In a case of receiving the information, the remote UE stops transmission and reception of data between the remote UE and the S-gNB, and releases the configuration for communication with the S-gNB.

RRC signaling may be used for performing the notification of the information from the T-gNB to the remote UE. The notification may be performed by including the information in an RRC message. The notification may be performed, for example, by including the information in an RRCReconfiguration message. A message indicating stop of transmission and reception between the remote UE and the S-gNB or release of the configuration may be provided, the information may be included in the message, and the T-gNB may notify the remote UE of the message. Thus, the remote UE can receive the information from the T-gNB.

MAC signaling may be used for performing the notification of the information from the T-gNB to the remote UE. MAC signaling from the T-gNB to relay UE #2 and SL MAC signaling from relay UE #2 to the remote UE may be used. The notification may be performed by including the information in a MAC CE. L1/L2 signaling may be used for performing the notification of the information from the T-gNB to the remote UE. The notification may be performed by including the information in a PDCCH from the T-gNB to relay UE #2 and a PSCCH from relay UE #2 to the remote UE. Thus, the T-gNB can notify the remote UE of the information at an earlier stage. In addition, it is possible to reduce latency until stop of transmission and reception between the remote UE and the S-gNB. Furthermore, since unnecessary transmission/reception processing time is reduced in the remote UE, power consumption can be reduced.

Thus, in the I-DAPS HO of the remote UE via the relay UE, the remote UE can determine the stop of the communication with the S-gNB and the release of the configuration for the communication. Therefore, it is possible to reduce unnecessary processes such as a communication process performed between the remote UE and the S-gNB even though the HO of the remote UE has succeeded. In addition, radio resources used by relay UE #1 for the process can be released.

A method will be disclosed in which the remote UE starts transmitting UL data to the T-gNB in the I-DAPS HO of the remote UE via the relay UE. In a case of receiving, from the T-gNB, the information indicating that transmission and reception between the remote UE and the S-gNB are stopped or the information indicating that the configuration of the communication between the remote UE and the S-gNB is released, the remote UE starts transmitting UL data to the T-gNB via relay UE #2. Thus, the remote UE can start UL data transmission to the T-gNB in response to the stop of the communication with the S-gNB or the release of the communication configuration.

In a case where there is UL data that cannot be transmitted and delivered certainly to the S-gNB at the time of stopping the communication with the S-gNB or releasing the communication configuration, the remote UE preferably transmits, to the T-gNB, the UL data in order from the UL data that cannot be transmitted and delivered certainly. UL data provided with a PDCP SN that cannot be transmitted and delivered certainly may be transmitted to the T-gNB. First and subsequent UL data that cannot be transmitted and delivered certainly may be transmitted to the T-gNB. First and subsequent UL data provided with a PDCP SN that cannot be transmitted and delivered certainly may be transmitted to the T-gNB. Thus, the continuity of the UL data at the time of the HO of the remote UE can be secured.

Another method will be disclosed. In a case of transmitting an RRCReconfigurationcomplete message to the T-gNB, the remote UE starts transmitting the UL data to the T-gNB via relay UE #2. Thus, it is possible to start transmitting the UL data to the T-gNB at an early stage. For example, even in a case where the remote UE does not perform the stop of the communication with the S-gNB or the release of the communication configuration, it is possible to start the UL data transmission to the T-gNB via relay UE #2.

In a case where there is UL data that cannot be transmitted and delivered certainly to the S-gNB at the time of transmitting the RRCReconfigurationcomplete message to the T-gNB, the remote UE preferably transmits, to the T-gNB, the UL data in order from the UL data that cannot be transmitted and delivered certainly. As a transmission method, it is preferable to appropriately apply the method disclosed above. Thus, the continuity of the UL data at the time of the HO of the remote UE can be secured similarly to the case described above.

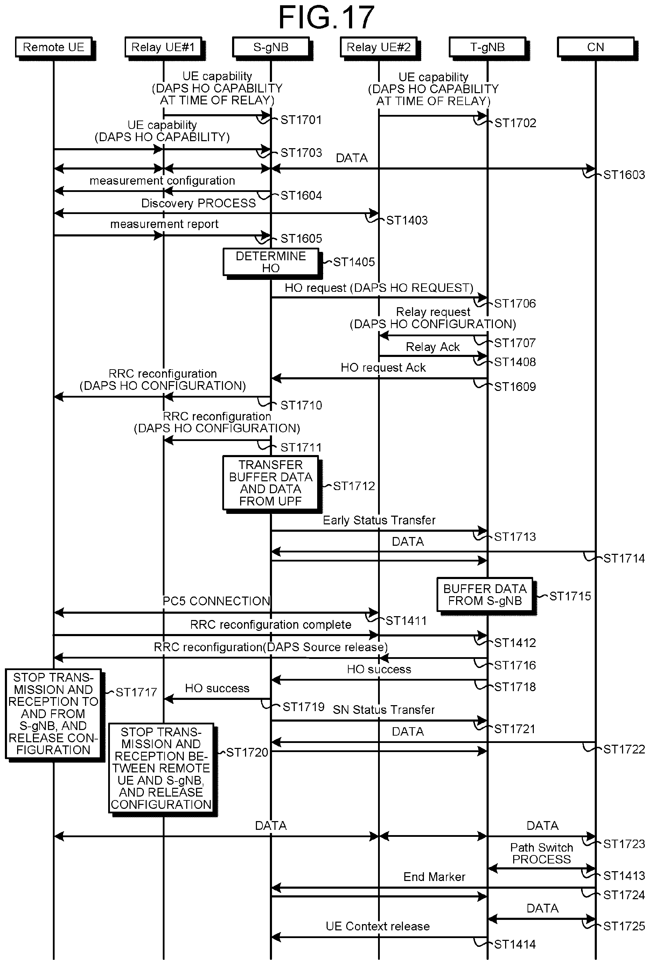

FIG. 17 is a sequence diagram illustrating an example of a method of I-DAPS HO in the second modification of the first embodiment. In FIG. 17, steps common to those in FIGS. 14 and 16 are denoted by the same step numbers as those therein, and a common description will be omitted. In step ST1701, relay UE #1 notifies the S-gNB of DAPS HO capability at the time of relay. The notification may be performed by including the DAPS HO capability at the time of relay in UE capability information. The relay UE may notify the CN of the DAPS HO capability at the time of relay. The S-gNB may notify the CN of the DAPS HO capability at the time of relay by relay UE #1. Similarly, in step ST1702, relay UE #2 notifies the T-gNB of the DAPS HO capability at the time of relay. In step ST1703, the remote UE notifies the S-gNB of the DAPS HO capability. The notification is performed via relay UE #1. The notification may be performed by including the DAPS HO capability in the UE capability information. The remote UE may notify the CN of the DAPS HO capability at the time of relay. The S-gNB may notify the CN of the DAPS HO capability of the remote UE. The DAPS HO may be I-DAPS HO. Thus, the S-gNB or the CN can recognize whether the remote UE or the relay UE can perform the DAPS HO.

In step ST1405, the S-gNB determines the I-DAPS HO for the remote UE. In step ST1706, the S-gNB notifies the T-gNB of an I-DAPS HO request. The I-DAPS HO request message preferably includes information indicating that it is a request for the I-DAPS HO. In step ST1707, the T-gNB notifies relay UE #2 of a relay request. The relay request message preferably includes information about the configuration of the I-DAPS HO. Thus, relay UE #2 can recognize application of the I-DAPS HO to the remote UE and the configuration information of the I-DAPS HO.

The S-gNB that has received an HO request response from the T-gNB in step ST1609 notifies the remote UE of the information about the configuration of the I-DAPS HO in step ST1710. The notification may be performed by using a message for RRC configuration change. The S-gNB notifies the remote UE, via relay UE #1, of the information. The remote UE that has received the notification of the information recognizes that the remote UE is instructed to perform the I-DAPS HO. The remote UE performs an I-DAPS HO process. In step ST1711, the S-gNB notifies relay UE #1 of the information about the configuration of the I-DAPS HO. The notification may be performed by using the message for RRC configuration change. Relay UE #1 that has received the notification of the information recognizes that the remote UE to be connected is instructed to perform the I-DAPS HO. Then, relay UE #1 performs the I-DAPS HO process of the remote UE.

In step ST1712, the S-gNB determines data transfer to the T-gNB. The S-gNB may determine data transfer of buffer data held by a buffer or may determine DL data transfer. The S-gNB may determine to transfer the buffer data and data from the UPF of the CN. In step ST1713, the S-gNB transfers an SN status to the T-gNB. Early Status Transfer may be used for the transfer. SN and/or Hyper Frame Number (HFN) information of DL data to be transferred first to the T-gNB may be included as the SN status. After transferring the SN status, the S-gNB transfers data received in step ST1714 to the T-gNB. The data may be DL data. DL data that cannot yet be transmitted to the remote UE by the S-gNB may be transferred. DL data the S-gNB received from the UPF of the CN may be transferred. In step ST1715, the T-gNB buffers data from the S-gNB.

The T-gNB may transfer the data transferred from the S-gNB to relay UE #2 to be a connection destination of the remote UE. Relay UE #2 preferably buffers the data transferred from the T-gNB. Thus, relay UE #2 can transmit the data received from the T-gNB to the remote UE at an early stage. For example, relay UE #2 may transmit DL data received from the T-gNB to the remote UE after establishing the PC5 connection between the remote UE and relay UE #2.

After notifying the remote UE of the RRC configuration change message including the configuration information of the I-DAPS HO in step ST1710 described above, the S-gNB does not stop the communication with the remote UE. The S-gNB does not release the configuration for communication with the remote UE. In addition, the remote UE does not stop the communication with the S-gNB after receiving the message from the S-gNB in step ST1710 described above. The configuration for communication with the S-gNB is not released. The communication with relay UE #1 for communication with the S-gNB is not stopped. The configuration for the PC5 communication with the relay UE for communication with the S-gNB is not released. In addition, relay UE #1 does not stop relay communication between the remote UE and the S-gNB after receiving, from the S-gNB, the message for RRC configuration change including the configuration information of the I-DAPS HO in step ST1711 described above. The configuration for the relay communication between the remote UE and the S-gNB is not released. The PC5 communication with the remote UE is not stopped. The communication with the S-gNB is not stopped. These configurations for communication are not released.

The allocation of the PDCP SN to the DL data by the S-gNB need not be stopped until an SN status is transmitted to the T-gNB in step ST1721. The S-gNB does not stop transmitting the DL data to the remote UE until the HO success message is received. The S-gNB need not stop receiving the UL data from the remote UE until the HO success message is received.

In step ST1412, the remote UE transmits the RRC configuration complete message to the T-gNB. The remote UE performs a notification of the RRC configuration complete message via relay UE #2. The remote UE that has performed the notification of the RRC configuration complete message may start data transmission to the T-gNB. In that case, the remote UE starts the data transmission via the relay UE. The T-gNB may transmit the data received from the remote UE to the UPF.

The remote UE that has made the PC5 connection to relay UE #2 in ST1411 may start data transmission to relay UE #2. Relay UE #2 may transmit the data received from the remote UE to the T-gNB. The T-gNB may transmit the data received from the remote UE to the UPF. The remote UE can perform data transmission at an earlier stage

The T-gNB that has received the RRC configuration complete message from the remote UE notifies the remote UE of the HO source communication configuration release information in step ST1716. The T-gNB performs the notification of the information via relay UE #2. In step ST1717, the remote UE stops transmission and reception to and from the S-gNB and releases the configuration for the communication. The T-gNB that has received the RRC configuration complete message from the remote UE notifies the S-gNB of HO success in step ST1718. The notification may be performed by using an HO success message. Thus, the S-gNB can recognize that the remote UE has completed the RRC connection to the T-gNB by the I-DAPS HO. The S-gNB that has received the HO success message from the T-gNB in step ST1718 notifies relay UE #1 of the HO source relay configuration release information in step ST1719. The notification may be performed by using an HO success message. In step ST1720, relay UE #1 stops transmission and reception of the relay communication between the remote UE and the S-gNB, and releases the configuration for the communication. Thus, relay UE #1 can promptly stop transmission and reception of the relay communication between the remote UE and the S-gNB and release the configuration for the communication after the HO success of the remote UE. In addition, unnecessary transmission/reception processes of relay UE #1 and unnecessary use of radio resources can be reduced. It is possible to reduce the power consumption of relay UE #1 and to improve the use efficiency of radio resources.

In step ST1721, the S-gNB transfers an SN status to the T-gNB. An SN Status Transfer message may be used for the transfer. UL data information that needs to be transmitted again from the remote UE to the T-gNB may be included as the SN status. DL data information to be newly transmitted from the T-gNB to the remote UE may be included as the SN status. The data information may be information on PDCP SN to be added to data. Thus, the T-gNB can recognize which data should be transmitted and received to and from the remote UE.

The S-gNB transfers data received in step ST1722 to the T-gNB. The data may be DL data. The S-gNB may transfer, to the T-gNB, the DL data that cannot yet be transmitted to the remote UE. The S-gNB may transfer, to the T-gNB, the DL data received from the UPF.

The remote UE that has completed the RRC connection to the T-gNB in step ST1412 may start data communication with the T-gNB. Alternatively, after stopping transmission and reception to and from the S-gNB and releasing the configuration in step ST1717, the remote UE may start data communication with the T-gNB. In step ST1723, the remote UE starts data communication with the T-gNB via relay UE #2. Thus, the communication can be performed between the remote UE and the T-gNB.

In step ST1413, the path switch process is performed between the T-gNB and the CN, and in step ST1724, data provided with an End Marker is transmitted as the last data to be transferred from the UPF to the T-gNB via the S-gNB. The End Marker is information indicating that it is the last data to be transferred. Consequently, the T-gNB can recognize the last data to be transferred from the S-gNB. In step ST1725, data communication is performed between the T-gNB and the UPF.

Thus, it is possible to execute the I-DAPS HO of the remote UE via the relay UE.

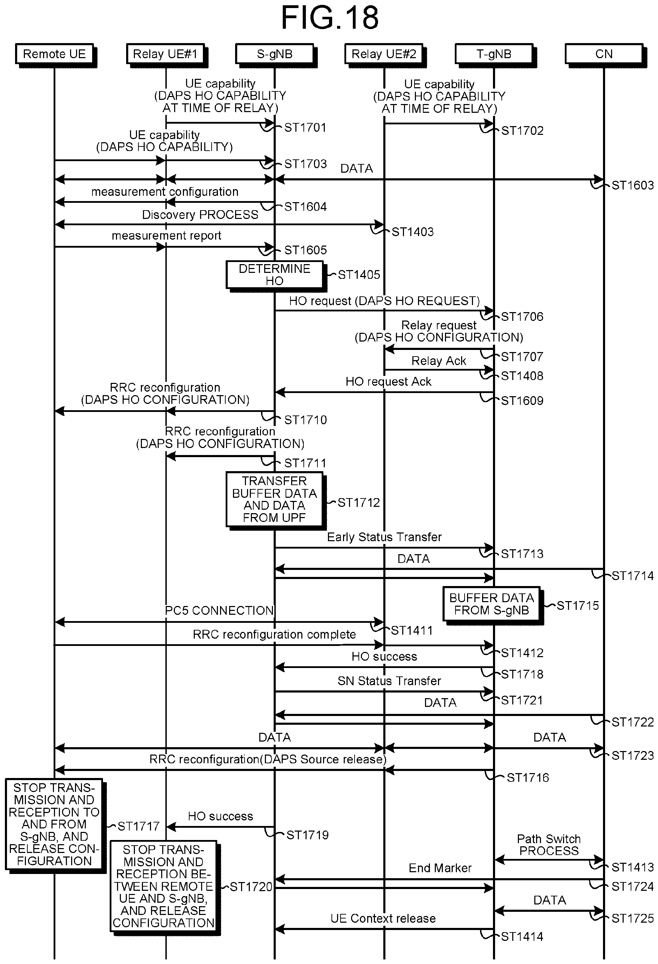

FIG. 18 is a sequence diagram illustrating another example of the method of the I-DAPS HO in the second modification of the first embodiment. In FIG. 18, steps common to those in FIG. 17 are denoted by the same step numbers as those therein, and a common description will be omitted. Before the remote UE stops transmission and reception to and from the S-gNB, data communication may be performed between the remote UE and the T-gNB. FIG. 18 discloses such a case.

In steps ST1717 and ST1720, before stopping the transmission and reception to and from the S-gNB and releasing the configuration, the S-gNB transfers the SN status in step ST1721 and performs data transfer to the T-gNB in step ST1722. DL data may be transferred as the data. The S-gNB may transfer the DL data that cannot yet be transmitted to the remote UE. The S-gNB may transfer the DL data received from the UPF. In step ST1723, the T-gNB transmits, to the remote UE via relay UE #2, the data transferred from the S-gNB. Thus, the data communication can be performed between the remote UE and the T-gNB at an early stage.

Thus, DAPS HO can be performed in the HO of the remote UE via the relay UE, so that communication latency in the HO process can be reduced. In addition, unnecessary relay processes can be reduced in the relay UE. The power consumption of the relay UE can be reduced. Furthermore, malfunction of the relay UE can be reduced.

### Third Modification of First Embodiment.

When the remote UE switches all the UL transmissions to the T-gNB, for example, in order to start transmitting the UL data to the T-gNB in the I-DAPS HO of the remote UE via the relay UE, a problem may occur in communication with the S-gNB.

A third modification of the first embodiment discloses a method for solving such a problem.

In order to solve the above problem, the remote UE performs, to relay UE #1, UL transmission related to retransmission of the communication with the S-gNB until the communication with the S-gNB is stopped or communication configuration release information is received. Nine specific examples of the UL transmission related to the retransmission of the communication with the S-gNB will be disclosed below.
(11) SL L1 CSI FB (feed back).
(12) SL HARQ FB.
(13) SL L2 RLC FB.
(14) ROHC FB.
(15) SL HARQ data retransmission.
(16) SL RLC data retransmission.
(17) SL PDCP data retransmission.
(18) SL PDCP status report retransmission.
(19) A combination of (11) to (18).

Thus, relay UE #1 can receive, from the remote UE, the UL transmission related to the retransmission of the communication between the remote UE and the S-gNB.

Relay UE #1 performs, to the S-gNB, the UL transmission related to the retransmission of the communication between the remote UE and the S-gNB until information on the stop of the transmission and reception between the remote UE and the S-gNB or relay configuration release information is received. Nine specific examples of the UL transmission related to the retransmission of the communication between the remote UE and the S-gNB will be disclosed below.
(21) L1 CSI FB.
(22) HARQ FB.
(23) L2 RLC FB.
(24) ROHC FB.
(25) HARQ data retransmission.
(26) RLC data retransmission.
(27) PDCP data retransmission.
(28) PDCP status report retransmission.
(29) A combination of (21) to (28).

Thus, the S-gNB can receive, from relay UE #1, the UL transmission related to the retransmission of the communication between the remote UE and the S-gNB.

The remote UE may continue to perform, to the S-gNB, UL transmission on Uu related to the communication between the remote UE and the S-gNB. The transmission may be performed, for example, in a case where the RLC is retransmitted between the remote UE and the S-gNB. Four specific examples of the transmission on Uu related to the communication between the remote UE and the S-gNB will be disclosed below.
(31) L2 RLC FB.
(32) RLC data retransmission.
(33) ROHC FB.
(34) A combination of (31) to (33).

Thus, for example, even in a case where the RLC is retransmitted between the remote UE and the S-gNB, the S-gNB can receive, from the remote UE, the UL transmission on Uu related to the communication between the remote UE and the S-gNB.

In addition, thus, for example, even in a case where the remote UE starts transmitting the UL data to the T-gNB, the S-gNB can receive, from the remote UE, the UL transmission related to the communication between the remote UE and the S-gNB. Therefore, the communication between the remote UE and the S-gNB is continued. In the I-DAPS HO of the remote UE via the relay UE, data communication latency can be reduced, and the robustness of the HO process can be improved.

### Fourth Modification of First Embodiment.

In HO in a case where the UE is directly connected to the gNB, HO failure is managed by a timer. The timer is started when the RRC configuration change is received, and is stopped when the RA process is completed. When the timer expires, in other words, in a case where the RA process is not completed within the timer, the HO fails, and RRC reestablishment is performed. However, in the HO of the remote UE via the relay UE, when connection to the T-gNB is made via the relay UE, the RA process is not performed on the T-gNB. Non Patent Literatures 1 to 27 and other documents do not disclose any process in such a case.

Here, a method for solving such a problem will be disclosed.

In order to solve the above problem, the remote UE manages HO failure with a timer. The timer is started when the RRC configuration change is received from the S-gNB. The timer is stopped when PC5-RRC connection to the relay UE is completed. As another method, the timer may be stopped when the PC5-RRC connection to the relay UE is completed and information on the RRC-connected state to the T-gNB is received from the relay UE. As another method, the timer may be stopped when a notification of RRC configuration complete is performed to the T-gNB. As another method, the timer may be stopped when an HO source communication configuration release message is received from the T-gNB.

When the timer expires, an RRC reestablishment process is preferably performed on the gNB connected to the relay UE. Regarding a case of the I-DAPS HO, in a case where the S-gNB is connected when the timer expires, reverting back to an S-gNB configuration may be performed and the SRB of the S-gNB may be activated for control plane (CP) signaling. As another method regarding the case of the I-DAPS HO, in a case where there is no SL RLE between the remote UE and the relay UE and there is no RLE between the relay UE and the S-gNB when the timer expires, reverting back to the S-gNB configuration may be performed, and the SRB of the S-gNB may be activated for CP signaling.

Thus, even in a case where the RA process is not performed on the T-gNB in the HO of the remote UE via the relay UE, an HO failure process can be performed. Therefore, an HO failure process due to a radio wave propagation environment or the like can be performed. In addition, it is possible to reduce malfunction in the HO of the remote UE via the relay UE.

### Second Embodiment.

In HO of a remote UE via a relay UE, improvement of robustness is required. As a method for improving robustness in HO, there is conditional HO (CHO) (see Non Patent Literature 19 (3GPP TS 38.331)). However, this is a method in a case where a UE is directly connected to a gNB, and there is no disclosure of a case where the UE is connected to the gNB via a relay UE.

The second embodiment discloses a method for improving robustness in HO of the remote UE via the relay UE.

In order to solve the above problem, a communication system according to the second embodiment provides CHO in the HO of the remote UE via the relay UE. Hereinafter, the CHO in the HO of the remote UE via the relay UE is sometimes referred to as I-CHO. A detailed method will be disclosed. An S-gNB configures one or a plurality of gNBs to be candidates for an HO destination. The S-gNB may configure one or a plurality of cells configured by one or a plurality of gNBs to be candidates for the HO destination. The cells to be candidates may be cells configured by different gNBs.

The cells to be candidates may be cells directly connectable to the remote UE. One or a plurality of cells directly connectable to the remote UE may be configured as candidates for the HO destination. A cell satisfying predetermined reception quality (including received power and SINR) on DL may be employed as a directly connectable cell. The predetermined DL reception quality may be determined in advance in a standard, or may be broadcast by the gNB or may be provided by the gNB individually. Thus, a cell connectable without via the relay UE can be employed as a candidate for the HO destination. In addition, it is possible to avoid complication of an HO process.

The cells to be candidates may be cells to be connected to the relay UE. A cell to be connected to one or a plurality of relay UEs may be configured as a candidate for the HO destination. A cell to which the relay UE satisfying a predetermined reception quality on the SL is connected may be a cell connectable via the relay UE. Thus, a cell connectable via the relay UE can be employed as a candidate for the HO destination. In addition, it is possible to enhance the coverage of the cell via the relay UE.

The cells to be candidates may be cells to which one or a plurality of relay UEs, to which the remote UE is PC5-connected in advance, are connected. A cell to which, among one or a plurality of relay UEs to which the remote UE is PC5-connected in advance, a relay UE satisfying a predetermined reception quality on the SL is connected may be employed as a cell connectable via the relay UE. Thus, a cell connectable via the relay UE to which the remote UE is PC5-connected in advance can be employed as a candidate for the HO destination. The robustness of the HO can be improved.

The cells disclosed above may be combined as cells to be candidates.

A configuration of the cells to be candidates disclosed above may be statically determined in advance in a standard or the like. Alternatively, the cells to be candidates disclosed above may be enabled to be configured. The S-gNB may perform the configuration. Alternatively, the AMF may perform the configuration and notify the S-gNB of the configuration. When the cells to be candidates disclosed above are enabled to be configured, it is possible to flexibly configure the CHO depending on the presence of the relay UE and the gNB, the positional relationship thereof, a radio wave propagation environment, and the like.

The S-gNB configures DL measurement and/or SL measurement for the remote UE. The remote UE notifies the S-gNB of a measurement result depending on the configuration. The S-gNB selects one or a plurality of relay UEs to be candidates for a connection destination of the remote UE by using a DL measurement result and/or an SL measurement result received from the remote UE. The S-gNB preferably employs one or a plurality of gNBs to which the one or the plurality of relay UEs thus selected are connected as candidates for the HO destination. The S-gNB can select one or a plurality of cells to be candidates for the HO destination.

Thus, one or a plurality of cells can be configured as candidates for the HO destination for the remote UE.

It is preferable to appropriately apply the method disclosed in the first embodiment as a method in which the S-gNB recognizes the gNB to which the relay UE to be a candidate for the connection destination of the remote UE is connected.

The S-gNB notifies one or a plurality of gNBs to be candidates for the HO destination (T-gNBs) of an HO request of the remote UE. The notification to each T-gNB may be performed by using Xn signaling. An HO request message may be used.

A signaling method in a case where the T-gNB is connected to a plurality of relay UEs will be disclosed. The S-gNB notifies the T-gNB of a message for each relay UE. Thus, it is possible to perform a notification of the message for each relay UE to be a candidate for the connection destination of the remote UE. In addition, a notification of messages different for each relay UE can be performed.

As another method, the S-gNB notifies the T-gNB of a message for each gNB. Specifically, the S-gNB notifies the T-gNB of information about one or a plurality of relay UEs to which the gNB is to be connected by including the information in one message. Thus, the amount of signaling can be reduced.

The S-gNB may notify the T-gNB of a message for each cell. Specifically, the S-gNB notifies the T-gNB of information, for each cell, about one or a plurality of relay UEs to which the cell is to be connected by including the information in one message. In this method, the T-gNB is notified of as many messages as the number of target cells. Thus, it is possible to perform a notification of messages different for each cell to which the relay UE is to be connected.

The T-gNB as a candidate for the HO destination notifies the relay UE to be a candidate for the connection destination of a relay request message. Specifically, the T-gNB as a candidate for the HO destination preferably notifies the relay UE to be a candidate for the connection destination of the relay request message by using information about the relay UE to be a candidate for the connection destination acquired from the S-gNB. The relay request message may include information about the remote UE as an HO target. As the information about the remote UE, for example, information for identifying the remote UE and a context of the remote UE may be used. The relay request message may include configuration information about the PC5 communication between the remote UE and the relay UE. Regarding the notification of the relay request message, methods disclosed in the first embodiment and the first modification of the first embodiment may be appropriately applied.

The relay UE to be a candidate for the connection destination that has received the relay request message from the T-gNB as a candidate for the HO destination may perform a configuration for relay between the remote UE to be the HO target and the T-gNB as a candidate for the HO destination by using the information included in the message. The relay UE to be a candidate for the connection destination notifies the T-gNB as a candidate for the HO destination to be connected of a relay request response. In a case where the configuration for the relay is completed, a notification of an acknowledgment is preferably performed. In a case where the configuration for the relay is not completed or a case where the configuration for the relay is rejected, a notification of a negative acknowledgment is preferably performed. The negative acknowledgment may include cause information. Thus, the T-gNB as a candidate for the HO destination can recognize whether the relay UE to be a candidate for the connection destination has performed a relay configuration for the remote UE to be the HO target.

The T-gNB as a candidate for the HO destination notifies the S-gNB of an HO request response. Regarding a method for performing a notification of an HO request response message, it is preferable to appropriately apply the method for performing a notification of the HO request described above. Regarding the information to be included in the HO request response, it is preferable to appropriately apply the information disclosed in the first embodiment.

The S-gNB may again configure the T-gNB to be a candidate for the HO destination. At that time, selection may be performed from among the T-gNBs from which an acknowledgment of the HO request to the T-gNB has been received. Thus, the S-gNB can more flexibly configure the T-gNB as a candidate for the HO destination to the remote UE in consideration of the situation of the T-gNB or relay UE #2 connected to the T-gNB.

The S-gNB configures, for the remote UE caused to perform the HO, I-CHO execution conditions of one or a plurality of T-gNBs to be candidates for the HO destination. Specifically, the S-gNB notifies the remote UE of I-CHO execution condition configurations. After receiving the HO request responses from all the T-gNBs which the S-gNB has notified of the HO request, the S-gNB may notify the remote UE of the I-CHO execution condition configurations of the T-gNBs. As another method, after receiving the HO request responses from some of the T-gNBs which the S-gNB has notified of the HO request, the S-gNB may notify the remote UE of the I-CHO execution condition configurations of the T-gNBs. The notification may be performed a plurality of times. The S-gNB may modify or additionally configure the T-gNBs and I-CHO execution conditions of the T-gNBs for the remote UE. The S-gNB may perform a notification of the configuration until receiving an HO success message from the T-gNB.

The remote UE evaluates whether to trigger the I-CHO for each of the T-gNBs depending on the T-gNBs and the I-CHO execution conditions of the T-gNBs received from the S-gNB. The reception quality on the SL from the relay UE connected to the T-gNB may be used to evaluate whether to trigger the I-CHO. For example, the remote UE measures the reception quality on the SL from the relay UE. SL reception quality may be derived by adding a predetermined offset to a measurement result of the reception quality on the SL. The remote UE may trigger the I-CHO in a case where the SL reception quality derived from the measurement result is better than a predetermined SL reception quality threshold.

The predetermined SL reception quality threshold and/or the predetermined offset disclosed above may be included in the configurations of the I-CHO execution conditions. A measurement event for the I-CHO may be provided. The predetermined SL reception quality threshold and/or the predetermined offset may be configured as the measurement event for the I-CHO. The measurement event for the I-CHO may be included as the configurations of the I-CHO execution conditions. Thus, the remote UE can determine to which T-gNB the HO is to be performed by using the SL reception quality from the relay UE connected to the T-gNB as an HO destination.

The remote UE executes HO via the relay UE to, among the T-gNBs as candidates for the HO destination, the T-gNB connected to the relay UE that satisfied an I-CHO triggering condition first. Specifically, the remote UE performs the PC5 connection to the relay UE that satisfied the I-CHO triggering condition first among the T-gNBs as candidates for the HO destination. The remote UE notifies the T-gNB, via the relay UE, of RRCReconfigurationcomplete. Thus, the remote UE performs the RRC connection to the T-gNB connected to the relay UE that satisfied the I-CHO triggering condition first.

As the configurations of the I-CHO execution conditions, information may be included in which the I-CHO execution conditions of the T-gNB to be a candidate for the HO destination are associated. Information about the T-gNB as a candidate for the HO destination may be included as the I-CHO execution condition configuration. Information for identifying the T-gNB may be included as the information about the T-gNB as a candidate for the HO destination. RRC configuration information used for communication with the remote UE may be included as the information about the T-gNB as a candidate for the HO destination.

Information about the relay UE connected to the T-gNB as a candidate for the HO destination may be included as the I-CHO execution condition configuration. A configuration for the PC5 communication between the remote UE and the relay UE may be included as the information about the relay UE. As the configuration for the PC5 communication between the remote UE and the relay UE, the configurations disclosed in the first embodiment and the first modification of the first embodiment may be appropriately applied. Examples of the configuration include the configuration for the PC5 communication from the remote UE to the relay UE and/or the configuration for the PC5 communication from the relay UE to the remote UE and/or information on the DRB configuration between the remote UE and the relay UE. Information for identifying the relay UE may be included as the information about the relay UE.

The S-gNB preferably notifies the remote UE of the I-CHO execution condition configuration of one or a plurality of T-gNBs to be candidates for the HO destination by using RRC signaling. The notification may be performed, for example, by including the I-CHO execution condition configuration in an RRCReconfiguration message. The notification may be performed via relay UE #1. With the use of RRC signaling, for example, a notification of more information can be performed, so that information about a plurality of T-gNBs to be candidates for the HO destination can be included. Thus, the remote UE can receive the I-CHO execution condition configuration of one or a plurality of T-gNBs to be candidates for the HO destination.

The remote UE that has completed the configurations of the I-CHO execution conditions of the T-gNBs received from the S-gNB may notify the S-gNB, via relay UE #1, of an RRCReconfigurationcomplete message. The S-gNB that has received the message can recognize that the remote UE has completed the configurations of the I-CHO execution conditions of the T-gNBs.

The remote UE evaluates the I-CHO execution conditions. As a result of the evaluation of the I-CHO execution conditions by the remote UE, the I-CHO is triggered to the T-gNB connected to the relay UE satisfying the conditions. The remote UE performs a PC5 connection process on the relay UE satisfying the I-CHO execution conditions. In a case where only the relay UE being PC5-connected in advance is employed as the relay UE as a candidate for the connection destination in the I-CHO, the PC5 connection process may be skipped. Thus, an HO processing time can be shortened.

The remote UE notifies the T-gNB as a candidate for the HO destination to which the relay UE is connected, via the relay UE satisfying the I-CHO execution conditions, of an RRC configuration complete message. An RRCReconfigurationcomplete message may be used. The T-gNB that has received the message can recognize that the remote UE has succeeded in the RRC connection via relay UE #2.

The T-gNB that has completed the RRC connection to the remote UE notifies the S-gNB of HO success. The notification may be performed by using an HO success message. As information to be included in the HO success message, information about the remote UE as the HO target, information indicating via which relay UE the connection has been established, information about the PC5 communication between the remote UE and the relay UE, and the like may be included. Thus, the S-gNB can recognize when the remote UE satisfied the I-CHO execution conditions and completed the connection to the T-gNB via the relay UE.

A method will be disclosed in which the remote UE stops communication with the S-gNB via the relay UE. In a case of detecting the relay UE satisfying the I-CHO execution conditions, the remote UE may stop the communication with the S-gNB. Thus, a communication process with the S-gNB can be stopped at an early stage, and the power consumption of the remote UE can be reduced.

As another method, in a case of completing the PC5 connection with the relay UE satisfying the I-CHO execution conditions, the remote UE may stop the communication with the S-gNB. Thus, communication with the S-gNB can be continued even if the PC5 connection with the relay UE fails. In a case where the remote UE fails in the PC5 connection with the relay UE, the PC5 connection process may be performed on the same relay UE again. Alternatively, in the case where the remote UE fails in the PC5 connection with the relay UE, it is preferable to continuously perform or perform again the I-CHO execution condition evaluation, and subsequently perform the PC5 connection process with the relay UE satisfying the I-CHO execution conditions. Thus, the PC5 communication with the relay UE can be securely performed.

As another method, in a case of completing the connection with the T-gNB via the relay UE satisfying the I-CHO execution conditions, the remote UE may stop the communication with the S-gNB. A timing at which it is determined that the connection with the T-gNB is completed may be a time point when the notification of the RRCReconfigurationcomplete message is completed. In a case where the notification of the RRCReconfigurationcomplete message has failed, the notification of the RRC configuration complete message may be performed again to the same T-gNB. It is possible to connect to the same T-gNB when the notification is completed. Alternatively, the I-CHO execution condition evaluation may be continuously performed or performed again, and subsequently the notification of the RRC configuration complete message may be performed to the T-gNB via the relay UE satisfying the I-CHO execution conditions. It is possible to connect to the T-gNB when the notification is completed. Thus, the communication with the S-gNB can be stopped after the remote UE is securely connected to the T-gNB as the HO destination. In addition, the robustness of the HO process of the remote UE via the relay UE can be improved.

A method will be disclosed in which the S-gNB stops communication with the remote UE via the relay UE. In a case of receiving the HO success message from the T-gNB, the S-gNB stops transmission and reception to and from the remote UE via the relay UE. The configuration for the communication with the remote UE may be released. As a method in which the S-gNB stops communication with the remote UE, the method in the I-DAPS HO disclosed in the second modification of the first embodiment may be appropriately applied. Thus, a communication process with the S-gNB can be stopped, unnecessary processes performed by the S-gNB can be reduced, and power consumption can be reduced.

A method will be disclosed in which relay UE #1 stops a relay process for communication between the remote UE and the S-gNB. In a case of receiving the HO success message from the T-gNB, the S-gNB notifies relay UE #1 of a message for stopping transmission and reception between the remote UE and the S-gNB. An HO success message may be used as the message. Relay UE #1 that has received the message stops transmission and reception between the remote UE and the S-gNB. The configuration for the communication between the remote UE and the S-gNB may be released. As a method in which relay UE #1 stops communication between the remote UE and the S-gNB, the method in the I-DAPS HO disclosed in the second modification of the first embodiment may be appropriately applied. Thus, unnecessary processes performed by the relay UE can be reduced, and power consumption can be reduced.

A method for transferring data in the I-CHO of the remote UE via the relay UE will be disclosed. In a case of receiving the HO success message from the T-gNB, the S-gNB transfers an SN status to the T-gNB. An SN Status Transfer message may be used for the transfer. UL data information that needs to be transmitted again from the remote UE to the T-gNB may be included as the SN status. DL data information to be newly transmitted from the T-gNB to the remote UE may be included as the SN status. As the UL data information and the DL data information, information on PDCP SN to be added to data may be used. Thus, the T-gNB can recognize which data should be transmitted and received to and from the remote UE.

After transferring the SN status, the S-gNB transfers data to the T-gNB. The data may be DL data. In a case where the S-gNB holds DL data that cannot yet be transmitted to the remote UE, the S-gNB may transfer the DL data. The S-gNB may transfer DL data received from the UPF after transferring the SN status.

The T-gNB transmits the data transferred from the S-gNB to the relay UE. The relay UE may be a relay UE as a candidate for the connection destination of the remote UE. The T-gNB may transmit the data transferred from the S-gNB to the relay UE before receiving the RRC configuration complete message from the remote UE. Thus, the T-gNB can perform data transmission to the relay UE at an earlier stage. Relay UE #2 may transmit the data received from the T-gNB to the remote UE after completing the PC5 connection to the remote UE. Thus, the relay UE can perform data transmission to the remote UE at an earlier stage. In addition, it is possible to perform data transmission from the T-gNB to the remote UE at an earlier stage.

The T-gNB may transmit the data transferred from the S-gNB to the remote UE after receiving the RRC configuration complete message from the remote UE. The data may be transmitted via relay UE #2. The RRC configuration complete message may be RRCReconfigurationcomplete. By transmitting data after completion of the RRC connection between the remote UE and the T-gNB, it is possible to start data transmission from the T-gNB to the remote UE without fail.

By a path switch process from the S-gNB to the T-gNB between the T-gNB and a CN node, the UPF starts DL data transmission to the T-gNB. The T-gNB preferably transmits DL data from the UPF to the remote UE.

The remote UE performs the PC5 connection to relay UE #2 satisfying the I-CHO execution conditions, and then transmits data to relay UE #2. The remote UE may transmit the data to relay UE #2 before transmitting the RRC configuration complete message to the T-gNB. Thus, the remote UE can perform data transmission to relay UE #2 at an earlier stage. In a case where relay UE #2 is connected to the T-gNB, relay UE #2 may transmit the data received from the remote UE to the T-gNB. Thus, relay UE #2 can perform data transmission to the T-gNB at an earlier stage. In addition, it is possible to perform data transmission from the remote UE to the T-gNB at an earlier stage.

The remote UE may transmit data to the T-gNB after transmitting the RRC configuration complete message to the T-gNB. The data may be transmitted via relay UE #2. The RRC configuration complete message may be RRCReconfigurationcomplete. By transmitting data after completion of the RRC connection between the remote UE and the T-gNB, it is possible to perform data transmission from the remote UE to the T-gNB without fail.

The S-gNB may transfer data to one or a plurality of T-gNBs as candidates for the HO destination before receiving the HO success message from the T-gNB. The start of the data transfer performed by the S-gNB before receiving the HO success message from the T-gNB may be triggered in a case where the S-gNB notifies the remote UE as the HO target of the I-CHO execution condition configuration. Not limited to the notification of the I-CHO execution condition configuration, an I-CHO instruction may be used as a trigger for starting the data transfer. Alternatively, the start of the data transfer may be triggered in a case where the S-gNB receives the RRC configuration complete message for the I-CHO execution condition configuration from the remote UE.

A method for transferring data before receiving the HO success message from the T-gNB will be disclosed. The S-gNB transfers an SN status to one or a plurality of T-gNBs as candidates for the HO destination before receiving the HO success message from the T-gNB. SN Status Transfer may be used for the transfer. Early Status Transfer may be used. SN and/or Hyper Frame Number (HFN) information of DL data to be transferred first to one or a plurality of T-gNBs as candidates for the HO destination may be included as the SN status.

After transferring the SN status, the S-gNB transfers data to the T-gNB. DL data may be transferred as the data. In a case where the S-gNB holds DL data that cannot yet be transmitted to the remote UE, the S-gNB may transfer the DL data. The S-gNB may transfer DL data received from the UPF after transferring the SN status.

The S-gNB may perform transmission of Early Status Transfer and transfer of data to one T-gNB as a candidate for the HO destination or some of a plurality of T-gNBs as candidates for the HO destination. For example, two relay UEs that are likely to be connection destinations in HO may be selected, and the transmission of Early Status Transfer and the transfer of the data may be performed only to the T-gNBs connected to the two relay UEs. In that case, the amount of signaling and the amount of data to be transferred can be reduced.

Thus, the S-gNB can transfer data to one or a plurality of T-gNBs as candidates for the HO destination at an earlier stage. Therefore, if the T-gNB to which the data has transferred is employed as the HO destination, the data has already been transferred to the T-gNB, so that the T-gNB can transmit the data to the remote UE at an early stage.

The S-gNB does not stop allocating the PDCP SN to the DL data until transmitting the SN status to the T-gNB from which the HO success message has been received. In addition, the S-gNB does not stop transmitting the DL data to the remote UE until the HO success message is received. Furthermore, the S-gNB need not stop receiving the UL data from the remote UE until the HO success message is received. Thus, the remote UE can continue to perform transmission and reception to and from the S-gNB until the remote UE determines the relay UE satisfying the I-CHO execution conditions and starts the PC5 connection to the relay UE.

The S-gNB that has received the HO success message from the T-gNB notifies, among the T-gNBs that have been notified of the HO request message as candidates for the HO destination, T-gNBs other than the T-gNB determined as the HO destination of cancel of the HO. The S-gNB may notify the T-gNB determined as the HO destination of cancel of the HO to the cells as candidates for the HO destination other than a cell determined as the HO destination. The notification may be performed by using an HO cancel message.

The HO cancel message may include information about the remote UE to be the HO target. Information for identifying the remote UE may be included as the information about the remote UE. The HO cancel message may include information about the T-gNBs (which may be the cells) to be targets of the cancel of the HO. Information for identifying the T-gNBs (which may be the cells) may be included as the information about the T-gNBs (which may be the cells). The HO cancel message may include information about the relay UE (relay UE #2) as a connection destination. Information for identifying relay UE #2 may be included as the information about relay UE #2. The HO cancel message may include information about the T-gNB (which may be the cell) to be connected to the relay UE (relay UE #2) as the connection destination. Information for identifying the T-gNB (which may be the cell) may be included as the information about the T-gNB.

Thus, by receiving the HO cancel message, the T-gNBs that are employed as candidates for the HO destination but are not employed as the HO destination and the T-gNBs constituting the cells as candidates for the HO destination other than the cell determined as the HO destination can recognize the cancel of the HO and release the configuration for the HO. In addition, it is possible to notify the relay UEs of the HO cancel, which will be disclosed later.

The T-gNBs that have received the HO cancel notify the relay UEs as candidates for the connection destination other than the relay UE (relay UE #2) as the connection destination of the HO cancel. That is, the T-gNBs notify the relay UEs as candidates for the connection destination to which respective T-gNBs are connected of the HO cancel. RRC signaling may be used for the notification. A new RRC message for notifying the relay UEs of the HO cancel may be provided. For example, the RRC message may be an HO cancel message.

The HO cancel message to the relay UEs may include information about the remote UE to be the HO target. Information for identifying the remote UE may be included as the information about the remote UE. The HO cancel message to the relay UEs may include information about the T-gNBs (which may be the cells) to be targets of the cancel of the HO. Information for identifying the T-gNBs (which may be the cells) may be included as the information about the T-gNBs (which may be the cells). The HO cancel message to the relay UEs may include information about the relay UE (relay UE #2) as the connection destination. Information for identifying relay UE #2 may be included as the information about relay UE #2. The HO cancel message to the relay UEs may include information about the T-gNB (which may be the cell) to be connected to the relay UE (relay UE #2) as the connection destination. Information for identifying the T-gNB (which may be the cell) may be included as the information about the T-gNB.

Information for identifying the C-IHO may be included. That is, information for identifying the C-IHO may be included in the relay request message to the relay UEs as candidates for the connection destination in the I-CHO. In addition, the HO cancel message to the relay UEs as candidates for the connection destination may include information for identifying the C-IHO to be canceled. As the information to be included in the HO cancel message, the information for identifying the C-IHO included in the relay request message is preferably used. Thus, the relay UEs as candidates for the connection destination can recognize which I-CHO to be cancelled among the I-CHOs indicated by the information included in the HO request message received from the T-gNB.

As described above, not the S-gNB but the T-gNB notifies the relay UEs as candidates for the connection destination other than the relay UE as the connection destination of the HO cancel, and thereby the relay UEs as candidates for the connection destination can receive the HO cancel.

The relay UEs as candidates for the connection destination that have received the HO cancel message cancel the I-CHO configuration of the remote UE. The relay UEs may cancel the relay request message received from the T-gNB. The relay UEs may cancel a relay configuration by the relay request message received from the T-gNB. The relay UEs may release the information about the remote UE to be the HO target or the configuration for the PC5 communication with the remote UE.

Thus, it is possible to release the configuration for the I-CHO of the relay UEs that are employed as candidates for the connection destination but are not employed as the connection destination. In addition, unnecessary consumption of radio resources of the relay UEs can be avoided.

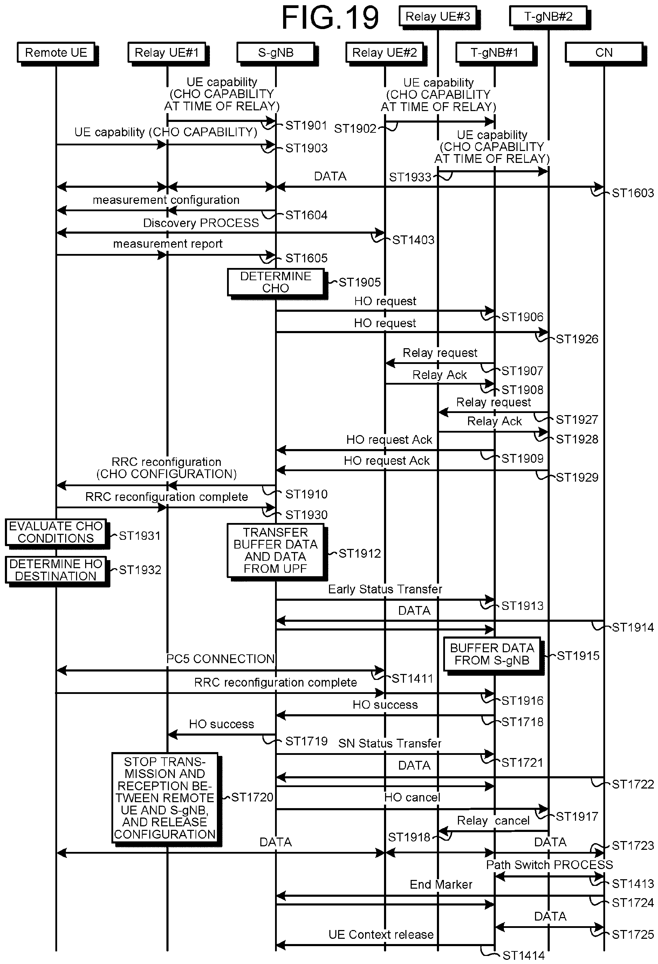

FIG. 19 is a sequence diagram illustrating an example of a method of I-CHO in the second embodiment. In FIG. 19, steps common to those in FIG. 16 are denoted by the same step numbers as those therein, and a common description will be omitted. In steps ST1901, ST1902, ST1903, and ST1933, a notification of I-CHO capability is performed. That is, in step ST1901, relay UE #1 notifies the S-gNB of the I-CHO capability. In step ST1902, relay UE #2 notifies T-gNB #1 of the I-CHO capability. In step ST1933, relay UE #3 notifies T-gNB #2 of the I-CHO capability. In step ST1903, the remote UE notifies the S-gNB, via relay UE #1, of the I-CHO capability. It is preferable to appropriately apply, as a notification method of these, the method disclosed in the second modification of the first embodiment. Consequently, the S-gNB or the CN can recognize whether the remote UE or the relay UE can perform the I-CHO.

In step ST1905, the S-gNB determines the I-CHO for the remote UE. At that time, the S-gNB determines one or a plurality of relay UEs as candidates for the connection destination in the I-CHO and one or a plurality of T-gNBs as candidates for the HO destination. In steps ST1906 and ST1926, the S-gNB notifies the determined T-gNBs as candidates for the HO destination of the HO request. In the example in FIG. 19, the S-gNB determines T-gNB #1 and T-gNB #2 as candidates for the HO destination in step ST1905, and notifies T-gNB #1 and T-gNB #2 of the HO request message in steps ST1906 and ST1926, respectively. The message may include information indicating that it is a CHO request. In steps ST1907 and ST1927, the T-gNBs as candidates for the HO destination, that is, T-gNB #1 and T-gNB #2 notify the relay UEs as candidates for the connection destination to which T-gNB #1 and T-gNB #2 are connected of the relay request. Specifically, T-gNB #1 notifies relay UE #2 of the relay request message in step ST1907, and T-gNB #2 notifies relay UE #3 of the relay request message in step ST1927. The relay request message may include information about a CHO configuration. Thus, relay UE #2 and relay UE #3 can recognize application of the CHO to the remote UE and the configuration information of the CHO. In steps ST1908 and ST1928, respective relay UEs as candidates for the connection destination notify the T-gNBs to which the relay UEs are connected of a relay request response. Relay UE #2 notifies T-gNB #1 of the relay request response, and relay UE #3 notifies T-gNB #2 of the relay request response. In steps ST1909 and ST1929, respective T-gNBs as candidates for the HO destination notify the S-gNB of the HO request response. T-gNB #1 notifies the S-gNB of the HO request response in step ST1909, and T-gNB #2 notifies the S-gNB of the HO request response in step ST1929. It is preferable to appropriately apply, as respective methods for performing a notification of the HO request message, the relay request message, a relay request response message, and the HO request response message, the methods disclosed in the first embodiment and the first modification of the first embodiment.

The S-gNB that has received the HO request response from each of the T-gNBs as candidates for the HO destination notifies the remote UE of the CHO execution condition configuration in step ST1910. The S-gNB performs the notification of the configuration via relay UE #1. The S-gNB performs the notification of the configuration, for example, by an RRCReconfiguration message of RRC signaling. The information as disclosed above is preferably included as the CHO execution condition configuration in the message. For example, information about the relay UE as a connection destination in the CHO, information about the T-gNB as a candidate for the HO destination connected to the relay UE, and information about each of the CHO execution conditions are preferably included. Consequently, the remote UE can evaluate the CHO execution conditions.

In step ST1930, the remote UE may notify the S-gNB of an RRC configuration complete message. The remote UE performs the notification of the message via relay UE #1. Thus, the S-gNB can recognize that the remote UE has performed the CHO execution condition configuration. In addition, the occurrence of malfunction of the CHO can be reduced.

The S-gNB may perform data transfer to one or a plurality of T-gNBs among the T-gNBs as candidates for the HO destination before receiving the HO success message from the T-gNB. For example, the data transfer may be performed to one T-gNB. By narrowing down the number of transfer destinations to one, the amount of data to be transferred can be reduced. In step ST1912, the S-gNB determines the T-gNB as a destination of the data transfer. In the example in FIG. 19, T-gNB #1 is determined as the destination of the data transfer. In step ST1913, the S-gNB transfers an SN status to T-gNB #1 as the destination of the data transfer. Early Status Transfer may be used for the transfer. In step ST1914, the S-gNB transfers data held by the buffer and data from the UPF to T-gNB #1 as the destination of the data transfer. The data may be DL data. As a transfer method of these, the method disclosed in the second modification of the first embodiment may be appropriately applied. In step ST1915, T-gNB #1 buffers the data transferred from the S-gNB.

The T-gNB may transfer the data transferred from the S-gNB to the relay UE to be a candidate for the connection destination of the remote UE. For example, in the example in FIG. 19, T-gNB #1 may perform the transfer to relay UE #2. Relay UE #2 preferably buffers the data transferred from T-gNB #1. Thus, in a case where relay UE #2 is employed as the relay UE as a connection destination of the remote UE, relay UE #2 can transmit the data received from T-gNB #1 to the remote UE at an early stage.

In step ST1931, the remote UE evaluates the I-CHO execution conditions. In step ST1932, the remote UE determines the relay UE that satisfies the CHO execution conditions as the relay UE as the connection destination. In addition, the remote UE determines the T-gNB connected to the relay UE as the T-gNB as the HO destination. Here, relay UE #2 is determined as the connection destination, and T-gNB #1 is determined as the HO destination. The remote UE that has determined the HO destination may stop the communication with the S-gNB. The configuration for the communication may be released. The communication with relay UE #1 for communication with the S-gNB may be stopped. The configuration for the communication may be released.

The remote UE that has determined relay UE #2 as the connection destination in step ST1932 establishes the PC5 connection with relay UE #2 in step ST1411. In step ST1916, the remote UE notifies T-gNB #1 determined as the HO destination, via relay UE #2, of an HO configuration change complete message. T-gNB #1 that has received the HO configuration change complete message from the remote UE notifies the S-gNB of an HO success message in step ST1718. In step ST1719, the S-gNB notifies relay UE #1 of the HO source relay configuration release information. The notification may be performed by using an HO success message. That is, the S-gNB may include the HO source relay configuration release information in the HO success message and notify relay UE #1 of the HO success message. In step ST1720, relay UE #1 stops transmission and reception between the remote UE and the S-gNB, and releases the configuration. Regarding these processes, it is preferable to appropriately apply the method disclosed in the second modification of the first embodiment.

The S-gNB that has received the HO success message from T-gNB #1 in step ST1718 notifies the T-gNB connected to the relay UE as a candidate for the connection destination that has not been determined as the relay UE as the connection destination of an HO cancel message in step ST1917. In the example in FIG. 19, T-gNB #2 is notified of the HO cancel message. In a case where the data has been transferred from the S-gNB in advance, T-gNB #2 that has received the HO cancel message may discard the transferred data. In step ST1918, T-gNB #2 notifies the relay UE as a candidate for the connection destination that has not been determined as the connection destination and is connected to T-gNB #2, that is, relay UE #3, of a relay cancel message. Thus, the relay UE as a candidate for the connection destination that has not been determined as the connection destination (here, relay UE #3) can recognize that the remote UE has been connected to another relay UE. In addition, it is possible to recognize that relay UE #3 has not been employed as the relay UE as the connection destination in the I-CHO. Relay UE #3 that has received the relay cancel message releases the I-CHO configuration. In a case where the data has been transferred from T-gNB #2 in advance, relay UE #3 that has received the relay cancel message may discard the transferred data. Thus, it is possible to reduce unnecessary consumption of radio resources in relay UE #3 that has not been employed as the connection destination.

Thus, in the HO of the remote UE via the relay UE, a plurality of relay UEs as connection destinations can be configured, and a plurality of T-gNBs as HO destinations can be configured. In other words, it is possible to perform I-CHO that involves communication between the remote UE and the gNB via the relay UE. In the HO of the remote UE via the relay UE, the relay UE as a connection destination and the T-gNB as an HO destination are determined from a plurality of options, so that robustness in the HO process can be improved.

### Third Embodiment.

There may be a case where an HO process of a relay UE is performed by movement of the relay UE or the like in a state where the relay UE is connected to a remote UE. Regarding how to perform a connection process between the remote UE and an NW in a case where such HO of the relay UE occurs while the remote UE communicates with the NW via the relay UE, there is no disclosure in Non Patent Literatures 1 to 27 and other documents.

The third embodiment discloses a method for performing a connection process between the remote UE and the NW involved with HO of the relay UE.

In a communication system according to the third embodiment, in a case where the relay UE is connected to the remote UE, the relay UE does not perform an HO process even when movement or the like occurs. That is, the relay UE being PC5-connected to the remote UE need not perform the HO process. The relay UE performing a relay process of communication between the remote UE and a gNB need not perform the HO process. The relay UE declares a radio link failure (RLF) when quality of communication with the gNB deteriorates due to movement, for example. By the RLF, before releasing the RRC connection with the gNB, the relay UE performs a cell selection or cell reselection process to detect a connectable cell, and performs an RRC establishment process on the cell. The relay UE that has failed in the cell detection within a predetermined timer releases the RRC connection with the gNB. In addition, the relay UE performs cell selection or cell reselection again, performs the RRC establishment process on the detected cell, and performs the RRC connection. RRCestablishment may be executed as the RRC establishment process. Thus, the relay UE can be connected to the gNB again without performing HO.

In a case where the relay UE has declared RLF or has performed release of RRC connection, the remote UE releases the RRC connection with the gNB connected via the relay UE. The relay UE may notify the remote UE of the RLF or the release of the RRC connection with the gNB. The remote UE that has received the notification can recognize that the relay UE has declared the RLF or has performed the release of the RRC connection with the gNB. Thus, the remote UE can release the RRC connection with the gNB connected via the relay UE.

The remote UE may maintain an RRC-connected state for a predetermined period after receiving, from the relay UE, the notification of the RLF or the release of the RRC connection with the gNB. Thus, in a case where the relay UE returns to the RRC-connected state with the gNB previously connected during the predetermined period, the remote UE can maintain the connected state with the gNB. The predetermined period may be managed by a timer. As a release process of the RRC connection with the gNB connected via the relay UE, the remote UE may reset or release a buffer and a protocol used for communication with the gNB. Consequently, it is possible to avoid unnecessary consumption of radio resources in the remote UE.

In a case where the gNB connected to the remote UE via the relay UE determines that the RRC connection with the relay UE has been released, the gNB may release the RRC connection with the remote UE. The determination of release of the RRC connection with the relay UE may be made in a case where communication does not occur for a predetermined period. The predetermined period may be managed by a timer. As a release process of the RRC connection with the remote UE, the gNB may reset or release a buffer and a protocol used for communication with the remote UE. Consequently, it is possible to avoid unnecessary consumption of radio resources in the gNB.

After the relay UE is connected to the gNB again, the remote UE may perform the RRC establishment process on the gNB. The relay UE may notify the remote UE of an RRC state after establishing the RRC connection with the gNB. Consequently, the remote UE can recognize whether the relay UE has established the RRC connection with the gNB. Thus, the remote UE can communicate with the gNB again via the relay UE.

Regarding the method for performing a connection process between the remote UE and the NW involved with HO of the relay UE, another method will be disclosed. HO between gNBs is enabled even in a case where the relay UE is connected to the remote UE. That is, the relay UE may perform the HO between gNBs. The relay UE being PC5-connected to the remote UE may perform the HO process. The relay UE performing a relay process of communication between the remote UE and the gNB may perform the HO process.

A process of the remote UE in a case where the relay UE performs HO will be disclosed. The remote UE performs the HO to the gNB as an HO destination of the relay UE. The remote UE may change a gNB to be connected to the gNB as the HO destination of the relay UE. The remote UE preferably performs the HO together with the HO of the relay UE. In the case of the HO of the relay UE, the HO of the remote UE may be permitted only to the gNB as the HO destination of the relay UE. These processes may be limited to a case where the remote UE is connected to the gNB via the relay UE.

A method will be disclosed in which the remote UE performs HO to the gNB as the HO destination of the relay UE.

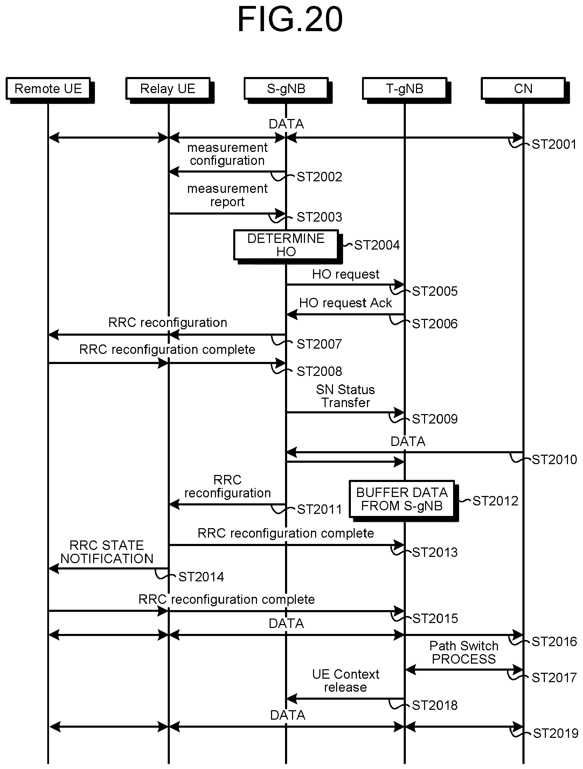

FIG. 20 is a sequence diagram illustrating an example of a method in which the remote UE performs HO to the gNB as the HO destination of the relay UE in the third embodiment. In step ST2001, the remote UE performs data communication with the S-gNB and the CN via the relay UE.

In step ST2002, the S-gNB notifies the relay UE of a measurement configuration. In step ST2003, the S-gNB receives a measurement report from the relay UE. In step ST2004, the S-gNB determines HO of the relay UE by using, for example, the measurement report from the relay UE. In step ST2005, the S-gNB notifies the T-gNB of an HO request of the relay UE. The notification may be performed by using an HO request message. The S-gNB may notify the T-gNB of an HO request of the remote UE together with the HO request message of the relay UE, or may include the HO request of the remote UE in the HO request message of the relay UE to notify the T-gNB thereof. Thus, the T-gNB can recognize that the HO request of the remote UE has been made together with the HO request of the relay UE.

The T-gNB that has received the HO request of the relay UE and the HO request of the remote UE performs admission control of the relay UE and admission control of the remote UE. The T-gNB performs an RRC configuration for the relay UE and the remote UE. In step ST2006, the T-gNB notifies the S-gNB of an HO request response message of the relay UE. The HO request response message of the relay UE may include the RRC configuration for the relay UE. The T-gNB performs a notification of the HO request response of the remote UE together with the HO request response message to the relay UE, or by including the HO request response of the remote UE in the HO request response message to the relay UE. The RRC configuration of the remote UE may be included in the HO request response of the remote UE.

In step ST2007, the S-gNB notifies the remote UE of an RRC message for changing the RRC configuration (which may be an HO instruction) to the T-gNB. The S-gNB performs the notification of the RRC message via the relay UE. An RRCReconfiguration message may be used as the RRC message. The RRC message may include the RRC configuration of the remote UE configured by the T-gNB. Thus, the remote UE can receive the RRC configuration configured by the T-gNB. The remote UE that has received the RRC message and performed the RRC configuration may notify the S-gNB of RRCReconfigurationComplete in step ST2008. The remote UE may perform the notification via the relay UE. Thus, the S-gNB can recognize that the remote UE has performed the RRC configuration.

In step ST2011, the S-gNB notifies the relay UE of an RRC message for changing the RRC configuration to the T-gNB. In a case where the S-gNB has notified the remote UE of the RRC message to the T-gNB in step ST2007 described above, the S-gNB may also notify the relay UE of the RRC message. The RRCReconfiguration may be used as the RRC message. The S-gNB may include the RRC configuration of the relay UE configured by the T-gNB in the RRC message which the relay UE is to be notified of. Thus, the relay UE can receive the RRC configuration configured by the T-gNB.

The relay UE that has received the notification stops communication with the S-gNB. The configuration for the communication with the S-gNB may be released. The relay UE that has stopped the communication with the S-gNB notifies the T-gNB of an RRC configuration change complete message in step ST2013. Thus, the relay UE can notify the T-gNB of RRC configuration complete. The T-gNB can recognize that the relay UE has performed the RRC configuration. Consequently, communication between the relay UE and the T-gNB can be performed.

The remote UE that has received, from the S-gNB, the RRC message for changing the RRC configuration to the T-gNB in step ST2007 described above does not immediately stop the communication with the S-gNB. The remote UE need not stop the communication with the relay UE for the communication with the S-gNB. The remote UE that has received, from the S-gNB, an RRC configuration change message to the T-gNB need not immediately transmit the RRC configuration change complete message regarding the T-gNB. The RRC configuration change complete message may be RRCReconfigurationcomplete.

The relay UE may notify the remote UE of an RRC state message regarding the gNB. Information indicating a change of the gNB to be RRC-connected may be included in the RRC state message regarding the gNB. Information for identifying the gNB after the change may be included. Information for identifying the gNB before the change may be included. The RRC state message may include RRC connection complete regarding the T-gNB. The relay UE that has performed the notification of the RRC configuration complete regarding the T-gNB notifies the remote UE of the RRC state message including the RRC connection complete regarding with the T-gNB in step ST2014.

The remote UE that has received the notification stops the communication with the S-gNB. The remote UE may stop the communication with the relay UE for the communication with the S-gNB. The configuration for the communication with the S-gNB may be released. The remote UE that has stopped the communication with the S-gNB transmits, to the T-gNB via the relay UE, an RRC configuration change complete message in step ST2015. Thus, the remote UE can notify the T-gNB as the HO destination of the relay UE, via the relay UE, of the RRC configuration complete. The T-gNB can recognize that the remote UE has performed the RRC configuration. Consequently, in step ST2016, data communication can be performed between the remote UE and the T-gNB via the relay UE.

In a case where procedures from the reception of the RRC message for changing the RRC configuration to the T-gNB to the success of the notification of the RRC configuration complete message to the T-gNB are not performed within a predetermined time by the remote UE, for example, the remote UE preferably performs an HO failure process on the T-gNB. The predetermined time may be set as a timer. The remote UE resets the timer when the notification of the RRC configuration complete message to the T-gNB succeeds within the timer. The predetermined time may be statically determined in advance in a standard or the like, or the gNB, for example, the S-gNB may notify the remote UE of the predetermined time in advance. RRC signaling may be used for the notification. The timer may be a timer in a case of connecting to the gNB via the relay UE. The timer may be different from a timer in a case of directly connecting to the gNB. In that case, a flexible configuration can be performed. Alternatively, the timer in the case of connecting to the gNB via the relay UE may be the same as the timer in the case of directly connecting to the gNB. In that case, processes can be simplified.

The T-gNB that has received the RRC configuration complete message from the relay UE performs a path switch process for the relay UE between the CN and the T-gNB. Thus, the path switch process from the S-gNB to the T-gNB for the relay UE can be performed. The UPF can transmit, to the T-gNB, DL data directed to the relay UE. Data communication can be performed between the relay UE and the UPF. In addition, the T-gNB that has received the RRC configuration complete message from the remote UE performs a path switch process for the remote UE between the CN and the T-gNB. Thus, the path switch process from the S-gNB to the T-gNB can be performed on the remote UE. The UPF can transmit, to the T-gNB, DL data directed to the remote UE. Data communication can be performed between the remote UE and the UPF.

Another method for performing the path switch process will be disclosed. In a case where the T-gNB has received the RRC configuration complete messages from the relay UE and the remote UE, the T-gNB may perform the path switch process on the relay UE and the remote UE between the CN and the T-gNB. In that case, the T-gNB preferably includes the information about the communication of the relay UE and the information about the communication of the remote UE in a path switch request message to the AMF. The AMF preferably includes the information about the communication of the relay UE and the information about the communication of the remote UE in a path switch request message to the UPF. In addition, the information about the communication of the relay UE and the communication of the remote UE may be included in a path switch request response message from the UPF to the AMF. Furthermore, the information about the communication of the relay UE and the information about the communication of the remote UE may be included in a path switch request response message from the AMF to the T-gNB. The T-gNB notifies the S-gNB of release of a context of the relay UE and release of a context of the remote UE. The notification may be performed by including these in the same message. Consequently, the S-gNB can release the context of the relay UE and release the context of the remote UE.

Thus, the UPF can perform the path switch process to the T-gNB for the communication of the relay UE and the communication of the remote UE. In addition, the UPF can transmit, to the T-gNB, DL data directed to the relay UE and the remote UE. Furthermore, data communication can be performed between the relay UE and the UPF, and data communication can be performed between the remote UE and the UPF. Moreover, thus, the amount of signaling can be reduced.

The example in FIG. 20 discloses a method in which the T-gNB performs the path switch process on the relay UE and the remote UE between the CN and the T-gNB in a case where the T-gNB has received the RRC configuration complete messages from the relay UE and the remote UE. Specifically, in step ST2017, the T-gNB performs the path switch process between the CN and the T-gNB. Consequently, path switching can be performed between the relay UE and the remote UE. In addition, in step ST2019, data communication can be performed between the remote UE, via the relay UE, and the T-gNB and the CN. In step ST2018, the T-gNB notifies the S-gNB of release of UE contexts of the relay UE and the remote UE. Consequently, the release of the UE contexts of the relay UE and the remote UE can be performed.

The S-gNB may perform a transfer process of data in the communication between the remote UE and the UPF to the T-gNB, when the S-gNB notifies the remote UE of the RRC configuration change to the T-gNB or notifies the relay UE of the RRC configuration change to the T-gNB, whichever is later. In addition, the S-gNB may perform a transfer process of data in communication (if any) between the relay UE and the UPF to the T-gNB.

As another method, the S-gNB may perform the transfer process of data in the communication between the remote UE and the UPF to the T-gNB, when the S-gNB notifies the remote UE of the RRC configuration change to the T-gNB or notifies the relay UE of the RRC configuration change to the T-gNB, whichever is earlier. In addition, the S-gNB may perform the transfer process of data in communication (if any) between the relay UE and the UPF for the T-gNB. The above is preferably applied to a case where the remote UE performs HO to the gNB as the HO destination of the relay UE. Thus, it is possible to perform the transfer process of data in the communication between the remote UE and the UPF and the transfer process of data in the communication (if any) between the relay UE and the UPF to the T-gNB at an early stage.

As another method, the S-gNB may perform the transfer process of data in the communication between the remote UE and the UPF to the T-gNB when notifying the remote UE of the RRC configuration change to the T-gNB, or the S-gNB may perform the transfer process of data in the communication (if any) between the relay UE and the UPF to the T-gNB when notifying the relay UE of the RRC configuration change to the T-gNB. The S-gNB preferably transfers data received from the UPF, as well. Thus, it is possible to perform the transfer process of data in the communication between the remote UE and the UPF to the T-gNB at an early stage. In addition, since the transfers are performed at individual timings, malfunction can be reduced.

In the case of FIG. 20, in step ST2009, the S-gNB transfers an SN status to the T-gNB. The SN status may be transferred by using SN Status Transfer. In step ST2010, the S-gNB transfers data to the T-gNB.

In step ST2012, the T-gNB buffers the data transferred from the S-gNB. The T-gNB starts transmission and reception of DL data and/or UL data to and from the remote UE with the reception of the RRC configuration complete message from the relay UE or the reception of the RRC configuration complete message from the remote UE, whichever is later, as a trigger. In the example in FIG. 20, with the reception of the RRC configuration complete message from the remote UE in step ST2015 as a trigger, the T-gNB starts data transmission and reception to and from the remote UE in step ST2016. After starting the data transmission and reception, the T-gNB may transmit the buffered data. Thus, data transmission and reception between the remote UE and the T-gNB via the relay UE can be performed.

In a case where the S-gNB notifies the remote UE of the RRC configuration change before notifying the relay UE of the RRC configuration change, and the SN status transfer and the data transfer to the T-gNB are performed in response to the RRC configuration change which the S-gNB notifies the relay UE of, the S-gNB may perform transmission and reception, to and from the relay UE, of the DL data and/or the UL data to and from the remote UE until performing the data transfer. The relay UE may transmit and receive the DL data and/or the UL data to and from the remote UE.

In a case of receiving the RRC configuration change from the S-gNB, the relay UE preferably stops the DL data transmission to the remote UE. Consequently, the relay UE does not need to transmit, to the S-gNB, feedback information such as a PDCP Status report for the DL data transmission to the remote UE. That is, a feedback process can be simplified. In addition, processes performed by the relay UE can be reduced.

In a case of receiving the RRC configuration change from the S-gNB, the relay UE may stop reception of the UL data from the remote UE. As another method, in the case of receiving the RRC configuration change from the S-gNB, the relay UE may continue the reception of the UL data from the remote UE. The relay UE may buffer the UL data received from the remote UE during the HO. After performing a notification of the RRC configuration complete to the T-gNB, the relay UE transmits the UL data received from the remote UE to the T-gNB. Thus, it is possible to reduce latency until the UL data transmission from the remote UE to the T-gNB can be performed.

In a case where the relay UE performs the DAPS HO, the DAPS HO of the remote UE may be performed concomitantly therewith. The remote UE preferably activates both protocol stacks for communication with the S-gNB and for communication with the T-gNB via the relay UE. Regarding the DAPS HO of the remote UE via the relay UE, it is preferable to appropriately apply the method disclosed in the second modification of the first embodiment.

Another method will be disclosed in which the remote UE performs the HO to the gNB as the HO destination of the relay UE. In the another method, after the HO of the relay UE is completed, the HO of the remote UE is performed.

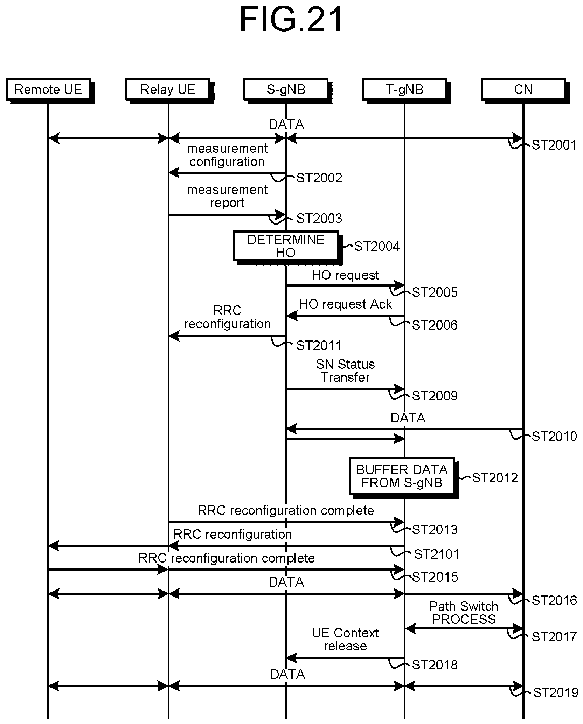

FIG. 21 is a sequence diagram illustrating another example of the method in which the remote UE performs the HO to the gNB as the HO destination of the relay UE in the third embodiment. The example in FIG. 21 discloses a method for performing the HO of the remote UE after the HO of the relay UE is completed. In FIG. 21, steps common to those in FIG. 20 are denoted by the same step numbers as those therein, and a common description will be omitted.

The S-gNB that has received the HO request response message from the T-gNB in step ST2006 notifies the relay UE of the RRC configuration change message in step ST2011, and performs the HO of the relay UE. In step ST2011 and subsequent steps ST2009 to ST2013, the HO of the relay UE is performed. The T-gNB that has received the RRC configuration complete message from the relay UE in step ST2013 notifies the remote UE of an RRC configuration change message in step ST2101. The notification of the message is preferably performed via the relay UE. Consequently, the remote UE can perform the RRC configuration for the communication between the remote UE and the T-gNB configured by the T-gNB. The remote UE performs the RRC configuration in accordance with the RRC configuration change message received from the T-gNB, and notifies the T-gNB of the RRC configuration complete message in step ST2015. The notification of the message is preferably performed via the relay UE. Consequently, the T-gNB can recognize that the remote UE has completed the RRC configuration, and can recognize that communication can be performed.

As described above, by performing the HO of the remote UE after the completion of the HO of the relay UE, it is possible to avoid complication of timings of performing the HO processes performed by the remote UE and the relay UE. Therefore, malfunction in the HO processes can be reduced, and the robustness of the HO processes can be improved.

Another method will be disclosed in which the remote UE performs the HO to the gNB as the HO destination of the relay UE. In the another method, the relay UE notifies the remote UE of the RRC configuration of the T-gNB.

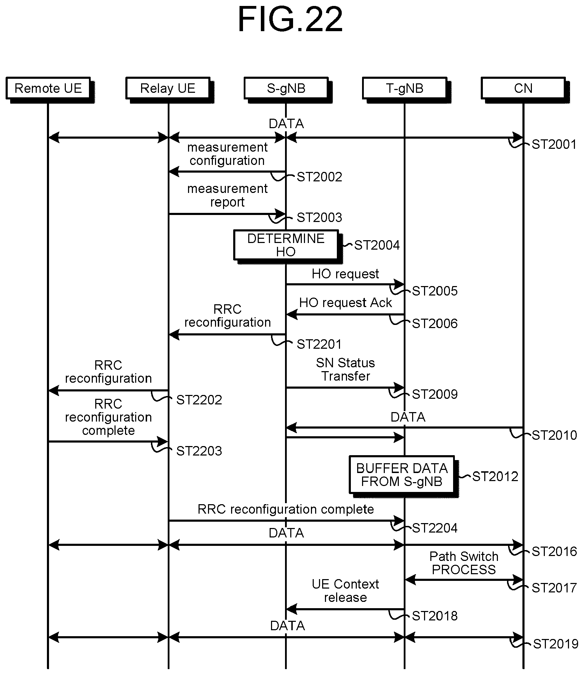

FIG. 22 is a sequence diagram illustrating another example of the method in which the remote UE performs the HO to the gNB as the HO destination of the relay UE in the third embodiment. The example in FIG. 22 discloses a method in which the relay UE notifies the remote UE of the RRC configuration of the T-gNB. In FIG. 22, steps common to those in FIG. 20 are denoted by the same step numbers as those therein, and a common description will be omitted.

The S-gNB that has received the HO request response message from the T-gNB in step ST2006 notifies the relay UE of an RRC configuration change message in step ST2201. Information about the RRC configuration of the remote UE for communication with the T-gNB is included in the RRC configuration change message. The relay UE that has received the RRC configuration change message stops communication with the S-gNB. The configuration for communication with the S-gNB may be released. In addition, the relay UE performs the RRC configuration for communication with the T-gNB.

In step ST2202, the relay UE notifies the remote UE of an RRC configuration change message. The information about the RRC configuration for communication with the T-gNB is preferably included in the message. Thus, the remote UE can receive the information about the RRC configuration for communication with the T-gNB. The remote UE that has received the information about the RRC configuration for communication with the T-gNB stops communication with the S-gNB. The configuration for communication with the S-gNB may be released. The remote UE performs the RRC configuration for communication with the T-gNB.

In step ST2203, the remote UE notifies the relay UE of an RRC configuration complete for communication with the T-gNB. The notification may be performed by using an RRC configuration complete message. In step ST2204, the relay UE notifies the T-gNB of an RRC configuration complete message. The message preferably includes completion of the RRC configuration for communication with the T-gNB in the relay UE and completion of the RRC configuration for communication with the T-gNB in the remote UE. Consequently, the T-gNB can recognize that the relay UE has completed the RRC configuration, and can recognize that the remote UE has completed the RRC configuration. Consequently, the T-gNB can recognize that communication with the remote UE via the relay UE can be performed. In step ST2016, the remote UE can communicate with the T-gNB via the relay UE.

As described above, the relay UE notifies the remote UE of the RRC configuration for communication with the T-gNB, and thereby the remote UE can perform HO to the T-gNB. In addition, since the necessity of the communication of the RRC message from the T-gNB to the remote UE is eliminated, the amount of signaling can be reduced.

Thus, it is possible to cause the remote UE to perform the HO to the gNB as the HO destination of the relay UE. Even in a case where the relay UE connected to the remote UE performs the HO, the continuity of communication services between the remote UE and the NW can be secured.

Whether the relay UE connected to the remote UE can perform the HO may be enabled to be configured. The CN may perform the configuration. For example, a CN node notifies a RAN node of the configuration as to whether the HO can be performed. The CN node or the RAN node may notify the relay UE of the configuration as to whether the HO can be performed. The CN node may be an AMF. Alternatively, the RAN may perform the configuration as to whether the HO can be performed. For example, the RAN node may perform, for the relay UE, the configuration as to whether the HO can be performed. Thus, it is possible to perform the configuration as to whether the HO of the relay UE connected to the remote UE can be performed depending on a radio wave propagation state, a processing load on the relay UE, and the like. In a case where the HO cannot be performed, the relay UE disclosed above performing the relay process of the communication between the remote UE and the gNB does not perform the HO process. In a case where the HO can be performed, the remote UE performs the HO to the gNB as the HO destination of the relay UE. Thus, it is possible to perform an optimum connection process between the remote UE and the NW involved with the HO of the relay UE depending on the radio wave propagation state, the processing load on the relay UE, and the like.

### Fourth Embodiment.

Robustness is required in connection between a remote UE and a gNB via a relay UE. A method has been conventionally disclosed in which in order to improve robustness in direct connection between a UE and a gNB, an identifier of a cell to which the UE has previously connected is transmitted when, for example, the UE notifies the gNB of an RRC reestablishment request message (RRCReestablishmentRequest). However, in a case where a remote UE is connected to a gNB via a relay UE, the remote UE is directly connected to the relay UE and is not directly connected to a cell, and therefore such a method is not applicable.

The fourth embodiment discloses a method for improving robustness in connection between the remote UE and the gNB via the relay UE.

In a communication system according to the present embodiment, when establishing or reestablishing the RRC connection between the gNB and the remote UE via the relay UE, the remote UE notifies the gNB, via the relay UE, of an RRC reestablishment request message. Information about a previously connected relay UE is included in the RRC reestablishment request message. Information for identifying the relay UE may be used as the information about the relay UE. Information about the gNB to which the previously connected relay UE is connected may be included in the RRC reestablishment request message. Information for identifying the gNB may be used as the information about the gNB.

Thus, the gNB connected to the remote UE via the relay UE can recognize the relay UE to which the remote UE has been previously connected.

In a case of establishing or reestablishing the RRC connection between the gNB and the remote UE without via the relay UE, the remote UE notifies the gNB of an RRC reestablishment request message. Information about a previously connected relay UE is included in the RRC reestablishment request message. Information for identifying the relay UE may be used as the information about the relay UE. Information about the gNB to which the previously connected relay UE is connected may be included in the RRC reestablishment request message. Information for identifying the gNB may be used as the information about the gNB.

Thus, the gNB connected to the remote UE can recognize the relay UE to which the remote UE has been previously connected.

The number of previously connected relay UEs is not limited to one, and may be two or more. The maximum number thereof may be statically determined in a standard or the like. Malfunction can be reduced, and a configuration process can be simplified.

With the use of the information about the previously connected relay UE and/or the information about the gNB received from the remote UE, the gNB may perform, for example, a configuration for causing the remote UE to measure the relay UE.

Thus, it is possible to reduce release of the RRC connection by the RLE or the like. In addition, the continuity of communication services between the remote UE and the gNB via the relay UE can be further improved.

### Fifth Embodiment.

In a case where a UE is directly connected to a gNB, conventionally, the gNB provides an identifier to the UE, and the identifier is used in direct communication between the UE and the gNB to identify the UE. However, in communication between a remote UE and a gNB via a relay UE, direct communication is not performed between the remote UE and the gNB. Therefore, the question is how UEs identify each other among the UEs or how the gNB identifies the remote UE. Regarding the identifier of the UE used in the communication between the remote UE and the gNB via the relay UE, there is no disclosure in Non Patent Literatures 1 to 27 and other documents.

The fifth embodiment discloses a method for solving such a problem.

In order to solve the above problem, in a communication system according to the present embodiment, a default value is used as a destination layer-2 ID (destination L2 ID) when PC5 connection between a remote UE and a relay UE is established in communication between the remote UE and a gNB via the relay UE. In a discovery process for searching for the relay UE, a default value may be used as the destination L2 ID. The default value may be a default value for PC5 communication from the remote UE to the relay UE. The default value may be a default value for PC5 communication from the relay UE to the remote UE. The default value may be a default value for PC5 communication in both directions.

A default destination L2 ID may be provided for relay. A default destination L2 ID may be provided for U2N relay. A default destination L2 ID may be provided for U2U relay. A default destination L2 ID may be provided separately from that for U2N relay. The destination L2 IDs may be each associated with a service type. As the service type, a service type for relay may be provided. A UE derives the destination L2 ID from the service type. For example, when the service type is relay, the UE uses a default destination L2 ID for relay.

The destination L2 ID may be associated with an application layer ID. The UE may associate the destination L2 ID with the application layer ID.

When the PC5 connection between the remote UE and the relay UE is established in the communication between the remote UE and the gNB via the relay UE, the UE itself may allocate a source layer-2 ID (source L2 ID). In the discovery process, the UE itself may allocate the source L2 ID. The source L2 ID may be associated with the application layer ID. These may be associated with each other by the UE.

The gNB allocates a UE identifier to the remote UE connected via the relay UE. The gNB may allocate a UE identifier for each cell to the remote UE. The UE identifier may be a C-RNTI. The UE identifier may be other RNTI. The gNB notifies the remote UE, via the relay UE, of the UE identifier allocated to the remote UE.

The gNB notifies the remote UE of the UE identifier allocated to the remote UE by using RRC signaling performed between the remote UE and the gNB via the relay UE. The gNB may notify the remote UE of the UE identifier in an RRC connection establishment process performed between the remote UE and the gNB via the relay UE, for example, an RRC setup process. The gNb may notify the remote UE of the UE identifier by including the UE identifier in an RRCSetup message. The gNB may notify the remote UE of the UE identifier in an RRC configuration change process performed between the remote UE and the gNB via the relay UE. The gNB may perform the notification by including the UE identifier in an RRCReconfiguration message. The gNB may notify the remote UE of the UE identifier in an RRC-connected state transition process between an inactive state and an active state performed between the remote UE and the gNB via the relay UE. The gNB may perform the notification by including the UE identifier in an RRCResume message.

The gNB may notify the remote UE of the UE identifier allocated to the remote UE by using MAC signaling performed between the remote UE and the gNB via the relay UE. The gNB may perform the notification by including the UE identifier in a MAC CE.

Thus, the gNB can notify the remote UE of the UE identifier allocated to the remote UE. The remote UE can receive the UE identifier from the gNB. The remote UE can use the UE identifier received from the gNB for communication with the gNB via the relay UE.

For example, the gNB may include, in an RRC message to the remote UE, a UE identifier allocated to the remote UE. The remote UE can recognize by receiving the UE identifier that the RRC message is directed to the remote UE. In a case where the relay UE receives the RRC message from the gNB to the remote UE, the relay UE can recognize, by receiving the UE identifier, to which remote UE the RRC message is directed. The relay UE can relay the RRC message to the remote UE.

For example, an RRC message from the remote UE to the gNB may include a UE identifier allocated to the remote UE. The gNB can recognize, by receiving the UE identifier, from which UE the RRC message is transmitted. In a case where the relay UE receives the RRC message from the remote UE to the gNB, the relay UE can recognize, by receiving the UE identifier, from which remote UE the RRC message is transmitted. The relay UE can relay the RRC message to the gNB.

For example, the gNB may include, in MAC signaling to the remote UE, a UE identifier allocated to the remote UE. The gNB may include the UE identifier in a MAC CE as MAC signaling. The remote UE can recognize by receiving the UE identifier that the MAC signaling is directed to the remote UE. In a case where the relay UE receives MAC signaling from the gNB to the remote UE, the relay UE can recognize, by receiving the UE identifier, to which remote UE the MAC signaling is directed. The relay UE can relay the MAC signaling to the remote UE.

For example, MAC signaling from the remote UE to the gNB may include a UE identifier allocated to the remote UE. The gNB may include the UE identifier in a MAC CE as MAC signaling. The gNB can recognize, by receiving the UE identifier, from which UE the MAC signaling is transmitted. In a case where the relay UE receives MAC signaling from the remote UE to the gNB, the relay UE can recognize, by receiving the UE identifier, from which remote UE the MAC signaling is transmitted. The relay UE can relay the MAC signaling to the gNB.

Thus, in the communication between the remote UE and the gNB via the relay UE, communication can be performed while specifying the remote UE.

Allocation of a UE identifier in HO and a method for performing a notification thereof will be disclosed. The T-gNB allocates, to a remote UE as an HO target, a UE identifier used for communication with the remote UE. The T-gNB notifies the remote UE, via the S-gNB, of the UE identifier allocated thereto. In a case where the remote UE is connected to the S-gNB via the relay UE, the T-gNB notifies the remote UE, via the S-gNB and the relay UE, of the UE identifier allocated thereto.

Xn signaling may be used for the notification of the UE identifier from the T-gNB to the S-gNB. The notification may be performed, for example, by including the UE identifier in an HO request response (HO Request Ack) message. RRC signaling may be used for the notification of the UE identifier from the S-gNB to the remote UE. The notification may be performed, for example, by including the UE identifier in an RRC configuration change (which may be RRCReconfiguration) message. MAC signaling may be used for the notification of the UE identifier from the S-gNB to the remote UE.

Thus, the remote UE can acquire the UE identifier allocated by the T-gNB as an HO destination at an early stage. The UE identifier can be used at an early stage in communication between the remote UE and the T-gNB.

The UE identifier allocated to the remote UE may be an SL-RNTI. The SL-RNTI may be used in communication between the remote UE and the gNB.

As another method, the gNB may allocate the SL-RNTI to the remote UE separately from the C-RNTI which is the UE identifier of the remote UE disclosed above. The gNB may allocate a plurality of UE identifiers to the remote UE. The gNB notifies the remote UE of the plurality of allocated UE identifiers. For example, the C-RNTI may be used in the communication between the remote UE and the gNB, and the SL-RNTI may be used in communication between the remote UE and the relay UE.

Thus, it is possible to flexibly operate the UE identifier in the communication between the remote UE and the gNB.

Thus, the gNB can provide the identifier to the UE in the communication between the remote UE and the gNB via the relay UE. In conventional direct communication between a remote UE and a gNB, the gNB notifies the remote UE of a UE identifier in an RA process. However, even in a case where the RA process is not performed in the communication between the remote UE and the gNB via the relay UE, such a method enables the gNB to provide the UE identifier to the UE. Therefore, the identifier of the remote UE provided by the gNB can be used to specify the remote UE in the communication. In addition, since the remote UE can be specified, it is possible to reduce malfunction in the communication between the remote UE and the gNB via the relay UE.

A statement of "gNB or cell" used in descriptions given herein means that it may either be a gNB or a cell unless otherwise specified. For example, what is described as HO between gNBs may be HO between cells. The HO may be HO between a cell configured by the S-gNB and a cell configured by the T-gNB. In addition, the S-gNB and the T-gNB may be the same or different. Regarding a case where the S-gNB and the T-gNB are the same, the HO may be, for example, HO between different cells configured by the same gNB. In the case where the S-gNB and the T-gNB are the same, for example, the processes between the S-gNB and the T-gNB disclosed herein may be deleted.

Assuming that the S-gNB and the T-gNB are the same, the method disclosed herein may be appropriately applied to, for example, a switching process to/from indirect communication between the remote UE and the gNB via the relay UE. For example, the method may be appropriately applied to a switching process from direct communication between the remote UE and the gNB to communication (indirect communication) between the remote UE and the gNB via the relay UE. For example, the method may be appropriately applied to a switching process from communication (indirect communication) between the remote UE and the gNB via the relay UE to direct communication between the remote UE and the gNB.

Although the case has been described herein where communication is performed between the remote UE and the gNB via one relay UE, the method disclosed herein may be appropriately applied also to a case where communication is performed between the remote UE and the gNB via a plurality of relay UEs. For example, in a case where the remote UE and the gNB perform communication via two relay UEs of relay UE #21 and relay UE #22, it is preferable to appropriately apply the method disclosed above to PC connection between the remote UE and relay UE #21, PC connection between relay UE #21 and relay UE #22, and Uu connection between relay UE #22 and the gNB. For example, in the method disclosed in the first embodiment, in a case where the remote UE is connected to the T-gNB via relay UE #21 and relay UE #22, the T-gNB may notify the remote UE, via the S-gNB, of a configuration used for the PC connection between the remote UE and relay UE #21 and a configuration used for the PC connection between relay UE #21 and relay UE #22. The remote UE may notify relay UE #21 of a part or all of the configurations. Relay UE #21 may notify relay UE #22 of a part or all of the configurations. Thus, even in a case where communication is performed between the remote UE and the gNB via a plurality of relay UEs, a similar effect can be obtained.

In the present disclosure, the UE in which the service data is generated is referred to as a UE-TX, and the UE that receives the service data is referred to as a UE-RX. For example, in a case where the UE-TX is a UE 1 and a UE-RX is a UE 2, and when service data is generated in the UE 2 and data is transmitted to the UE 1, the method of the present disclosure is preferably applied by using the UE 2 as the UE-TX and the UE 1 as the UE-RX. Consequently, a similar effect can be obtained.

The above-described embodiments and modifications thereof are merely examples, and the embodiments and modifications thereof can be freely combined. In addition, any component of the embodiments and modifications thereof can be appropriately changed or omitted.

For example, in the above-described embodiments and modifications thereof, the subframe is an example of a time unit of communication in the fifth generation communication system. The subframe may be a scheduling unit. In the above-described embodiments and modifications thereof, the processes described as those performed on a per subframe basis may be performed on a per TTI basis, on a per slot basis, on a per subslot basis, or on a per mini-slot basis.

For example, the methods disclosed in the above-described embodiments and modifications thereof may be applied not only to a vehicle-to-everything (V2X) service but also to a service using the SL communication. For example, the methods may be applied to the SL communication used in various services such as proximity-based service, public safety, communication between wearable terminals, and device-to-device communication in a factory.

While the present disclosure has been described in detail, the above description is in all aspects illustrative and not restrictive. It is understood that numerous modifications not illustrated can be devised.

### Reference Signs List

200, 210 communication system; 202 communication terminal device (user equipment); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 other-base-station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 idle state mobility management unit; 521 data network communication unit; 525-2 PDU session control unit; 527 session management unit; 751-1 to 751-8 beam.

## Claims

1. A communication system comprising:
a first base station to which a first communication terminal is connected, the first communication terminal supporting terminal-to-terminal communication in which communication terminals directly communicate with each other; and
a second base station to which a second communication terminal is connected, the second communication terminal supporting the terminal-to-terminal communication, wherein
in a case where the second base station receives a handover request for the first communication terminal to connect to the second base station via the second communication terminal, the second base station transmits, to the first communication terminal and the second communication terminal, communication configuration information indicating a content of a configuration for the first communication terminal and the second communication terminal to perform terminal-to-terminal communication therebetween.

2. The communication system according to claim 1, wherein
the second base station transmits the communication configuration information to the first communication terminal via the first base station, and directly transmits the communication configuration information to the second communication terminal.

3. The communication system according to claim 1, wherein
the communication configuration information includes first configuration information indicating a content of a configuration for communication in a direction from the first communication terminal toward the second communication terminal and second configuration information indicating a content of a configuration for communication in a direction from the second communication terminal toward the first communication terminal,
the second base station transmits the first configuration information to the first communication terminal via the first base station, and directly transmits the second configuration information to the second communication terminal,
the first communication terminal acquires the second configuration information from the second communication terminal, and
the second communication terminal acquires the first configuration information from the first communication terminal.

4. The communication system according to any one of claims 1 to 3, wherein
the first communication terminal is connected to the first base station via a third communication terminal that supports the terminal-to-terminal communication, and
in a case where the first communication terminal executes handover for connecting to the second base station via the second communication terminal, the first base station transmits, to the second base station, data communication configuration information indicating a content of a configuration for data communication with the first communication terminal.

5. The communication system according to claim 4, wherein
in a case where the third communication terminal executes handover to switch a connection destination, the first communication terminal switches a connection destination to a base station as a handover destination of the third communication terminal.

6. The communication system according to any one of claims 1 to 4, wherein
the handover is dual active protocol stack handover.

7. The communication system according to any one of claims 1 to 4, wherein
the handover is conditional handover.

8. A base station connectable to a communication terminal that supports terminal-to-terminal communication in which communication terminals directly communicate with each other, wherein
in a case where the base station receives a handover request for a first communication terminal that is a communication terminal connected to another base station to connect to the base station via a second communication terminal that is a communication terminal connected to the base station, the base station transmits, to the first communication terminal and the second communication terminal, communication configuration information indicating a content of a configuration for the first communication terminal and the second communication terminal to perform terminal-to-terminal communication therebetween.
